# EUROPÄISCHE PATENTSCHRIFT

(11) **EP 4 330 842 B1**
(45) Veröffentlichungstag und Bekanntmachung des Hinweises auf die Patenterteilung: **28.05.2025**
(21) Anmeldenummer: 22725414.1
(22) Anmeldetag: 25.04.2022
(51) Int. Cl.: G06F 21/57, G06F 21/64

(54) **FORENSIK-MODUL UND EINGEBETTETES SYSTEM**
FORENSICS MODULE AND EMBEDDED SYSTEM
MODULE MÉDICO-LÉGAL ET SYSTÈME INTÉGRÉ

(30) Priorität: 27.04.2021 DE 102021110768
(43) Veröffentlichungstag der Anmeldung: 06.03.2024
(73) Patentinhaber: Diebold Nixdorf Systems GmbH, 33106 Paderborn (DE)
(72) Erfinder: KRUMMEL, Volker, 33098 Paderborn (DE); GÜNTHER, Peter, 33647 Bielefeld (DE); LISKE, Gennadij, 32051 Herford (DE)
(86) Internationale Anmeldenummer: PCT/EP2022/060832
(87) Internationale Veröffentlichungsnummer: WO 2022/229060

(56) Entgegenhaltungen:
- EP-A1- 0 893 763
- US-A1- 2010 070 769
- US-A1- 2012 210 427
- US-A1- 2015 304 289

## Beschreibung

Verschiedene Ausführungsbeispiele betreffen ein Forensik-Modul, ein eingebettetes System und einen Geldautomaten.

Kritische Infrastrukturen (KRITIS), wie z.B. Kommunikation, Energie, Verkehr oder Finanzwesen, basieren auf informationstechnischen Systemen (sogenannte IT-Systeme). Komponenten dieser IT-Systeme sind beispielsweise Router, industrielle Steueranlagen, Medizingeräte oder Geldautomaten. Die US 10 079 842 B1 beschreibt einen forensischen Dienst auf Blockebene, um böswillige Aktivitäten an Protokollen zu erkennen. Die EP 3 798 883 A1 beschreibt ein Modul für digitale Forensik, das aus einer Vielzahl von Systemmetadaten des Computergeräts forensikspezifische Metadaten des Computergeräts identifiziert basierend auf vorbestimmten Regeln, wobei die forensikspezifischen Metadaten zum Erkennen verdächtiger digitaler Aktivitäten verwendet werden.

Mit zunehmender Digitalisierung wird immer mehr Steuerintelligenz in physische Sensoren und Aktoren eingebettet, z.B. in einem sogenannten cyberphysischen System (CPS), welches die Vernetzung eingebetteter Systeme durch drahtgebundene oder drahtlose Kommunikationsnetze implementiert. Ein solches CPS (anschaulich ein Verbund informatischer, softwaretechnischer Komponenten mit mechanischen und elektronischen Teilen, die über eine Dateninfrastruktur, wie z.B. das Internet, kommunizieren) besteht aus spezialisierter Hardware und eingebetteter Software. Diese eingebettete Software wird auch als Firmware bezeichnet.

Gemäß verschiedenen Ausführungsformen wurde anschaulich erkannt, dass die traditionelle Sichtweise, gemäß welcher der Firmware eines eingebetteten Systems aufgrund ihrer geringen Komplexität im Vergleich zu klassischer Anwendungssoftware (z.B. PC-Software) ein inhärent höheres Maß an Sicherheit zugebilligt wird, immer weniger die Realität wiederspiegelt. Aufgrund dieser Sichtweise existieren derzeit allerdings keine Schutzkonzepte für Firmware, die Angriffsprävention, Erkennung und Untersuchung umfassen. Dieser Umstand erleichtert es Dritten, z.B. im Rahmen einer professionell organisierten Datenkriminalität, eine dedizierte Manipulationen an der Firmware vornehmen. Typisch für solche Angriffe ist eine koordinierte Manipulation von Hardware, Sensorik und Firmware.

Solche gezielten Angriffe (sog. "Advanced Persistent Threats") beinhalten ein hohes Gefährdungspotenzial, und damit verbundene ökonomische Einbußen. Während ein Angriff auf die Firmware eines CAN-Bus-Kontrollers bei einem Fahrzeug noch per Rückruf gehandhabt werden kann, kann ein solcher Angriff in den Bereichen Telekommunikation, Energie und Gesundheit weitaus verheerendere Folgen haben, z.B. auf die Versorgungssicherheit der Bevölkerung.

In dem Zusammenhang wurde erkannt, dass die zeitnahe Aufarbeitung eines solchen Angriffs zur Minderung der Folgen zwar günstig wäre aber herkömmlich nur schwer zu bewältigen ist, sei es herstellerseitig oder von behördlicher Seite. Insbesondere ist eine solche Aufklärung für die Prävention zukünftiger Angriffe von Bedeutung. Herkömmliche Untersuchungstechniken sind aufgrund der Einbettung der Firmware in die Hardware nur schwer direkt anwendbar. Ferner berührt eine solche Aufklärung auch die einander entgegenstehenden Interessen der beteiligten Parteien, wie beispielsweise Betreiber, Hersteller und Ermittlungsbehörde, so dass von diesen Anforderungen gestellt werden, die sich häufig gegenseitig im Weg stehen. Beispielsweise hat der Hersteller großes Interesse an der Wahrung seiner Firmengeheimnisse, wohingegen die Ermittlungsbehörde möglichst umfänglich informiert sein möchte.

Gemäß verschiedenen Ausführungsformen wird diesen Umständen und Anforderungen besser Rechnung getragen. Unter anderem wird bereitgestellt, dass ein forensisches Abbild der mutmaßlich manipulierten Firmware (auch als Firmwareabbild bezeichnet) extrahiert werden kann und dieses Firmwareabbild in einer geeigneten Umgebung emuliert und untersucht werden kann. Die manipulierte Firmware weist anschaulich die ursprüngliche Firmware und zusätzlichen Schadcode auf.

Anschaulich wird gemäß verschiedenen Ausführungsformen ein Forensik-Modul bereitgestellt, um welches ein eingebettetes System beispielsweise erweitert werden kann, und welches das forensische Abbild extrahiert und derart bereitstellt, dass die Anforderungen der beteiligten Parteien möglichst gewahrt bleiben. Dazu passend wird gemäß verschiedenen Ausführungsformen ein Emulationssystem zum Emulieren eines eingebetteten Systems bereitgestellt, mittels welchem das forensische Abbild möglichst effizient und authentisch untersucht werden kann.

Gemäß verschiedenen Ausführungsformen wird die zeitnahe Aufarbeitung eines Angriffs auf ein eingebettetes System (EGS) vereinfacht, z.B. mit größerer Effizienz und/oder größerer Effektivität. Dies verbessert die Aufklärungsrate solcher Angriffe und ermöglicht damit auch, die Kriminalitätsprävention zu verbessern. Hieraus ergibt sich ein erhebliches Potenzial zum Schutz kritischer Infrastrukturen und damit zur Erhöhung der Versorgungssicherheit. Auch eine Verbesserung der polizeilichen Gefahrenabwehr sowie eine Steigerung der Kriminalitätsprävention durch schnelleren und verbesserten Informationsgewinn kann erreicht werden.

Die effiziente forensische Extraktion der eingebetteten Firmware kann aufweisen, die mutmaßlich manipulierte Firmware bitgenau aus der Hardware zu extrahieren. Die Untersuchung in einer Emulationsumgebung kann aufweisen, die extrahierte Firmware dynamisch zu untersuchen und den die Extraktion auslösenden Vorfall vollständig zu simulieren.

Es zeigen
- Figur 1: ein eingebettetes System gemäß verschiedenen Ausführungsformen in einem schematischen Aufbaudiagramm;
- Figur 2: ein Forensik-Modul gemäß verschiedenen Ausführungsformen in einem schematischen Aufbaudiagramm;
- Figur 3: die forensische Extraktion des Systemzustands gemäß verschiedenen Ausführungsformen in einem schematischen Ablaufdiagramm;
- Figur 4: ein Forensik-Modul gemäß verschiedenen Ausführungsformen in einem schematischen Aufbaudiagramm;
- Figur 5: eine exemplarische Implementierung der Absicherungsmechanismen des Forensik-Moduls gemäß verschiedenen Ausführungsformen in einem schematischen Aufbaudiagramm;
- Figur 6: eine exemplarische Implementierung der Firewall des Forensik-Moduls gemäß verschiedenen Ausführungsformen in einem schematischen Aufbaudiagramm;
- Figur 7: ein Zustandsdiagramm einer Firewall gemäß verschiedenen Ausführungsformen in einem schematischen Ablaufdiagramm;
- Figur 8, Figur 9 und Figur 10: jeweils Komponenten der forensischen Extraktion gemäß verschiedenen Ausführungsformen in einem schematischen Ablaufdiagramm;
- Figur 11: ein Forensik-Modul gemäß verschiedenen Ausführungsformen in einem schematischen Aufbaudiagramm;
- Figur 12: einen Softwarestapel des eingebetteten Systems gemäß verschiedenen Ausführungsformen in einem schematischen Aufbaudiagramm;
- Figur 13: den Softwarestapel des Systems gemäß verschiedenen Ausführungsformen in einem schematischen Ablaufdiagramm;
- Figur 14: ein Emulationssystem gemäß verschiedenen Ausführungsformen in einem schematischen Aufbaudiagramm; und
- Figur 15: ein Analysesystem gemäß verschiedenen Ausführungsformen in verschiedenen Ansichten.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist. Mehrere Elemente können beispielsweise entlang einer Wechselwirkungskette miteinander gekoppelt sein, entlang welcher eine Wechselwirkung ausgetauscht werden kann, z.B. ein Signal und/oder elektrische Energie. Gemäß verschiedenen Ausführungsformen kann "gekuppelt" im Sinne einer mechanischen (z.B. körperlichen bzw. physikalischen) Kopplung verstanden werden, z.B. mittels eines direkten körperlichen Kontakts.

Als Zustand einer Entität (z.B. einer Vorrichtung, eines Systems oder eines Vorgangs bzw. Prozesses) kann die Gesamtheit der Informationen, welche die variablen (z.B. zeitabhängigen) Eigenschaften der Entität vollständig beschreiben, verstanden werden. Als Ist-Zustand der Entität kann der zu einem Zeitpunkt tatsächlich vorliegende bzw. sensorisch erfassbare Zustand der Entität verstanden werden. Als Soll-Zustand der Entität kann der angestrebte Zustand, d.h. eine Vorgabe, verstanden werden. Als Steuern kann eine beabsichtigte Beeinflussung des momentanen Zustands (auch als Ist-Zustand bezeichnet) der Entität verstanden werden. Dabei kann der momentane Zustand gemäß der Vorgabe (auch als Soll-Zustand bezeichnet) verändert werden, z.B. indem ein oder mehr als ein Betriebsparameter (dann auch als Stellgröße bezeichnet) der Entität verändert wird, z.B. mittels eines Stellglieds.

Hierin wird Bezug genommen auf verschiedene informationstechnische (z.B. datenverarbeitende und/oder datenspeichernde) Komponenten, wie beispielsweise Prozessor, Datenspeicher, Kommunikationsinfrastruktur (z.B. ein Bussystem oder ein anderes Netzwerk aufweisend oder daraus gebildet) und dergleichen. Die prozessor-externen Komponenten des EGS werden auch als Peripherie oder Peripheriekomponenten bezeichnet. Mehrere datenverarbeitende und/oder datenspeichernde Komponenten können mittels der Kommunikationsinfrastruktur miteinander gekoppelt sein (z.B. mittels einer entsprechenden Schnittstelle der Komponente), und im Betrieb beispielsweise Daten (z.B. eine digitale Repräsentation von Informationen) untereinander austauschen (allgemeiner auch als Kommunizieren bezeichnet).

Das Kommunizieren kann beispielsweise nachrichtenbasiert (d.h. auf Grundlage von Nachrichten) gemäß einem Kommunikationsprotokoll (z.B. einem Netzwerk-Kommunikationsprotokoll, kurz auch als Netzwerkprotokoll bezeichnet) erfolgen. Das Kommunizieren kann aufweisen, eine Nachricht, welche die Daten aufweist, gemäß dem Kommunikationsprotokoll zu übermitteln, oder zumindest zu senden, oder zumindest zu erzeugen. Das Kommunikationsprotokoll kann anschaulich eine Vereinbarung, nach der das Kommunizieren zwischen zwei oder mehreren Komponenten abläuft, bezeichnen. In seiner einfachsten Form kann das Kommunikationsprotokoll definiert werden als eine Menge von Regeln, welche die Syntax, Semantik und Synchronisation der Datenübertragung festlegen. Das oder die eingesetzten Kommunikationsprotokolle (z.B. ein oder mehrere Netzwerkprotokolle) können grundsätzlich beliebig ausgewählt werden und können (müssen aber nicht) gemäß dem OSI (Open System Interconnect)-Referenzmodell konfiguriert sein. In den jeweiligen Protokollschichten können ebenfalls beliebige Protokolle eingesetzt werden. Beispielsweise kann ein Feldbus-Kommunikationsprotokoll zur Kommunikation über einen Feldbus verwendet werden. Beispielsweise kann ein USB-Kommunikationsprotokoll zur Kommunikation über einen universellen seriellen Bus (USB) verwendet werden. Selbstverständlich kann auch ein anderes Kommunikationsprotokoll verwendet werden, welches beispielsweise proprietär sein kann.

Die mit der Kommunikationsinfrastruktur gekoppelte Schnittstelle kann eingerichtet sein, die Daten gemäß dem Kommunikationsprotokoll zu übermitteln, beispielsweise eine Nachricht, welche die Daten aufweist, gemäß dem Kommunikationsprotokoll zu übermitteln, oder zumindest zu senden, oder zumindest zu erzeugen.

Gemäß verschiedenen Ausführungsformen kann ein system-internes Bussystem eingerichtet sein, die Kommunikation der Komponenten eines EGS bereitzustellen. Das system-interne Bussystem kann beispielsweise einen Prozessor-internen Bus und einen Prozessor-externer Bus aufweisen.

Gemäß verschiedenen Ausführungsformen kann das system-interne Bussystem einen Feldbus aufweisen oder daraus gebildet sein. Der Feldbus kann als Netzwerk zur verteilten Echtzeit-Kommunikation eingerichtet sein, z.B. über ein nachrichtenbasiertes Kommunikationsprotokoll. Die Reihenfolge und Priorität einer Vielzahl von Nachrichten, die über den Feldbus gesendet und/oder empfangen werden, wird durch das Feldbus-Kommunikationsprotokoll definiert. Ein solches Feldbus-Kommunikationsprotokoll kann für eine verteilte Echtzeitsteuerung konfiguriert sein, z.B. standardisiert als International Electrotechnical Commission (IEC) 61158 (Titel "Digital data communications for measurement and control - Fieldbus for use in industrial control systems", z.B. in der Version vom 2. Mai 2017).

Die Kommunikation des EGS mit anderen Komponenten kann mittels eines system-externen Netzwerks erfolgen, insofern vorhanden. Ein hierin beschriebenes system-externes Netzwerk kann beispielsweise, nach Reichweite unterschieden, ein lokales Netzwerk (beispielsweise ein Local Area Network (LAN), ein Wireless LAN (WLAN), oder ein Personal Area Network (PAN), wie z.B. ein drahtloses PAN (WPAN), wie z.B. ein Bluetooth-Netzwerk) oder ein nichtlokale Netzwerk (wie beispielsweise ein Metropolitan Area Network (MAN), ein Wide Area Network (WAN) oder ein Global Area Network (GAN)) aufweisen oder daraus gebildet sein. Das Netzwerk kann beispielsweise nach Übertragungstyp unterschieden ein Funknetzwerk (auch als drahtlos-Netzwerk oder kabellos-Netzwerk bezeichnet), wie z.B. ein Mobilfunknetz, oder ein kabelgebundenes Netzwerk aufweisen oder daraus gebildet sein. Das Netzwerk kann beispielsweise auch ein zelluläres Funknetzwerk (z.B. ein WLAN vom Typ IEEE 802.11 im Ad-hoc-Modus, ein Bluetooth-Netzwerk oder ein anderes zelluläres Mobilfunknetzwerk) aufweisen oder daraus gebildet sein, beispielsweise gemäß einem Mobilfunkstandard dritter Generation (3G), vierter Generation (4G), fünfter Generation (5G) oder LTE (auch als auch 3.9G bezeichnet). Das Netzwerk kann auch mehrere miteinander verbundene Sub-Netzwerke verschiedenen Typs aufweisen.

Gemäß verschiedenen Ausführungsformen kann der Begriff "Prozessor" als jede Art von Entität verstanden werden, die die Verarbeitung von Daten oder (z.B. datenrepräsentierenden) Signalen erlaubt. Die Daten oder Signale können beispielsweise gemäß zumindest einer (d.h. einer oder mehr als einer) spezifischen Funktion behandelt werden, die vom Prozessor ausgeführt wird. Beispiele für Komponenten eines Prozessors weisen auf: eine analoge Schaltung, eine digitale Schaltung, eine Mischsignalschaltung, eine Logikschaltung, ein Mikroprozessor (z.B. in ARM-Architektur), eine zentrale Verarbeitungseinheit (CPU), eine Grafikverarbeitungseinheit (GPU), ein digitaler Signalprozessor (DSP), eine programmierbare Gatter-Anordnung (FPGA), eine integrierte Schaltung oder eine beliebige Kombination davon. Ein Mikroprozessor in ARM-Architektur wird hierin auch als ARM-Prozessor oder kurz ARM bezeichnet. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Prozesse und/oder Vorgänge von einem Prozessor ausgeführt (z.B. realisiert) werden können, durch eine oder mehrere spezifische Funktionen, die von dem Prozessor ausgeführt werden. In ähnlicher Weise können ein hierin beschriebener Prozess bzw. Vorgang mittels Codesegmenten implementiert werden, welche eingerichtet sind, wenn von dem Prozessor ausgeführt, den Prozessor dazu zu bringen, den Prozess bzw. Vorgang auszuführen.

Gemäß verschiedenen Ausführungsformen kann ein Datenspeicher (auch als Speichermedium oder kurz als Speicher bezeichnet) ein flüchtiger oder nichtflüchtiger Datenspeicher sein. Beispiele für einen nichtflüchtigen Datenspeicher weisen auf: eine Festplatte, ein Halbleiterspeicher, wie z.B. einen Nur-Lese-Speicher, einen nichtflüchtigen Direktzugriffsspeicher (auch als NVRAM -"non-volatile random access memory" bezeichnet) und/oder einen Flash-Speicher (kurz auch als Flash bezeichnet), aufweisen oder daraus gebildet sein. Der Nur-Lese-Speicher (auch als ROM bezeichnet) kann beispielsweise ein programmierbarer ROM oder ein löschbarer programmierbarer ROM (kann auch als EPROM bezeichnet werden) sein. Der flüchtige Datenspeicher kann beispielsweise ein flüchtiger (volatiler) Direktzugriffsspeicher sein.

Als kryptografischer Schlüssel (vereinfacht auch als Schlüssel oder Key bezeichnet) wird im Kontext eines kryptografischen Prozesses (z.B. Verschlüsseln oder Signieren) eine Information (z.B. eine Zeichenkette) verstanden, welche den kryptographischen Prozess (z.B. dessen Algorithmus) parametrisiert und so dessen Ausgabe (z.B. unabhängig von der Eingabe) beeinflusst.

Gemäß verschiedenen Ausführungsformen kann ein Sensor als eine Komponente verstanden werden, welche eingerichtet ist, eine physikalische Größe (auch als Messgröße bezeichnet) ihrer Umgebung zu erfassen, z.B. einen Ist-Betriebsparameter eines Systems bzw. Vorgangs als Messgröße. Der Sensor kann beispielsweise Teil einer Messkette sein, welche eine entsprechende Infrastruktur (z.B. Prozessor, Speichermedium und/oder Bussystem oder dergleichen aufweisend) aufweist. Die Messkette kann eingerichtet sein, den entsprechenden Sensor anzusteuern, dessen erfasste Messgröße als Eingangsgröße zu verarbeiten und darauf basierend ein elektrisches Signal als Ausgangsgröße bereitzustellen, welches den Ist-Zustand der Eingangsgröße zum Zeitpunkt des Erfassens repräsentiert. Die Messkette kann beispielsweise mittels eines eingebetteten Systems implementiert sein oder werden.

Ein Stellglied kann als eine Komponente verstanden werden, welche eingerichtet ist, eine physikalische Größe (auch als Stellgröße bezeichnet) ihrer Umgebung zu beeinflussen, z.B. die Stellgröße eines Systems bzw. Vorgangs. Das Stellglied kann beispielsweise Teil einer Steuerkette sein, welche eine entsprechende Infrastruktur (z.B. Prozessor, Speichermedium und/oder Bussystem oder dergleichen aufweisend) aufweist. Die Steuerkette kann eingerichtet sein, Instruktionen, die einen Soll-Zustand der Stellgröße repräsentieren, als Eingangsgröße zu verarbeiten und darauf basierend das Stellglied anzusteuern, welches den Ist-Zustand der Stellgröße gemäß dem Soll-Zustand beeinflusst. Das Ansteuern des Stellglieds kann mittels eines elektrischen Signals (auch als Steuersignal bezeichnet) erfolgen. Die Steuerkette kann beispielsweise mittels eines eingebetteten Systems implementiert sein oder werden.

Das Stellglied kann beispielsweise einen Aktuator (auch als Aktor bezeichnet) aufweisen. Der Aktuator kann eingerichtet sein, eine mechanische Bewegung zu erzeugen (z.B. Translation, Rotation oder Vibration, z.B. Schall) oder auf andere Weise seine Umgebung mechanisch zu beeinflussen. Der Aktuator, z.B. ein elektromechanischer Umsetzer, kann zum Beispiel eingerichtet sein, in Antwort auf das Ansteuern elektrische Energie in mechanische Energie (z.B. durch Bewegung) zu überführen. Andere Typen von Stellgliedern können auch eingerichtet sein, in Antwort auf das Ansteuern eine Spannung, eine Stromstärke, eine Frequenz, Strahlung (z.B. Licht), ein Feld (beispielsweise Magnetfeld) oder Ähnliches gemäß dem Soll-Zustand bereitzustellen.

Der Begriff "eingebettetes System" kann als elektronische Rechnenvorrichtung (auch als Rechner oder Computer bezeichnet) verstanden werden, der in einen technischen Kontext eingebettet (z.B. eingebunden) ist, z.B. eingerichtet ist, eine oder mehr als eine Funktion in dem technischen Kontext (auch als technische Funktion bezeichnet) bereitzustellen. Beispiele für die technische Funktion weisen auf: eine Überwachungsfunktion, eine Steuerungsfunktion, und/oder eine Regelfunktion (bei welcher die Ausgabe der Überwachungsfunktion als Eingabe der Steuerungsfunktion zugeführt wird), Datenwandlungsfunktion (bzw. Signalwandlungsfunktion). Die Überwachungsfunktion kann beispielsweise mittels einer Messkette implementiert werden. Die Steuerungsfunktion kann beispielsweise mittels einer Steuerkette implementiert werden.

Beispiele für Vorrichtungen, die ein oder mehr als ein eingebettetes (z.B. ARM-basiertes) System aufweisen, weisen auf: eine hochsichere Chipkarte, ein BitCoin-Wallet, ein Geldautomat, eine selbstverschlüsselnde Festplatte, eine Anlagen-Steuervorrichtung, Versorgungsvorrichtung (z.B. zur Energieversorgung oder Wasserversorgung) und/oder ein Fahrzeug (z.B. Automobil oder Drone), z.B. eine Automobil-Steuervorrichtung. Eine beispielhafte Implementierung eines eingebetteten Systems ist ein ARM-basiertes System (z.B. einen oder mehr als einen ARM-Prozessor aufweisend), z.B. eine ARM-basierte Steuervorrichtung. Ein ARM-basiertes EGS ermöglicht es, einen standardisierten Prozessorkern auf einem Chip mit anwendungsspezifischen Peripherieblöcken zu kombinieren.

Beispielhafte Komponenten eines Geldautomaten, die ein EGS aufweisen, z.B. deren Betrieb davon gesteuert wird, weisen auf: eine Lesevorrichtung (z.B. zum Lesen eines RFID-Chips, eine Kreditkarte, einer Smartcard oder Ähnlichem), ein Drucker, eine Kamera, ein Netzwerkgerät (z.B. eine Netzwerkkarte), eine Transportvorrichtung (z.B. zum Transport von Banknoten oder anderen Wertdokumenten), eine Geldkassette (z.B. zum Aufnehmen von Banknoten oder anderen Wertdokumenten), eine Validierungsvorrichtung (z.B. in einem Geldautomaten), eine Auszahlvorrichtung (z.B. zum Auszahlen von Banknoten oder anderen Wertdokumenten aus einem Geldautomaten), eine Einzahlvorrichtung (z.B. zum Einzahlen von Banknoten oder anderen Wertdokumenten in einem Geldautomaten), eine Benutzerschnittstelle (z.B. ein Pin-Pad, eine Tastatur, ein Touchscreen oder Ähnliches aufweisend), z.B. ein verschlüsselndes PIN-Tastenfeld.

Das EGS kann eine oder mehr als eine gemäß der technischen Funktion eingerichtete Schnittstelle (auch als Funktionsschnittstelle bezeichnet), die beispielsweise zum Kommunizieren gemäß einem entsprechenden Kommunikationsprotokoll eingerichtet ist, aufweisen. Die Funktionsschnittstelle kann beispielsweise eingerichtet sein zum Kommunizieren per Bus, z.B. CAN-Bus oder LIN-Bus (auch als Local Interconnect Network Bus bezeichnet), ZigBee für drahtlose Kommunikation oder IP über Ethernet. Die Funktionsschnittstelle kann beispielsweise eingerichtet sein, mit einem Sensor und/oder einem Stellglied zu kommunizieren, z.B. dieses anzusteuern.

Hierin wird unter anderem auf ein eingebettetes System als Teil eines cyberphysischen Systems (CPS) Bezug genommen. Es kann verstanden werden, dass die bezüglich eines CPS erläuterten Aspekte in Analogie für das einzeln bereitgestelltes eingebettetes System gelten können und andersherum. Das CPS bezeichnet anschaulich den Verbund informatischer, softwaretechnischer Komponenten mit mechanischen und elektronischen Teilen, die über eine Kommunikationsinfrastruktur miteinander kommunizieren.

Gemäß verschiedenen Ausführungsformen wird auf Daten (auch als Zustandsdaten bezeichnet), die einen Systemzustand des eingebetteten Systems repräsentieren, Bezug genommen. Die Zustandsdaten können Informationen aus einem oder mehr als einem (z.B. prozessor-internen und/oder prozessor-externen) Speicherbereich des eingebetteten Systems aufweisen oder diese zumindest repräsentieren, z.B. die darin enthaltenen Daten. Der prozessor-interne Speicherbereich kann beispielsweise ein Register eines Prozessors (auch als Prozessorregister bezeichnet) aufweisen oder daraus gebildet sein. Beispielsweise können die Zustandsdaten ein Abbild der von dem EGS gespeicherten Daten (z.B. ein Speicherabbild oder ein Firmwareabbild) oder zumindest eine Repräsentanz dessen aufweisen.

Zum besseren Verständnis wird hierin auf verschiedene vereinfachte Begriffe für die betroffenen Parteien Bezug genommen, darunter: Der Hersteller des EGS bzw. CPS (auch als Hersteller bezeichnet); der Betreiber des EGS CPS (auch als Betreiber bezeichnet); Die Hersteller-Software des EGS bzw. CPS (auch als Firmware bezeichnet); das Netzwerk des Betreibers (auch als kurz Netzwerk bezeichnet), mit dem das EGS bzw. CPS in die Infrastruktur des Betreibers eingebunden ist; die Ermittlungsbehörde (auch als Ermittler bezeichnet), die einen Angriff auf die Firmware untersucht und Beweise für die Verwendung vor Gericht sicherzustellen versucht; eine betrügerische Partei (auch als Angreifer bezeichnet), z.B. eine Person oder Organisation, welcher die Firmware des eingebetteten Systems bzw. CPS manipuliert oder zumindest den Versuch dazu unternimmt. Die manipulierte Firmware kann eingerichtet sein, das eingebettete System bzw. CPS schadhaft außerhalb seiner herstellerseitig vorgesehenen Arbeitsweise zu betreiben (auch als schadhaft manipuliert bezeichnet), z.B. zum Nachteil des Betreibers, des Nutzers und/oder des Herstellers. Die schadhaft manipuliert Firmware kann dem Angreifer beispielsweise zumindest teilweise Zugang zu Daten und/oder der Arbeitsweise des eingebetteten Systems bzw. CPS verschaffen. Zusätzliche Beispiele manipulierter Firmware ermöglichen dem Angreifer: den Programmablauf zu manipulieren, eigene Funktionalität einzubringen, Daten aus dieser Umgebung auszugeben, Daten auf dem Weg vom CPS zum Hersteller zu lesen und/oder zu verändern, und/oder selektiv Daten beim Hersteller vor Weitergabe an den Ermittler einzusehen und zu manipulieren.

Gemäß verschiedenen Ausführungsformen wird ein Forensik-Modul bereitgestellt, welches die Anforderungen der beteiligten Parteien möglichst wahrt und dennoch ermöglicht, den Systemzustand des EGS bzw. die manipulierte Firmware so genau wie möglich forensisch zu extrahieren. Das Forensik-Modul gemäß verschiedenen Ausführungsformen hindert den Betreiber unter anderem daran, die forensische Extraktion des Systemzustands zu unterwandern und somit selbst als Angreifer aufzutreten. Der Betreiber wird beispielsweise daran gehindert, Einblick in vertrauliche Daten des CPS zu haben, auf die er normalerweise keinen Zugriff hat, zum Beispiel IP des Herstellers. Der Betreiber wird beispielsweise daran gehindert, extrahierte Daten zu manipulieren, zum Beispiel um Haftungsansprüche abzuwenden. Ein solcher betrügerischer Betreiber entspricht einem Angreifer, der Daten auf dem Weg vom eingebetteten System zum Hersteller lesen und verändern kann.

Das Forensik-Modul gemäß verschiedenen Ausführungsformen hindert ebenso den Hersteller daran, als Angreifer auftreten, z.B. als Angreifer auf die Authentizität der Zustandsdaten. Der Hersteller wird beispielsweise daran gehindert, die Zustandsdaten vor der Weitergabe an den Ermittler zu manipulieren, um beispielsweise Haftungsansprüche abzuwenden. Der Hersteller wird beispielsweise daran gehindert, dem Ermittler Daten zu übermitteln, die so nicht aus dem eingebetteten System extrahiert wurden, bzw. den Systemzustand auf andere Weise zu verfälschen.

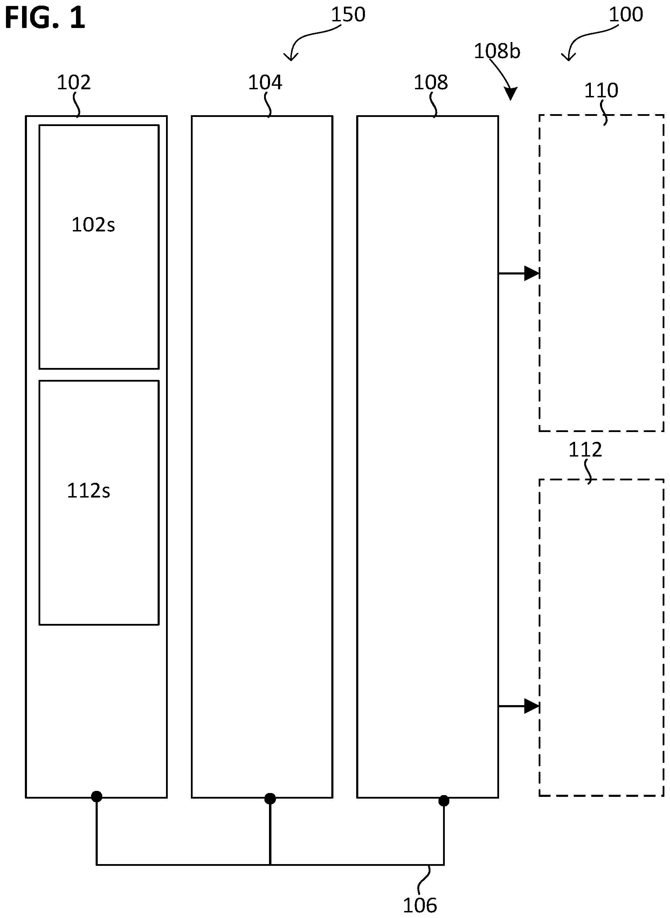

**Fig.1** veranschaulicht ein eingebettetes System 150 (EGS) gemäß verschiedenen Ausführungsformen 100 in einem schematischen Aufbaudiagramm, welches zumindest einen (d.h. einen oder mehr als einen) Prozessor 104 (auch als eingebetteter Prozessor 104 bezeichnet) und eine oder mehr als eine prozessor-externe Komponente (auch als Peripheriekomponente bezeichnet) aufweist. Das EGS 150 kann beispielsweise einen Mikrocontroller aufweisen oder daraus gebildet sein.

Beispiele für Peripheriekomponenten des eingebetteten Systems 150 weisen auf: eine Speichervorrichtung 102 (z.B. einen oder mehr als einen Datenspeicher 102s, 112s bzw. Speicherbereich 102s, 112s aufweisend), zumindest eine (z.B. physische) Schnittstelle 108, und eine Kommunikationsinfrastruktur 106, z.B. ein Bussystem, z.B. einen "Advanced High-performance-Bus" (AHB), aufweisend. Die Kommunikationsinfrastruktur 106 kann zumindest eine oder mehr als eine Peripheriekomponente (z.B. Speichervorrichtung 102 und/oder Schnittstelle 108) mit dem eingebetteten Prozessor 104 koppeln.

Das EGS 150 (z.B. dessen Speichervorrichtung 102) kann beispielsweise einen vertrauenswürdigen Speicherbereich (auch als abgesicherter Speicherbereich bezeichnet) und einen nicht-vertrauenswürdige Speicherbereich aufweisen, welche (z.B. physisch, bezüglich ihrer Adresse und/oder per Sicherungsmechanismus) voneinander separiert sind.

Auf der Speichervorrichtung 102 kann die Firmware des eingebetteten Systems 150 abgespeichert sein, beispielsweise zumindest teilweise auf dem nicht-vertrauenswürdigen Speicherbereich (dann auch als nicht-vertrauenswürdiger Teil der Firmware bezeichnet).

Die zumindest eine (z.B. physische) Schnittstelle 108 (auch als Funktionsschnittstelle bezeichnet) kann eingerichtet sein, zumindest einen Sensor 110 und/oder zumindest einen Aktor 112 anzusteuern (z.B. mit diesen zu kommunizieren), z.B. mittels eines Bussystems 108b.

Beispielsweise kann das eingebettete System 150 eingerichtet sein, mittels der Funktionsschnittstelle 108 eine oder mehr als eine technische Funktion zu implementieren, z.B. für einen Geldautomaten (auch als Bankautomaten bezeichnet). Beispiele für die technische Funktion eines Geldautomaten weisen auf: Annehmen und/oder Ausgeben von Dokumenten (z.B. Bargeld); Auslesen einer Chipkarte; Empfangen von Authentifizierungsinformationen von einem Benutzer (z.B. für ein Pin-Eingabegerät), Transportieren von Dokumenten innerhalb des Geldautomaten, Einlagern und/oder Auslagern von Dokumenten in/aus einem Tresor (z.B. einer darin angeordneten Geldkassette) des Geldautomaten, und dergleichen.

Der eingebettete Prozessor 104 kann beispielsweise einen oder mehr als einen ARM-Prozessor aufweisen oder daraus gebildet sein. Der eingebettete Prozessor 104 kann beispielsweise einen oder mehr als einen Mikroprozessor aufweisen oder daraus gebildet sein.

Gemäß verschiedenen Ausführungsformen kann ein cyberphysisches System (CPS) das eingebettete System 150 (oder zumindest den eingebetteten Prozessor 104) und den zumindest einen Sensor 110 und/oder zumindest einen Aktor 112 aufweisen. Optional kann das CPS eine zusätzliche Schnittstelle (auch als Vernetzungsschnittstelle bezeichnet) aufweisen. Die Vernetzungsschnittstelle kann beispielsweise eingerichtet sein, gemäß einem Kommunikationsprotokoll der Internetprotokollfamilie (dann auch als Internet-Kommunikationsprotokoll bezeichnet) zu kommunizieren, z.B. aus der TCP/IP-Protokollfamilie.

In einer beispielhaften Implementierung weist das CPS auf: zumindest einen physischen Sensor 110 und/oder zumindest einen physischen Aktor 112, ein oder mehr als ein optionales Bussystem 108b (z.B. ein CAN-Bus aufweisend), und einen oder mehr als einen Mikrokontroller (auch als MCU bezeichnet) als Komponente des eingebetteten Systems 150. Beispielsweise ist der zumindest eine physische Sensor 110 direkt oder über das physische Bussystem 108b als Schnittstelle mit der MCU verbunden. Optional können mehrere MCUs des EGS 150 mittels des Bussystems 108b miteinander gekoppelt und und/oder mittels der Vernetzungsschnittstelle in die Infrastruktur des Betreibers integriert, z.B. mit einem Netzwerk (z.B. dem Internet) verbunden, sein.

Eine MCU kann den zumindest einen Prozessor 104 (z.B. eine oder mehr als eine CPU und optional einen oder mehr als einen Ko-Prozessor aufweisend), einen flüchtigen Datenspeicher 102s (z.B. RAM), einen nichtflüchtigen Datenspeicher 112s (z.B. Flash, ROM) und eine oder mehr als eine zusätzliche Peripheriekomponente 106, 108 aufweisen. Jede als Schnittstelle 108 eingerichtete Peripheriekomponenten kann die MCU mit dem zumindest einen der Sensor bzw. Aktor koppeln und/oder über ein Register ansprechbar sein, welches in den Adressbereich der MCU abgebildet wird.

Ein Angriff auf das CPS kann aufweisen, dass der Angreifer nach Inbetriebnahme den nicht-vertrauenswürdigen Teil der Firmware des CPS manipuliert. Ist eine Manipulation einer Firmware eines eingebetteten Systems 150 detektiert, ist es für eine weitere Untersuchung günstig, diese manipulierte Firmware nachweisbar (z.B. bitgenau und/oder vollständig) zu extrahieren. Herkömmlicherweise sind infrage kommende Schnittstellen in einer sicherheitskritischen Umgebung deaktiviert, um einen Angriff darüber zu unterbinden. Die Erkennung einer schadhaften Manipulation an der Firmware einer eingebetteten Komponente von außen ist daher herkömmlich sehr aufwändig und meist nicht eindeutig in ihren Aussagen. Herkömmliche Konzepte, um Manipulationen der Firmware von außen zu erkennen, basieren lediglich auf Messungen des Stromverbrauchs oder des Timing-Verhalten des eingebetteten Systems. Alternativ könnte ein Forensiker die Firmware invasiv durch mechanisches Öffnen des Chips auslesen. Dazu kann unter Umständen detailliertes Wissen über den Chip nötig sein, beispielsweise Netzlisten, die Platzierung der Teilkomponenten wie Speicher und Krypto-Module und deren physische Verdrahtung (Routing) durch sogenanntes Reverse-Engineering. All diese Konzepte setzen jedoch zwingend einen Ausbau der eingebetteten Komponente voraus und erlauben so keine effiziente Untersuchung, insbesondere im laufenden Betrieb. Aufgrund der Komplexität heutiger eingebetteter Systeme, beispielsweise im Fall eines eigenständigen komplexen Betriebssystems (z.B. Android) und/oder proprietären Software in der Größenordnung von mehreren Megabytes, lässt sich dies nur noch manuell handhaben. Beispielsweise müssten solche manuellen Konzepte durch ausgebildete Spezialisten an die jeweilige Hardwarearchitektur angepasst werden. Durch die Weiterentwicklung der Technik in der Chiptechnologie, werden die Strukturgrößen immer kleiner, die Sicherungsmechanismen immer komplexer und der Systemaufbau kompakter. Deshalb ist das Reverse-Engineering zeitintensiv, schlecht parallelisierbar und setzt sehr teures Equipment in einem speziellen Labor voraus. Insbesondere führen diese Prozesse zu einer Zerstörung der untersuchten Hardware.

Gemäß verschiedenen Ausführungsformen wird ein Forensik-Modul bereitgestellt, welches beispielsweise eine bitgenaue Extraktion der Firmware des eingebetteten Systems 150 für forensische Untersuchungen ermöglicht. Das Forensik-Modul kann eine dedizierte Schnittstelle zum Auslesen der Firmware oder anderer Daten des eingebetteten Systems 150 aufweisen. Ferner kann das Forensik-Modul einen oder mehrere Schutzmechanismen (auch als Absicherungsmechanismen bezeichnet), die einen Missbrauch dieser Schnittstelle hemmen, z.B. basierend auf kryptographischen Authentifikationsmechanismen, implementieren.

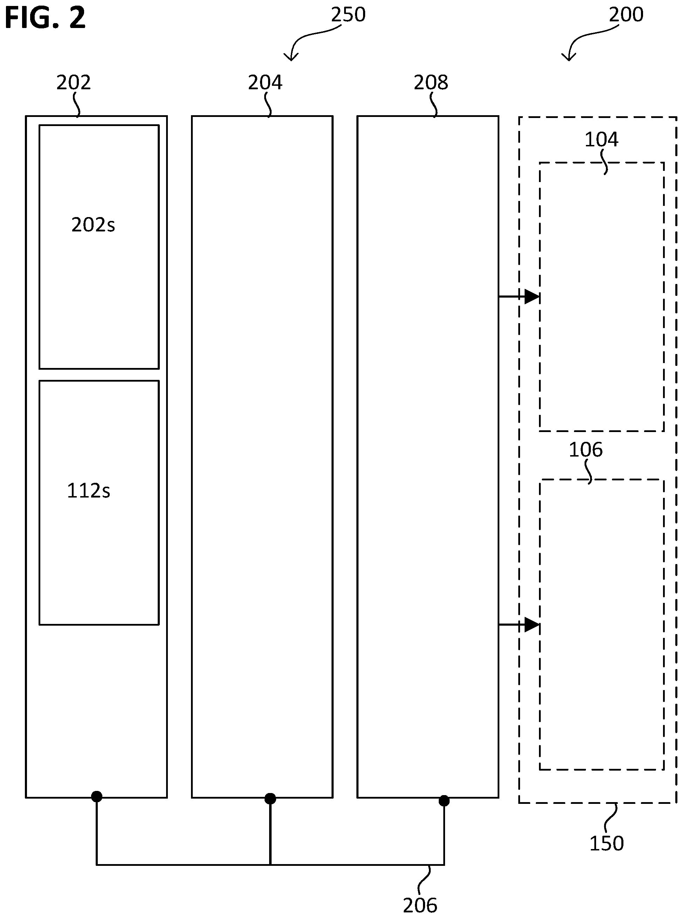

**Fig.2** veranschaulicht das Forensik-Modul 250 (auch als Extraktionsmodul bezeichnet) gemäß verschiedenen Ausführungsformen 200 in einem schematischen Aufbaudiagramm, welches beispielsweise zumindest teilweise in das eingebettete System 150 gemäß den Ausführungsformen 100 integriert sein kann.

Das Forensik-Modul 250 weist auf: zumindest einen Speicherbereich 202 (z.B. einen abgesicherten Speicherbereich 202s und/oder einen nicht-abgesicherten Speicherbereich 212s aufweisend), zumindest einen (d.h. einen oder mehr als einen) Prozessor 204 (auch als Forensik-Prozessor 204 bezeichnet), eine Kommunikationsinfrastruktur 206. Die Kommunikationsinfrastruktur 206 kann zumindest den zumindest einen Speicherbereich 202 und den Forensik-Prozessor 204 miteinander koppeln.

Das Forensik-Modul 250 weist ferner zumindest eine Schnittstelle 208 (auch als Forensik-Schnittstelle 208 bezeichnet) auf, welche zum Kommunizieren mit dem eingebetteten System 150 (z.B. dessen Komponenten), z.B. mit dem zumindest einen eingebetteten Prozessor 104 und/oder mit der Speichervorrichtung 102 des eingebetteten Systems 150, eingerichtet ist. Die mittels der Forensik-Schnittstelle 208 erfolgende Kommunikation mit dem eingebetteten System 150 kann beispielsweise privilegiert sein, einen oder mehr als einen Schutzmechanismus des eingebetteten Systems 150 zu durchdringen.

Hierin wird unter anderem auf ein Forensik-Modul Bezug genommen, welches zumindest teilweise (d.h. teilweise oder vollständig) in ein eingebettetes System 150 integriert ist (z.B. per Software), beispielsweise wenn eine oder mehr als eine Komponente 102, 104, 108, 106 des eingebetteten Systems 150 eingerichtet ist, zusätzlich eine oder mehr als eine Aspekte des Forensik-Moduls 250 bzw. Funktion und/oder Komponenten dessen bereitzustellen. Beispielsweise kann das Forensik-Modul 250 zumindest teilweise als eigenständige Firmware oder zumindest als Programmcode (auch als Forensikcode bezeichnet) implementiert sein, welche(r) beispielsweise in die Firmware des eingebetteten Systems 150 integriert ist, in der Speichervorrichtung 102 des eingebetteten Systems abgespeichert und/oder von dem zumindest einen Prozessor 104 des eingebetteten Systems 150 ausgeführt wird. Beispielsweise kann ein oder mehr als ein Speicherbereich des Forensik-Moduls in der Speichervorrichtung 102 des eingebetteten Systems 150 bereitgestellt sein. Beispielsweise können die Funktionen des oder jedes Forensik-Prozessors 204 mittels des zumindest einen eingebetteten Prozessors 104 des eingebetteten Systems 150 bereitgestellt sein, beispielsweise wenn dieser den Forensikcode ausführt. Die Forensik-Schnittstelle 208 kann mittels Hardware und/oder mittels Software bereitgestellt sein oder werden. Beispielsweise kann die Forensik-Schnittstelle 208 mittels eines Kommunikationsprotokolls bereitgestellt werden.

Es kann verstanden werden, dass die bezüglich des integrierten Forensik-Moduls 250 erläuterten Aspekte bzw. Funktionen und/oder Komponenten des Forensik-Moduls 250 zumindest teilweise (d.h. teilweise oder vollständig) als (z.B. physisch) eigenständige Komponente (z.B. dessen Speicherbereich, Forensik-Schnittstelle und/oder Forensik-Prozessor) bereitgestellt werden können, welche beispielsweise nachgerüstet oder einer bestehenden Systemarchitektur hinzugefügt werden kann. Beispielsweise kann die Forensik-Schnittstelle 208 zumindest eine physische Datenleitung aufweisen, muss diese aber nicht notwendigerweise, z.B. wenn diese per Software implementiert ist.

Der zumindest eine Forensik-Prozessor 204 ist (z.B. mittels Codesegmenten) eingerichtet zum forensischen Extrahieren von Daten (auch als Zustandsdaten bezeichnet), welche einen Systemzustand des eingebetteten Systems 150 bzw. CPS, repräsentieren mittels der Forensik-Schnittstelle 208 (kurz auch als Extraktion bezeichnet).

Die Zustandsdaten können den Inhalt (z.B. die Daten) eines oder jedes Registers des zumindest einen Prozessors 104 (z.B. der oder jeder CPU und optional des oder jedes Ko-Prozessors) und/oder der Inhalt des oder jedes prozessorexternen Datenspeichers 102s, 112s des eingebetteten Systems bzw. CPS repräsentieren (z.B. aufweisen). Beispielsweise können die Zustandsdaten den Inhalt von RAM, Flash und CPU-, Ko-Prozessor-, und Peripherieregister repräsentieren (z.B. aufweisen).

Die forensische Extraktion manipulierter Firmware kann einer oder mehr als einer der folgenden Anforderungen genügen, um eine manipulierte Firmware im laufenden Betrieb aus der Hardware zu extrahieren:
- Abgestimmtes Vorgehen: Der Hersteller stellt Betreiber und Ermittler eine detaillierte Beschreibung bereit, wie im Manipulationsfall vorzugehen ist, welche Informationen und Daten sichergestellt werden, und welche Schritte zur Extraktion der Firmware durchgeführt werden.
- Vertraulichkeit: Anwendung technischer Mittel, um die Firmengeheimnisse (z.B. Firmware IP) des Herstellers vor unberechtigter/unnötiger Einsicht, z.B. durch den Betreiber, zu schützen.
- Authentizität: Der Hersteller stellt technische Mittel bereit, um eine nachträgliche Veränderung von Inhalt und/oder Herkunft (Identität der Hardwareeinheit) der extrahierten Daten (z.B. der manipulierten Firmware) zu detektieren. Dies kann nicht nur für den Hersteller sondern auch für den Ermittler möglich sein.
- Partielles Aufdecken: Optional kann der Hersteller auch technische Mittels bereitstellen, um nur dedizierte Teile des extrahierten Systemzustandes offen zu legen und dabei trotzdem die Authentizität zu gewährleisten.

Das abgestimmte Vorgehen begünstigt, dass vor Ort in Abwesenheit des Herstellers keine wichtigen Informationen für die Analyse verloren gehen. Vertraulichkeit dient dem Schutz der Firmengeheimnisse (z.B. des geistigen Eigentums (IP)) des Herstellers. Dieser Schutz bildet wiederum die Vertrauensbasis um weitere Mechanismen zur Aufklärung des Vorfalls zu implementieren. Die Authentizität stellt sicher, dass das Abbild als Beweismittel zur Strafverfolgung und zur Klärung von Haftungsfragen verwendet werden kann, nachdem der Hersteller das Abbild oder Teile davon aufgedeckt (z.B. bekannt gemacht) hat. Eine partielle Aufdeckung ermöglicht es dem Hersteller, nur die für den Angriff relevanten Teile des extrahierten Systemzustandes offen zu legen. Es sei angemerkt, dass den Ermittlern auch größere Teile oder auch der komplette Systemzustand zur Verfügung gestellt werden kann, um im Zweifel den Betrug durch den Hersteller auszuschließen. Das partielle Aufdecken kann vor allem die zu publizierende Datenmenge minimieren um Firmengeheimnisse (z.B. IP) des Herstellers zu schützen. Ein Gericht kann sich dann auf die Analyse der Ermittler verlassen, die einen kompletten Informationsstand haben und gleichzeitig können z.B. relevante Teile des Schadcodes (z.B. Malware) unter Erhaltung der Authentizität der Daten öffentlich gemacht werden.

Die forensische Extraktion des Systemzustands kann eingerichtet sein, dem Angreifer die Möglichkeit nehmen, die Vertraulichkeit, Authentizität und/oder Verfügbarkeit der Extraktion zu unterwandern. So könnte der Schadcode (z.B. die Malware) so konzipiert sein, dass im Zusammenhang mit ihrer Extraktion vertrauliche Daten des CPS ausgegeben werden. Weiterhin könnte der Zustand des CPS während der Extraktion durch den Schadcode manipuliert werden, zum Beispiel um eine Analyse zu erschweren oder um die Gerichtsverwertbarkeit zu verhindern. Weiterhin könnte der Schadcode versuchen die Extraktion des Systemzustands zu verhindern.

Auf diese forensische Extraktion des Systemzustands soll im Folgenden genauer eingegangen werden.

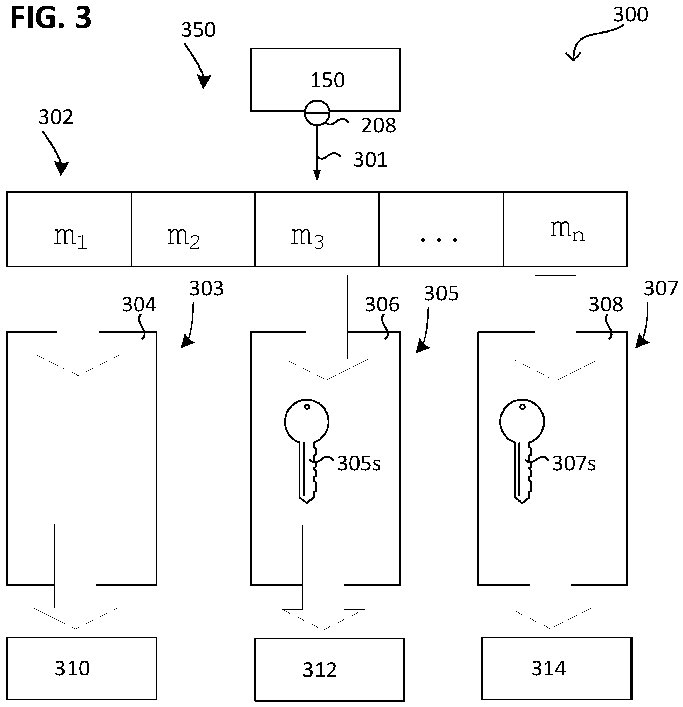

**Fig.3** veranschaulicht die forensische Extraktion 350 des Systemzustands gemäß verschiedenen Ausführungsformen 300 in einem schematischen Ablaufdiagramm, wie sie beispielsweise mittels des Forensik-Moduls 250 (auch als Extraktionsmodul 250 bezeichnet) gemäß den Ausführungsformen 200 implementiert sein oder werden kann.

Die forensische Extraktion 350 kann innerhalb des Forensik-Moduls 250 und/oder des eingebetteten Systems 150 durchgeführt werden, und optional von außerhalb des eingebetteten Systems 150 gestartet (initiiert) werden (z.B. von einem sogenannten Extraktionsauslöser). Der Extraktionsauslöser kann beispielsweise eine Partei oder eine Vorrichtung sein, z.B. der Ermittler oder eine andere Partei. Beispielsweise kann das Ergebnis der Extraktion 350 an den Extraktionsauslöser ausgegeben werden als Antwort auf das Starten der Extraktion 350 durch den Extraktionsauslöser. Die Kommunikation zwischen dem Extraktionsauslöser und dem eingebetteten System 150 kann mittels einer dafür eingerichteten Schnittstelle (nicht dargestellt, auch als Extraktionsschnittstelle) des Forensik-Moduls 250 erfolgen.

Die forensische Extraktion 350 kann beispielsweise damit gestartet werden, dass das eingebettete System 150, z.B. dessen Systemzustand, eingefroren wird. Dazu kann das eingebettete System 150 angehalten werden.

Die forensische Extraktion 350 kann aufweisen, in 301, ein (z.B. bitgenaues) Auslesen der Zustandsdaten 302 (z.B. ein Speicherabbild aufweisend) mittels der Forensik-Schnittstelle 208. Beispielsweise können die Zustandsdaten einen oder mehrere Datensätze mₖ (k = 1...n, n>1) aufweisen. Das Auslesen der Zustandsdaten 302 eines Prozessorregisters (z.B. CPU-Registers) und/oder Peripherieregisters kann mittels einer von der Architektur des eingebetteten Systems 150 abhängigen Routine (auch als architekturabhängige Routine bezeichnet) erfolgen, welche beispielsweise mittels der Forensik-Schnittstelle implementiert wird.

Die ausgelesenen Zustandsdaten 302 können beispielsweise in einem (z.B. abgesicherten) Speicherbereich des Forensik-Moduls 250 gespeichert werden, z.B. in Form einer oder mehr als einer Datei (auch als Zustandsdatei bezeichnet).

Das Auslesen der Zustandsdaten 302 kann beispielsweise aufweisen, ein oder mehr als ein Prozessorregister (z.B. der CPU, auch als CPU-Register bezeichnet) auszulesen. Das Auslesen jedes Prozessorregisters kann aufweisen, ein Speicherabbild des oder jedes Prozessorregisters in dem (z.B. abgesicherten) Speicherbereich des Forensik-Moduls 250 abzuspeichern. Dies ermöglicht es, den Kontext der laufenden Anwendung sofort bei Start der forensischen Extraktion 350 zu sichern. Dies erleichtert es, den Kontext einer Applikation einschließlich einer möglichen Malware exakt zu extrahieren.

In einer exemplarischen Implementierung kann das Auslesen eines oder mehr als eines CPU-Registers des EGS 150 erfolgen. Jedes CPU-Register kann Teil des Systemzustands des EGS 150 (bzw. CPS) sein. Während der Ausführung des Schadcodes beinhalten die CPU-Register insbesondere Informationen, die für eine weiter Analyse von Bedeutung sein könnten. Ist das CPU-Register nicht (beispielsweise im Gegensatz zu dem übrigen Speicher) adressierbar, kann das Auslesen des einen oder mehr als einen CPU-Registers aufweisen:
- Abbilden (z.B. Sichern) jedes CPU-Registers in einer Zustandsdatei (dann auch als Registerdatei bezeichnet) innerhalb eines reservierten Speicherbereichs des Forensik-Moduls 250; und
- Auslesen der Registerdatei als Teil des übrigen Auslesens des Speichers des Forensik-Moduls 250 bzw. des eingebetteten Systems 150.

Um ein möglichst exaktes Abbild zu erstellen ist es günstig, wenn möglichst keine Information im nicht-vertrauenswürdigen Speicherbereich des eingebetteten Systems 150 (bzw. CPS) modifiziert wird.

Wird die Extraktion 350 mittels einer Ausnahmebehandlung (auch als Exception bezeichnet) ausgelöst, kann das Auslesen 301 des Systemzustandes Folgendes aufweisen:
- Ablegen des Exception-Frames auf dem Stapel;
- Abbilden des einen oder mehr als einen CPU-Registers in die Registerdatei des Forensik-Moduls 250;
- Setzen des Stapelzeigers (SP) in den Speicherbereich des Forensik-Moduls 250;
- Auslesen des Speichers des eingebetteten Systems 150 (z.B. inklusive der Registerdatei); und
- Wiederherstellen des Stapelzeigers.

Um eine oder mehr als eine der obigen Anforderungen (Authentizität, Vertraulichkeit und/oder partielles Aufdecken) zu erfüllen, können die Zustandsdaten 302 (z.B. ein Speicherabbild des eingebetteten Systems 150) vor der Ausgabe (z.B. durch die MCU) kryptographisch aufbereitet werden, wie nachfolgend genauer erläutert wird.

Die forensische Extraktion 350 kann aufweisen, in 303, ein Ermitteln eines Kommitments 310 (auch als Verbindlichkeitsangabe bezeichnet) basierend auf den Zustandsdaten 302 und unter Verwendung eines kryptografischen Kommitment-Prozesses 304 (z.B. ein Vektor-Kommitment-Prozess). Beispielsweise können die Zustandsdaten 302 mittels des Kommitment-Prozesses 304 auf das Kommitment 310 abgebildet werden. Ein beispielhafter Algorithmus (auch als Kommitmentalgorithmus bezeichnet) zum Implementieren des Kommitment-Prozesses 304 wird später noch genauer beschrieben.

Der Kommitment-Prozess 304 kann derart eingerichtet sein, dass sich jeder Datensatz mₖ einzeln verifizieren lässt, beispielsweise anhand des Kommitments und/oder eines dem Datensatz mₖ individuell zugeordneten Öffnungswerts dₖ. Dies erreicht, dass die Möglichkeit des partiellen Aufdeckens besteht.

Die forensische Extraktion 350 kann aufweisen, in 305, ein Verschlüsseln (auch als Verschlüsselung 305 bezeichnet) der Zustandsdaten 302 und der Öffnungswerte dₖ unter Verwendung eines Schlüssels 305s (z.B. symmetrischen Schlüssels 305s). Das Ergebnis der Verschlüsselung 305 weist Daten 312 (auch als Chiffrat, Kryptogramm, Ciphertext oder als Geheimtext bezeichnet) auf, welche die verschlüsselten Zustandsdaten und optional verschlüsselten Öffnungswerte dₖ aufweisen. Der Schlüssel 305s (auch als erster Schlüssel 305s oder Verschlüsselungsschlüssel 305s bezeichnet) kann mittels Daten (auch als Schlüsseldaten oder schlüsselimplementierende Daten bezeichnet) in dem abgesicherten Speicherbereich 202s des Forensik-Moduls implementiert sein, wie später noch genauer erläutert wird. Das Verschlüsseln 305 der Zustandsdaten und optional der Öffnungswerte dₖ kann mittels eines (z.B. symmetrischen) Verschlüsselungsprozesses 306 erfolgen.

Beispielsweise kann der Verschlüsselungsprozess 306 ein authentifizierter Verschlüsselungsprozess 306 sein, der die Verschlüsselung und Authentifizierung der Zustandsdaten mittels des für das eingebettete System 150 individuellen Verschlüsselungsschlüssels 305s ermöglicht. Der Verschlüsselungsschlüssel 305s kann beispielsweise (z.B. nur) dem Hersteller bekannt sein.

Die forensische Extraktion 350 kann optional aufweisen, in 307, ein Signieren der Zustandsdaten 302. Das Ergebnis des Signierens 307 weist die sogenannte Signatur 314 der Zustandsdaten 302 auf. Das Signieren 307 kann beispielsweise mittels eines Signaturprozesses 308 und/oder eines (z.B. asymmetrischen) zweiten Schlüssels 307s (auch als Signaturschlüssel oder Signierschlüssel bezeichnet) erfolgen. Das Signieren der Zustandsdaten 302 ermöglicht eine eindeutige Kennung der Zustandsdaten 302 mittels des für das eingebettete System individuellen Signaturschlüssels 307s.

Das Verschlüsseln 305 kann die Vertraulichkeit der Firmengeheimnisse des Herstellers (z.B. IP) als Teil des Systemzustands gegenüber dem Betreiber und/oder dem Ermittler begünstigen. Dennoch kann der Hersteller den Systemzustand aufdecken, zum Beispiel nach Unterzeichnung einer Vertraulichkeitserklärung. Durch das Kommitment 310 legt sich das eingebettete System (z.B. CPS) zum Zeitpunkt der Extraktion 350 (auch als Extraktionszeitpunkt bezeichnet) auf den Inhalt der Zustandsdaten 302, z.B. des verschlüsselten Speicherabbildes, fest. Dies erlaubt es dem Hersteller, trotz Verschlüsselung 305 später gegenüber dem Betreiber und/oder dem Ermittler nachzuweisen, dass der aufgedeckte Systemzustand den zuvor extrahierten Zustandsdaten 302 entspricht.

Durch Verwendung eines Vektor-Kommitment-Prozesses 304 (auch als VC-Prozess bezeichnet) können insbesondere auch Teilmengen (z.B. ein oder mehr als ein einzelner Datensatz mₖ) aufgedeckt werden, z.B. nur der Flash-Speicherbereich, wenn dieser den Schadcode enthält. Das Signaturverfahren zusammen mit der eindeutigen Kennung der Zustandsdaten 302 erlaubt es, zu beweisen, dass die Zustandsdaten 302 zum Extraktionszeitpunkt durch das eingebettete System 150 erstellt und nicht nachträglich (z.B. durch den Hersteller) modifiziert wurden. Die Funktionalität zur Entschlüsselung, Aufdeckung und Prüfung der Zustandsdaten 302 erfolgt später mittels eines Emulationssystems (auch als Verarbeitungsmodul bezeichnet), was später noch genauer beschrieben wird.

Das Extraktionsmodul 250 (z.B. dessen Forensik-Schnittstelle 208) implementiert für die Extraktion 350 eine Funktion, die den Systemzustand des EGS 150 (z.B. CPS) einliest und das Resultat der Extraktion 350 über eine geeignete Schnittstelle, z.B. die Vernetzungsschnittstelle, ausgibt.

Sind die Adressen ausgelesenen Daten des EGS 150 für die Extraktion 350 relevant und werden als Teil des Systemzustands ausgelesen, können die Zustandsdaten 302 im Intel Hex-Format kodiert (auch als IHEX-Kodierung bezeichnet) werden. Das Intel Hex-Format ist besonders einfach, bietet verbreitete Unterstützung und Lesbarkeit. Weiterhin erlaubt das Intel Hex-Format auch die Kodierung der Zustandsdaten 302 im Strom, was es erleichtert, die kodierten und abgesicherten Zustandsdaten 302 direkt ausgeben zu können, um mit möglichst wenig Speicherbedarf auszukommen. Logisch gesehen liegen in diesem Fall die Zustandsdaten 302 nach der IHEX-Kodierung als ASCII Strings vor. Die so gebildeten Zustandsdaten können beispielsweise als Vektor m mit n Komponenten m = (m₁ ,... ,mₙ) notiert werden. Es kann aber selbstverständlich auch jede andere geeignete Kodierung verwendet werden bzw. muss nicht notwendigerweise eine Kodierung der Zustandsdaten 302 erfolgen.

Es ist vorteilhaft, wenn die Größe des internen Zustands der Extraktion 350 konstant in der Größe des extrahierten Systemzustandes ist. Dies erreicht einen geringeren Speicherbedarf der Extraktion 350, welcher exklusiv für die Extraktion 350 vorgesehen werden wird und vermeidet, dass der Systemzustand nur unvollständig extrahiert werden kann. Dies wird begünstigt, indem zwei oder mehr Komponenten 303, 305, 307 (z.B. aufweisend: das Ermitteln 303 des Kommitments 310, das Verschlüsseln 305 und/oder das Signieren 307) der Extraktion 350 (z.B. kryptographische Prozesse) parallel zueinander ablaufen. Beispielsweise wird der auszulesende Systemzustand, z.B. die Zustandsdaten 302, iterativ Wort für Wort oder zumindest Datensatz für Datensatz abgearbeitet.

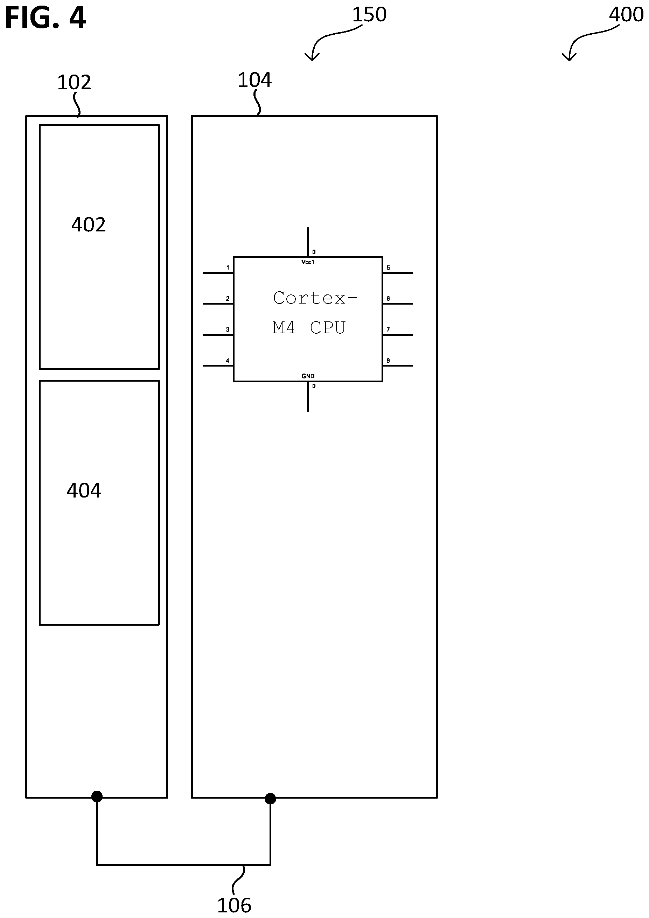

**Fig.4** veranschaulicht das EGS 150 gemäß verschiedenen Ausführungsformen 400 in einem schematischen Aufbaudiagramm (beispielsweise eingerichtet gemäß den Ausführungsformen 100), welche sich insbesondere auf eine Vielzahl von eingebetteten Systemen (bzw. CPS) übertragen lässt, beispielsweise bezüglich der implementierten Absicherungsmechanismen.

Grundlage des Forensik-Moduls 250 gemäß den Ausführungsformen 400 ist eine STM32L4 MCU als Teil des eingebetteten Systems 150, dessen zumindest ein Prozessor 104 eine Cortex-M4 CPU aufweist. Die Cortex-M4 CPU weist eine 32 Bit Architektur für Daten und Instruktionen auf. Register und Busse besitzen also eine Breite von 32 Bit. Die Cortex-M4 CPU weist ferner einen sogenannten Thumb-Befehlssatz bzw. implementiert einen sogenannten Thumb-Modus auf. In diesem Thumb-Modus steht ein reduzierter Instruktionssatz, der sogenannte Thumb-Befehlssatz, zur Verfügung, in dem für die Kodierung von Instruktionen nur 16 Bit benötigt werden.

In nachfolgender Tabelle ist eine Übersicht über die Prozessorregister der Cortex-M4 CPU dargestellt. Die Cortex-M4 CPU besitzt zwei Stapelzeiger (sogenannter "Stack Pointer"), welche den Haupt-Stapelzeiger (sogenannter "Main Stack Pointer" oder kurz MSP) und den Prozess-Stapelzeiger (sogenannter "Process Stack Pointer" oder kurz PSP) aufweisen. Auf welchen dieser Stapelzeiger durch das Register R13 zugegriffen wird, kann mittels eines Bits im Steuerregister ("Control Register" oder kurz CONTROL) gesteuert werden. Das Programmstatusregister (sogenanntes "Program Status Register" oder kurz PSR) weist einen oder mehr als einen der folgenden Register auf: ein Anwendung-Programmstatusregister (sogenanntes "Application Program Status Register" oder kurz APSR), ein Interrupt-Programmstatusregister (sogenanntes "Interrupt Program Status Register" oder kurz IPSR), und/oder ein Ausführung-Programmstatusregister (sogenanntes "Execution Program Status Register" oder kurz EPSR).

| Name | Typ | Zugriffsmodus | Beschreibung |
|---|---|---|---|
| R0-R12 | read-write | alle | General Purpose Register |
| MSP (R13) | read-write | priviligiert | Main Stack Pointer |
| PSP (R13) | read-write | alle | Process Stack Pointer |
| LR (R14) | read-write | alle | Link Register |
| PC (R15) | read-write | alle | Program Counter |
| PSR | read-write | priviligiert | Program Status Register |
| APSR | read-write | alle | Application Program Status Register |
| IPSR | read-only | priviligiert | Interrupt Program Status Register |
| EPSR | read-only | priviligiert | Execution Program Status Register |
| PRIMASK | read-write | priviligiert | Priority Mask Register |
| FAULTMASK | read-write | priviligiert | Fault Mask Register |
| BASEPRI | read-write | priviligiert | Base Priority Mask Register |
| CONTROL | read-write | priviligiert | Control Register |

Das Verknüpfungsregister (sogenanntes "Link Register", Linkregister oder kurz LR) dient der Speicherung der Rücksprungadresse beim Aufrufen einer Funktion. Durch den Befehl "BL" schreibt die CPU vor dem Sprung zur Zieladresse den aktuellen Wert des Programzählers ("Program Counter oder kurz PC) in das Linkregister (LR). So kann später mittels Setzens des Programzählers auf den im Linkregister gespeicherten Wert aus der aufgerufenen Funktion zurückgekehrt werden (der sogenannte Funktionsrücksprung oder sogenanntes "Funktion Return").

Die Cortex-M4 CPU befindet sich entweder im sogenannten Threadmodus (sogenannter "Thread-Mode") oder im Handlermodus (sogenannter "Handler-Mode"). Im Handlermodus werden Ausnahmen (sogenannte "Exceptions" oder auch als Ausnahmesituation bezeichnet) ausgeführt. Die Ausführung im Handlermodus ist beispielsweise immer privilegiert. Die sonstige Ausführung erfolgt im Threadmodus. Die Ausführung im Threadmodus kann beispielsweise entweder privilegiert oder unprivilegiert erfolgen. In der unprivilegierten Ausführung kann die Cortex-M4 CPU nicht auf alle Register und Speicherbereiche zugreifen (siehe obenstehende Tabelle). Der Wechsel vom Threadmodus in den Handlermodus erfolgt durch Auslösen einer Exception. Beispiele für Exceptions weisen auf: ein externer Interrupt, ein Timer-Interrupt und ein Zugriffsfehler. Die Supervisorruf-Instruktion (sogenannte "Supervisor Call Instruktion" oder SVC-Instruktion) löst ebenfalls eine Exception aus und ermöglicht, per Software in den Handlermodus zu wechseln. Beim Betreten einer Excpetion führt die Cortex-M4 CPU automatisch mehrere Schritte durch, die aufweisen:
1. Anlegen eines Exception-Frames (Ausnahmerahmen) auf dem aktiven Stapel (auch als Stack bezeichnet).
2. Setzen des LR auf einen speziellen EXC_RETURN Wert.
3. Context Switch in den Handlermodus.

Der Exception-Frame für die Cortex-M4 CPU ist in nachfolgender Tabelle dargestellt, welche den Cortex-M4 Stack Frame beim Betreten der Exception darstellt. Die Spalte "Address Offset" gibt dabei den Addressversatz relativ zum Wert des Stack Pointer (SP) vor dem Betreten des Exception an.

| Adress Offset | Register |
|---|---|
| -4 | PSR |
| -8 | PC |
| -12 | LR |
| -16 | R12 |
| -20 | R3 |
| -24 | R2 |
| -28 | R1 |
| -32 | R0 |

Entsprechend können die Register R0-R3 und R12 im Exception-Handler überschrieben werden, da diese durch die CPU beim Verlassen des Handlers vom Stack rekonstruiert werden.

Der Exception Frame weist zusätzlich den Wert des Programzählers vor Betreten der Exception auf. Dies erlaubt es der CPU, am Ende des Exception-Handlers den Programzähler wieder auf den Zustand vor Betreten der Exception zurück zu setzen. Zum Verlassen des Exception-Handlers wird der Programzähler auf den Wert EXEC_RETURN gesetzt, der sich bei Betreten der Exception in LR befand. Der EXEC_RETURN codiert Informationen über die Struktur des Exception-Frames und den Modus, in den die Exception verlassen werden soll (Handlermodus oder Threadmodus). Dies veranlasst die CPU die Exception in den richtigen Modus zu verlassen und die Register des Exception-Frames wieder herzustellen.

Nachfolgend werden verschieden Möglichkeiten zur Implementierung des Forensik-Moduls 250 in das eingebettete System 150 erläutert.

Um die Anforderungen an die Vertraulichkeit und Integrität zu erfüllen, wird ein oder mehr als ein Absicherungsmechanismus implementiert, welche den Zugriff von Schadcode (z.B. einer Malware) auf einen damit abgesicherten Speicherbereich des eingebetteten Systems 150 (z.B. CPS) hemmen bzw. verhindern. Das eingebettete System 150 (z.B. dessen Speichervorrichtung 102) weist einen abgesicherten Speicherbereich 402 (auch als vertrauenswürdiger Speicherbereich 402 bezeichnet) und einen nicht-abgesicherten Speicherbereich 404 (auch als nicht-vertrauenswürdigen Speicherbereich 404 bezeichnet) auf.

Im Allgemeinen erfordert der abgesicherte Speicherbereich 402 höhere Privilegien (auch als Berechtigungen oder Berechtigungsstufen bezeichnet), um darauf zuzugreifen, als der nicht-vertrauenswürdige Speicherbereich 404. Hardwarebasierte Implementierungen des vertrauenswürdigen Speicherbereichs 402 bzw. dessen Isolierung vom nicht-vertrauenswürdigen Speicherbereich 404 weisen auf: eine Speicherschutzeinheit (die sogenannte "Memory Protection Unit" oder kurz MPU), eine vertrauenswürdige Laufzeitumgebung (die sogenannte "Trusted Execution Environment" oder kurz TEE), oder ein Sicherheitselement (das sogenannte "Secure Element" oder kurz SE).

In einem EGS 150 wird die MPU typischerweise von einem Echtzeit-Betriebssystem (das sogenannte "Real Time Operating System" oder kurz RTOS) gesteuert. Das RTOS implementiert eine Zugriffskontrolle auf den Speicher und eine Separierung von Prozessen untereinander und zwischen den Prozessen im Threadmodus und dem RTOS im Handlermode.

Für die Verwendung einer TEE werden alle Ressourcen des EGS 150 in einen sicheren und einen unsicheren Teil separiert. Dies ermöglicht eine Isolation sicherheitskritischer Komponenten zum Beispiel von Komponenten mit Zugriff auf kritische Assets wie Schlüssel. Die Trennung kann hier auch innerhalb des privilegierten RTOS erfolgen. So können sicherheitskritische Funktionalitäten vom komplexen Teil des RTOS getrennt werden. Bei Verwendung eines SE werden sicherheitskritische Funktionalitäten in eine komplett separate Hardware, dass SE ausgelagert. Beispiele weisen auf: eine Smart-Card oder ein vertrauenswürdiges Plattformmodul (das sogenannte "Trusted-Platform-Modul" oder kurz TPM). Dies bietet eine hohe Isolation, erschwert aber die Integration auf Seite der Anwendung-MCU.

Nachfolgend wird Bezug genommen auf die Implementierung des Forensik-Moduls 250 in einer TEE. Im Vergleich zur Realisierung mittels der MPU hat dies den Vorteil, dass das komplexe Betriebssystem mit der Steuerung der MPU aus Sicht der Forensik nicht im vertrauenswürdigen Teil des CPS liegen muss. Es kann verstanden werden, dass die diesbezüglich erläuterten Aspekte in Analogie für eine andere Implementierung des Forensik-Moduls 250 gelten können und nicht zwangsläufig nur auch die TEE beschränkt sind.

Für die Implementierung des vertrauenswürdigen Speicherbereichs 402 kann es eine Rolle spielen, ob dieser nur einmalig nach dem Systemstart betreten werden soll, oder ob ein Wiedereintritt zur Laufzeit, was die Extraktion zu einem beliebigen Zeitpunkt ermöglicht, erfolgen soll. Zum Betreten zur Laufzeit können zusätzliche Privilegien beim Eintritt erteilt werden. Dieser Fall stellt höhere Anforderungen an die Hardware zur Realisierung des vertrauenswürdigen Speicherbereichs 402. Auswirkung des Wiedereintritts auf die Funktionalität des Forensik-Moduls 250 sind in nachfolgender Tabelle dargestellt.

| | Kein Wiedereintritt | Wiedereintritt |
|---|---|---|
| Detektion | Nur beim Neustart, Persistente Manipulationen, Boot Attestation | Jederzeit, persistente und flüchtige Manipulationen, Remote Attestation allgemein |
| Extraktion | Nur beim Neustart, Persistenter Zustand | Jederzeit, Gesamtzustand |

Einen sicheren Wiedereintritt in den vertrauenswürdigen Speicherbereich 402 stellt jedoch mehr Anforderungen an die Hardware als der Eintritt über den Neustart, da die Privilegien beim Übergang vom nicht-vertrauenswürdigen in den vertrauenswürdigen Speicherbereich 402 beim Wiedereintritt erhöht werden müssen.

Da möglicherweise Schadcode zum Zeitpunkt des Wiedereintritts ausgeführt wird, kann der Fall eintreten, dass die forensische Extraktion 350 parallel zum Schadcode ausgeführt wird. Ansonsten könnte der Angreifer die Verfügbarkeit der forensischen Extraktion 350 unterwandern. Der Eintritt in das Forensik-Modul 250 (anschaulich die Aktivierung des Forensik-Moduls 250) erfolgt dann über eine Exception ausreichend hoher Priorität. Beispiele für Exceptions zum Starten (Auslösen) der forensischen Extraktion 350 weisen auf:
- einen Timer: ein Timer als Teil der Wurzel der Sicherheitskette (die sogenannte "Root-of-Trust" oder kurz RoT) kann verwendet werden, um den Schadcode regelmäßig zu unterbrechen und dann, in Abhängigkeit möglicher weiterer Bedingungen, die Extraktion 350 zu starten. Der Timer zum Starten der Extraktion 350 eignet sich beispielsweise dann, wenn das Betriebssystem Teil des RoT ist, da das Betriebssystem üblicherweise durch einen Timer-Interrupt Kontrolle über den Kontrollfluss erlangt.
- externer Interrupt: Ein Interrupt, der durch externe Ereignisse ausgelöst wird, unterbricht den Schadcode. Auch hier ist es günstig, wenn die Konfiguration des Interrupts Teil des RoT ist, so dass eine Maskierung durch den Angreifer gehemmt (z.B. verhindert) wird. Der externe Interrupt eignet sich beispielsweise dann, wenn die Extraktion durch die Umgebung des eingebetteten Systems 150 (bzw. CPS), zum Beispiel durch das Drücken eines Tasters des Extraktionsauslösers, ausgelöst werden soll.
- Störungshandler (sogenannter "Fault Handler"): Die Extraktion 350 kann auch als Teil eines Störungshandlers implementiert werden. In diesem Fall wird die Extraktion 350 ausgelöst, wenn der Schadcode eine Störung (z.B. einen Fehler) hervorruft, der nicht anderweitig behandelt wird. Der Störungshandler eignet sich auch, wenn die Extraktion 350 allgemein zur Fehleranalyse verwendet werden soll.

Um die Verfügbarkeit zu begünstigen, kann jede dieser Exceptions derart eingerichtet sein, dass der Interrupt nicht durch den Angreifer unterdrückt werden kann. Dies kann beispielsweise mittels einer Konfiguration des eingebetteten Systems 150 erreicht werden, in der sowohl der Interrupt-Handler selbst, als auch die Konfiguration des Interrupt-Controllers innerhalb des RoT liegen. Die konkrete Implementierung ist abhängig vom Typ und der Architektur des jeweiligen eingebetteten Systems 150 (bzw. CPS), dessen MCU und den verfügbaren Zugriffssteuer-Mechanismen (sogenannte "Access Control Mechanismen"). Mögliche Konzepte zur Implementierung weisen auf: eine ARM-Sicherheitszone (die sogenannte "Arm TrustZone"), die Firewall oder die MPU.

In einer bevorzugten, einfach umzusetzenden Implementierung wird die Extraktion 350 mittels eines externen Interrupts (anschaulich eine Instruktion zur Unterbrechung) ausgelöst.

Nachfolgend werden verschiedene Beispiele für die Implementierung von Absicherungsmechanismen erläutert, welche beispielsweise statisch sind, d.h. nicht notwendigerweise erst beim Systemstart des eingebetteten Systems 150 konfiguriert werden:
- Ein Leseschutz (die sogenannte "Read Protection" oder kurz RDP) schützt Daten auf einer MCU vor einem system-externen Zugriff;
- Ein proprietärer Code-Leseschutz (die sogenannte "Proprietary Code Read Out Protection" oder kurz PCROP) ermöglicht einen zusätzlichen Schutz des ausführbaren Codes vor unbeabsichtigten internen Auslesen. Beispielsweise lassen sich mittels PCROP sicherheitskritische Daten, wie beispielsweise ein oder mehr als ein kryptographischer Schlüssel;
- Ein Schreibschutz (die sogenannte "Write Protection" oder kurz WRP) schützt einen Speicherbereich vor einem unerwünschten system-internen Schreibzugriff.

Die statischen Schutzmechanismen können beispielsweise ineinandergreifend implementiert werden und/oder mittels eines oder mehr als eines der folgenden dynamischen Schutzmechanismen ergänzt werden.
- eine MPU, die eingerichtet ist, mehrere Speicherbereiche voneinander zu isolieren;
- eine Firewall, die ist eingerichtet, einen sichere, z.B. abgekapselte, Umgebung (auch als Enklave bezeichnet), beispielsweise einen abgesicherten Speicherbereich bereitstellend, zu implementieren, in der besonders sicherheitskritische Daten, wie beispielsweise ein oder mehr als ein kryptographischer Schlüssel, gespeichert werden können und/oder kritische Funktionen auf diesen Daten isoliert ausgeführt werden können.

Die sogenannten Optionsbytes ("Option Bytes") ermöglichen es, einen oder mehr als einen statischen Absicherungsmechanismus des EGS 150 (z.B. Mikrocontrollers) zu konfigurieren. Beide Flash-Bänke des EGS 150 (z.B. Mikrocontrollers) weisen dafür jeweils 40 Optionsbytes auf. Wird der Inhalt der Optionsbytes redundant gespeichert, sind nur 20 Bytes pro Flash-Bank tatsächlich nutzbar. Der Großteil der Optionsbytes wird herkömmlich nicht verwendet.

Konkrete Adressen der einzelnen Register sind architekturabhängig und/oder anwendungsabhängig. Bezüglich der folgenden Register wird im weiteren Verlauf genauer auf die jeweiligen Absicherungsmechanismen eingegangen. Sei der Index x ∈ {1,2} die Flash-Bank 1 oder 2 repräsentierend. Ist im Folgenden der Index x weggelassen, soll diese Einstellung nur für Flash Bank 1 gelten.
- RDP (1 Byte) ermöglicht, den Schreibschutz zu konfigurieren;
- PCROPx_STRT und PCROPx_END (je 2 Bytes) ermöglichen, einen oder mehr als einen mittels PCROP abgesicherten Speicherbereich (auch als PCROP Bereich bezeichnet) zu definieren;
- PCROP_RDP (1 Bit) gibt an, ob der PCROP Bereich gelöscht wird, wenn das RDP Level reduziert wird;
- WRPxA_STRT, WRPxA_END sowie WRPxB_STRT, WRPxB_END (je 1 Byte) ermöglichen, jeweils zwei Bereiche pro Flash Bank anzugeben, welche von Schreibzugriffen geschützt werden.
- BOOT0 und BOOT1 Bits geben zusammen den Boot-Modus an.

Gemäß verschiedenen Ausführungsformen wird bereitgestellt, dass die Optionsbytes beim eingeschalteten RDP Level 2 nicht mehr verändert werden können, nicht einmal von der Applikation auf dem MCU. Die Firewall gehört nicht zwangsläufig zu den statischen Absicherungsmechanismen und wird dann auch nicht über die Optionsbytes konfiguriert bzw. eingeschaltet.

Gemäß verschiedenen Ausführungsformen ist das eingebettete System 150, z.B. dessen Prozessor 104, eingerichtet (z.B. als einen der ersten Schritte), die Konfiguration der (z.B. statischen) Absicherungsmechanismen zu verifizieren (auch als Sicherheitsüberprüfung bezeichnet). Die Sicherheitsüberprüfung kann aufweisen, zu ermitteln, ob die Optionbytes eine abgespeicherte Vorgabe (wie nachfolgend erläutert) erfüllen und optional (z.B. wenn die Vorgabe nicht erfüllt ist) die Optionbytes zu programmieren (z.B. gemäß der Vorgabe). Die Sicherheitsüberprüfung kann mittels einer sogenannten Sicherheitsfunktionseinheit ("Secure Engine Module") der MCU bereitgestellt werden. Die hierin beschriebenen Funktionen der Sicherheitsfunktionseinheit können optional auch von dem Forensik-Prozessor 204 bereitgestellt sein oder werden.

Gemäß verschiedenen Ausführungsformen ist das eingebettete System 150, z.B. dessen Prozessor 104, eingerichtet, nur dann den Bootvorgang (auch als Systemstart bezeichnet) fortzusetzen, wenn ermittelt wurde, dass die Optionbytes gemäß der Vorgabe konfiguriert sind. Dies hemmt das Risiko in dem Fall, dass es einem Angreifer gelingen sollte, die Konfiguration der Optionbytes (z.B. durch einen physikalischen Angriff) zu manipulieren, dass das gestartete eingebettete System 150 fehlerhaft ist.

Gemäß verschiedenen Ausführungsformen kann die Sicherheitsfunktionseinheit auch die Funktionalität zur Konfiguration der dynamischen Absicherungsmechanismen (z.B. Firewall) bereitstellen.

Der Leseschutz (RDP) ist eingerichtet, die Daten des eingebetteten Systems 150 vor einem system-externen Zugriff zu schützen. RDP ist beispielsweise eingerichtet, einen oder mehr als einen der folgenden Speicherbereiche vor einem system-externen Zugriff zu schützen: Flash-Speicher, Optionbytes, Backup-Register und SRAM2 (SRAM1 ist nicht notwendigerweise geschützt). Die Zugriffsrechte für die Applikation sowie die möglichen Zugriffe über eine Debug-Schnittstelle sind in der nachfolgenden Tabelle zusammengefasst.

| Area | Level | User application | | | Debug | | |
|---|---|---|---|---|---|---|---|
| | | Read | Write | Erase | Read | Write | Erase |
| Flash (main) memory | 1 | Yes | Yes | Yes | No | No | No |
| | 2 | Yes | Yes | Yes | N/A) | N/A | N/A |
| Option bytes | 1 | Yes | Yes | Yes | Yes | Yes | Yes |
| | 2 | Yes | No | No | N/A | N/A | N/A |

Es gibt 3 mögliche Einstellungen (auch als Level bezeichnet) für RDP:
- Level 0 legt fest, dass der RDP-Absicherungsmechanismus deaktiviert ist;
- Level 1 legt fest, dass der RDP-Absicherungsmechanismus aktiviert ist, kann aber deaktiviert werden, denn die Optionsbytes können immer noch umprogrammiert werden. Beim Deaktivieren wird allerdings der Inhalt des Speichers gelöscht;
- Level 2 legt fest, dass der RDP-Absicherungsmechanismus aktiviert ist und nicht mehr deaktiviert werden kann, denn nur lesende Zugriffe auf die Optionbytes sind aus der Anwendung (auch als Applikation bezeichnet) erlaubt während die Debug-Schnittstelle deaktiviert ist. In dem Fall sind alle statischen Absicherungsmechanismen unveränderbar.

Um RDP zu aktivieren, kann das RDP-Optionbyte entsprechend programmiert werden und danach ein Systemneustart durchgeführt werden. Ist der RDP auf Level 1 gestellt, kann dieser umprogrammiert, z.B. deaktiviert, werden. Dazu werden die Optionbytes umprogrammiert, z.B. mittels der Debug-Schnittstelle und/oder der Applikation. Beim Umprogrammieren des RDP von Level 1 auf RDP Level 0 wird automatisch der komplette Speicher gelöscht.

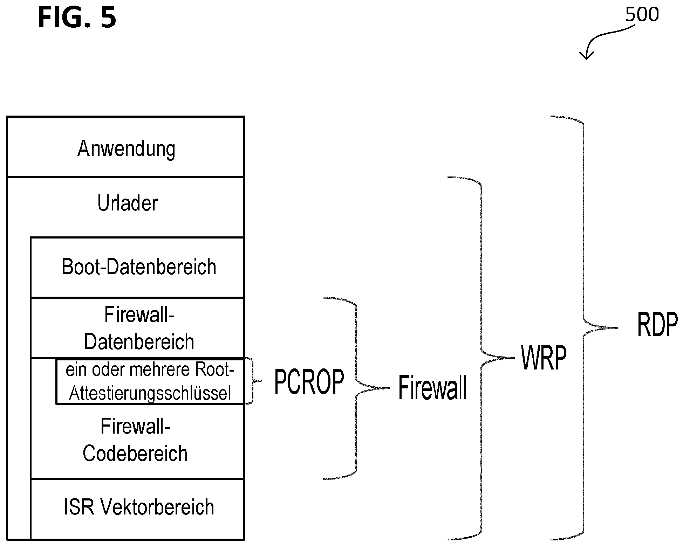

**Fig.5** veranschaulicht eine exemplarische Implementierung verschiedener Absicherungsmechanismen des Forensik-Moduls 250 gemäß verschiedenen Ausführungsformen 500 in einem schematischen Aufbaudiagramm (beispielsweise implementiert mittels des eingebetteten Systems gemäß den Ausführungsformen 100 oder 400), welche sich besonders einfach auf eine Vielzahl von eingebetteten Systemen (bzw. CPS) übertragen lässt.

Beim RDP auf Level 1 kann die Debug-Schnittstelle weiterhin genutzt werden. Dann kann der Fall eintreten, dass das eingebettete System 150 komplett neu programmiert werden kann. Nichtsdestotrotz gibt es Anwendungsfälle, bei denen auch im anwendungsnahen Betrieb ein RDP bei Level 1 infrage kommen kann, beispielsweise wenn der Zugriff auf den Flash-Speicher eingeschränkt ist. Mittels der Debug-Schnittstelle kann insbesondere die Firewall ausgehebelt werden. Also kann RDP bei Level 1 zusammen mit der Firewall nicht zwangsläufig zuverlässig sein bzw. kann die Firewall nicht zwangsläufig die Anforderungen an die Sicherheit bereitstellen. Weiterhin kann mit Hilfe der Debug-Schnittstelle die Boot-Konfiguration geändert werden, so dass das eigebettete System 150 aus SRAM1 oder aus dem ST-Boot-Loader startet. Dies eröffnet Angriffsfläche, wenn RDP Level 1 verwendet wird.

Unterstützt das eingebettete System 150, wie beispielsweise der STM32L4 Mikrocontroller, zusätzlich PCROP, kann damit ein zusätzlicher Schutz für einen oder mehr als einen kryptografischen Schlüssel des eingebetteten Systems 150 (z.B. einen Root-Attestierungsschlüssel, den Verschlüsselungsschlüssel 305s und/oder den Signierschlüssel 307s) bereitgestellt werden. Beispielsweise ist PCROP eingerichtet, einen oder mehr als einen Speicherbereich des nicht-flüchtigen Speichers als "nur ausführbar" zu konfigurieren (auch als NA-Speicherbereich bezeichnet). In diesem Fall werden Zugriffe, z.B. ein Speicherdirektzugriff (DMA), Debug-Zugriff, Schreibzugriff, Lesezugriff, und/oder Löschzugriff, auf diesen NA-Speicherbereich geblockt. Dieser Bereich kann nicht einmal über die Debug-Schnittstelle adressiert werden, außer zur Ausführung.

Gemäß verschiedenen Ausführungsformen wurde erkannt, dass der PCROP es ermöglicht, einen ansonsten schwer abzusichernden Schlüssel besser abzusichern. Dazu werden in dem NA-Speicherbereich Daten (auch als schlüsselimplementierende Daten bezeichnet) abgespeichert, z.B. einen ausführbaren Programmcode (z.B. eine Assembler-Funktion) oder andere Codesegmente aufweisend, welche derart eingerichtet sind, dass diese, wenn von dem Prozessor ausgeführt, den Prozessor dazu bringen, den Schlüssel (z.B. dessen Bytes) direkt auf eine gemäß den Daten vorgegebene Adresse eines anderen Speicherbereichs (auch als Schlüsselzielbereich bezeichnet) des eingebetteten Systems 150 zu schreiben (dann auch als PCROP-abgesicherter Schlüssel bezeichnet). Die schlüsselimplementierenden Daten können den Schlüssel selbstverständlich auch anders implementieren, z.B. wenn PCROP nicht unterstützt oder unerwünscht ist.

Beispielsweise können die schlüsselimplementierenden Daten aus dem RoT, der durch die Firewall geschützt ist, heraus, ausgeführt werden, um den Schlüssel zu schreiben. Nachdem der Schlüssel verwendet worden ist, wird der Schlüssel wieder aus dem Speicher, z.B. dem Schlüsselzielbereich, des eingebetteten Systems 150 gelöscht.

Der PCROP-abgesicherte Schlüssel erreicht, dass der Schlüssel die meiste Zeit nur als ausführbarer Code zur Verfügung steht und nur dann für einen lesenden Zugriff eines kryptographischen Prozesses zur Verfügung gestellt wird, wenn der Schlüssel wirklich gebraucht wird. Dies erschwert einen Angriff auf den Schlüssel.

Für diesen den PCROP-abgesicherter Schlüssel kann das PCROP_RDP Bit auf 1 gesetzt werden, damit der Schlüssel in diesem Bereich gelöscht wird. Ansonsten könnte der Angreifer RDP auf Level 0 setzen und gleichzeitig die Absicherung des NA-Speicherbereichs mittels RCROP deaktivieren. In diesem Fall würden die Speicherblöcke (z.B. Flashblöcke), die den Schlüssel (z.B. als schlüsselimplementierende Daten) aufweisen, nicht gelöscht und der Angreifer könnte den Schlüssel auslesen.

Gemäß verschiedenen Ausführungsformen kann der komplette für einen oder mehr als einen Schlüssel vorgesehene Speicherbereich mittels PCROP abgesichert werden. Dieser Speicherbereich kann wiederum hinter der Firewall (d.h. in deren Enklave) liegen und zwar im Code-Bereich ("Code Region").

Der Schreibschutz (WRP) kann eingerichtet sein, einen Speicherbereich vor einem unerwünschten (system-internen) Schreibzugriff zu schützen bzw. abzusichern. Ist RDP auf Level 2 gestellt, und somit die Debug-Schnittstelle deaktiviert, kann der WRP eine rein interne und vor allem auch statische Absicherungsmaßnahme bereitstellen. Beispielsweise können Optionbytes und somit WRP-Einstellung nicht verändert werden. Beispielsweise können Speicherbereiche im Flash mittels WRP für immer vor Veränderungen geschützt werden. Das macht WRP als Absicherungsmechanismus unflexibel, kann allerdings praktikabel sein für Schlüssel, insbesondere wenn diese für die Lebenszeit des eingebetteten Systems 150 nicht verändert werden sollen oder dürfen. Ist der RDP auf Level 1 gesetzt, z.B. in einer produktiven Umgebung, kann WRP auch rekonfiguriert werden, so dass die Möglichkeit besteht, den Absicherungsmechanismus (z.B. für ein Firmware-Update) vorübergehend zu deaktivieren. Wird ein Speicherbereich mittels PCROP abgesichert, kann ein zusätzlicher WRP-Absicherungsmechanismus redundant sein.

Während mittels RDP, PCROP und WRP ein statisch abgesicherter Speicherbereich (z.B. des Flash-Speichers) bereitgestellt werden kann (bzw. ein statischer Absicherungsmechanismus), kann mittels einer Firewall ein dynamisch abgesicherter Speicherbereich bereitgestellt werden (bzw. ein dynamischer Absicherungsmechanismus). Die Firewall erlaubt es, eine abgesicherte Enklave (z.B. ein oder mehr als ein Speicherbereich aufweisend) bereitzustellen, die beispielsweise eigenen Code, eigenen Adressbereich im Flash-Speicher und/oder einem eigenen Adressbereich im RAM-Speicher aufweist. Jeder Speicherbereich der Enklave wird von der restlichen Umgebung isoliert und mit sehr strikten Zugriffsmechanismen ausgestattet, welche beispielsweise mittels der Hardware des eingebetteten Systems 150 bereitgestellt werden.

Die Firewall kann beispielsweise als vertrauenswürdige Laufzeitumgebung implementiert werden. Wird die Firewall (z.B. anders als die statischen Absicherungsmechanismen) bei einem Systemreset (Systemneustart) deaktiviert, kann diese als Teil des Initialisierungsprozesses des eingebetteten Systems 150 aktiviert werden. Allerdings kann die Firewall beim Systemstart noch nicht aktiviert sein, was Raum für einen Angriff (z.B. Seitenkanalangriff) öffnet, der das Aktivieren der Firewall verhindern könnte, um diesen Absicherungsmechanismus auszuhebeln. Dies kann der Fall sein, wenn das eingebettete System kein Hardware-basiertes RoT, wie TPM, aufweist. In dem Fall kann es zweckmäßig sein, die Codesegmente (bzw. Instruktionen), welche die Firewall aktivieren, durch WRP zu schützen (inklusive der Interrupttabelle). Zusammen mit RDP bei Level 2 hemmt dies, dass dafür diese Codesegmente verändert werden, so dass die Integrität des Forensik-Moduls 250 bzw. der TEE garantiert werden kann.

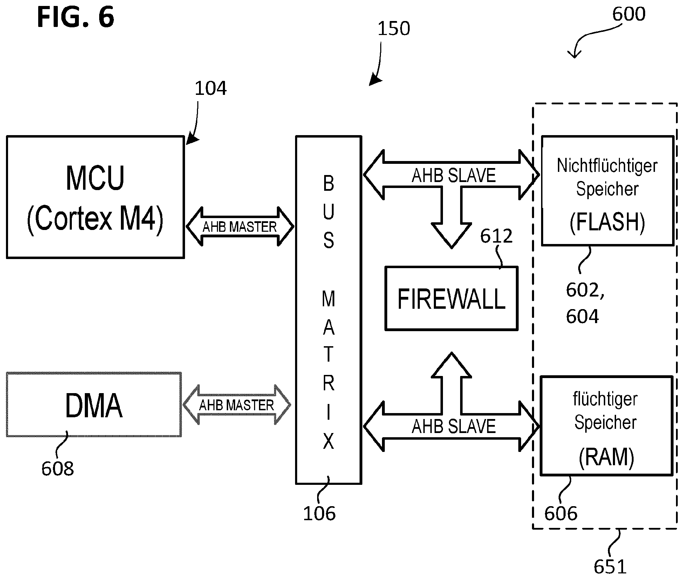

**Fig.6** veranschaulicht eine exemplarische Implementierung der Firewall 612 des Forensik-Moduls 250 gemäß verschiedenen Ausführungsformen 600 in einem schematischen Aufbaudiagramm der MCU als Teil des EGS 150 (z.B. gemäß den Ausführungsformen 400 eingerichtet), welche sich insbesondere auf eine Vielzahl von anderen eingebetteten Systemen (bzw. CPS) übertragen lässt.

Das eingebettete System 150, z.B. dessen Speichervorrichtung 102, kann eine zumindest einen mittels der Firewall abgesicherten Speicherbereich 651 (auch als FW-Speicherbereich 651 bezeichnet) aufweisen. Der zumindest eine FW-Speicherbereich 651 kann einen oder mehr als einen (z.B. mehr als zwei) der folgenden Speicherbereiche aufweisen: einen ersten Flash-Speicherbereich 602, in dem die Firmware gespeichert ist, einen zweiten Flash-Speicherbereich 604, in dem Daten gespeichert sind, einen RAM-Speicherbereich 606, der exklusiven oder geteilt sein kann. Das eingebettete System 150, z.B. dessen Speichervorrichtung 102, kann ferner einen DMA-Controller 608 (auch als DMA-Steuervorrichtung bezeichnet) aufweisen, der beispielsweise eingerichtet sein kann, einen Speicherzugriff (entweder auf den Hauptspeicher selbst oder auf eine Peripheriekomponente) durchzuführen unabhängig von dem Prozessor 104 (z.B. der Cortex-M4 CPU), z.B. ohne dabei den Prozessor 104 in Anspruch zu nehmen.

Der zumindest eine FW-Speicherbereich 651 kann mit Hilfe einer Startadresse und der Länge jedes Speicherbereichs angegeben sein. Beispielsweise wird bei den Flash-Speicherbereichen eine Granularität von 256 Bytes und/oder beim RAM Segment eine Granularität von 64 Bytes erzwungen.

Die Firewall 612 kann eingerichtet sein, alle Speicherzugriffe auf den zumindest einen FW-Speicherbereich 651 (z.B. auf Flash und RAM), die beispielsweise über die Kommunikationsinfrastruktur 106, z.B. deren Advanced High-performance"-Bus (AHB-Bus), erfolgen, zu ermitteln (z.B. zu überwachen) und/oder, für jeden der Speicherzugriffe, zu ermitteln, ob der Speicherzugriffe zulässig (auch als legal bezeichnet) ist, z.B. wenn dieser dazu privilegiert ist, oder unzulässig (auch als illegal bezeichnet), z.B. wenn dieser dazu nicht privilegiert (auch als unprivilegiert bezeichnet) ist. Dazu kann die Firewall beispielsweise eingerichtet sein, zu ermitteln, wovon der Speicherzugriff ausgeht und darauf basierend ermitteln, ob dieser Speicherzugriff privilegiert ist. Beispielsweise kann eine Beglaubigungssequenz, die später noch genauer beschrieben wird, privilegiert sein, auf den FW-Speicherbereich zuzugreifen (auch als Durchdringen der Firewall bezeichnet).

Die Firewall 612 kann beispielsweise eingerichtet sein, einen unzulässigen Speicherzugriff auf den zumindest einen FW-Speicherbereich 651 (z.B. von außerhalb des geschützten zumindest einen FW-Speicherbereichs 651) zu blockieren (auch als Blockadeantwort bezeichnet). Alternativ oder zusätzlich kann die Firewall 612 (dann auch als geschlossene Firewall bezeichnet) beispielsweise eingerichtet sein, in Antwort auf den unzulässigen Speicherzugriff auf den zumindest einen FW-Speicherbereich 651, das eingebettete System 150 zurückzusetzen (auch als Resetantwort bezeichnet). Die Resetantwort und/oder die Blockadeantwort können beispielsweise mittels Hardware implementiert sein. Die Resetantwort kann beispielsweise aufweisen, dass die Firewall keinen Interrupt auslöst, sondern das eingebettete System 150 direkt zurücksetzt.

Die Firewall 612 kann eingerichtet sein, einen Speicherzugriff (z.B. nur dann) als zulässig zu ermitteln, wenn dieser mittels einer dafür eingerichteten Schnittstelle, das sogenannte Aufrufgate (auch als Call-Gate bezeichnet), erfolgt. Beispielsweise kann das Call-Gate eingerichtet sein, die Berechtigungsstufe des Speicherzugriffs zu erhöhen, wenn dieser ein vordefiniertes Kriterium erfüllt. Das Call Gate kann beispielsweise als Prozessorfunktion des Forensik-Prozessors 204 implementiert werden. Das Call Gate kann eingerichtet sein, eine dynamische Änderung der Berechtigungsstufe des Forensik-Prozessors 204 zu bewirken, wenn eine bestimmte Anweisung, die das Kriterium erfüllt, verwendet wird. Auf diese Weise können Code und Programme mit weniger Berechtigungen vorübergehend so arbeiten, als wären sie Programme mit höheren Berechtigungen.

Mittels des Call-Gates können beispielsweise in der Enklave isolierte Funktionen aufgerufen werden. Damit wird erreicht, dass die Kontrolle an den Code hinter der Firewall übertragen wird.

Auf der logischen Ebene kann das Call-Gate mittels einer Funktion implementiert werden, welche die Eingabeparameter für die Enklave hinter der Firewall 612 erhält, und eine Rückantwort liefert. Diese Eingabeparameter können dabei z.B. eine spezielle Funktion hinter der Firewall adressieren und die Parameter für diese Funktion liefern. Auf der technischen Ebene kann das Call-Gate korrespondierend zu der Firewall 612 eingerichtet sein bzw. entsprechend konfiguriert werden.

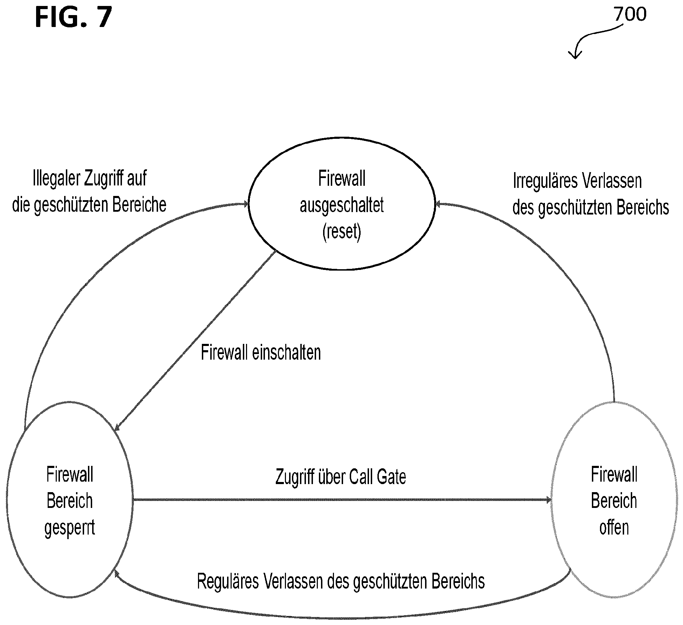

**Fig.7** veranschaulicht ein Zustandsdiagramm einer Firewall 612 (beispielsweise gemäß den Ausführungsformen 600 eingerichtet) gemäß verschiedenen Ausführungsformen 700 in einem schematischen Ablaufdiagramm, welche sich insbesondere auf eine Vielzahl von anderen eingebetteten Systemen (bzw. CPS) übertragen lässt.

Durch einen Aufruf des Call-Gates kann der Code hinter der Firewall ausgeführt werden. Beim Passieren des Call-Gates wird die Firewall geöffnet, so dass diese durchdrungen werden kann. In diesem Zustand wird der Code, der in dem zumindest einen FW-Speicherbereich 651 gespeichert ist, ganz normal ausgeführt, beispielsweise als ob es gar keine Firewall gebe.

Die Firewall kann beispielsweise eingerichtet sein, als Antwort auf einen Sprung von innerhalb des zumindest einen FW-Speicherbereichs 651 zu einer Adresse außerhalb des zumindest einen FW-Speicherbereichs 651 ("irreguläres Verlassen des geschützten Bereichs") entweder die Resetantwort durchzuführen oder die Firewall zu schließen. Die Entscheidung kann die Firewall anhand einer Angabe (auch als Flag bezeichnet) in einem vordefinierten Register treffen, welcher in dem zumindest einen FW-Speicherbereich 651 liegt und angepasst werden kann (beispielsweise Firewall Pre Arm Flag im Register FW_CR). Das ist ein zusätzlicher Absicherungsmechanismus, um solche Sprünge zu vermeiden. Vor einem regulären Verlassen des Codes hinter der Firewall ("reguläres Verlassen des geschützten Bereichs") wird dieser Flag gesetzt und dann wird die Kontrolle an die Applikation übergeben (über einen normalen Rücksprung aus der Funktion). Falls dieser Flag nicht gesetzt ist und der Code den geschützten Bereich verlässt, wird dies von der Firewall als irreguläres Verhalten interpretiert und die Firewall setzt das eingebettete System zurück. Zweckmäßigerweise können für diesen Absicherungsmechanismus auch die Interrupts ausgeschaltet werden.

Mittels der Firewall kann ein oder mehr als ein Algorithmus, mittels welchem ein kryptographischer Prozess implementiert wird, und/oder ein oder mehr als ein kryptographischer Schlüssel abgesichert werden. Alternativ oder zusätzlich können sicherheitskritische Abläufe, wie beispielsweise ein Firmware-Update (auch als Firmware-Aktualisierung bezeichnet) abgesichert werden. Ein so abgesicherter Algorithmus wird dabei isoliert ausgeführt und nur das Ergebnis wird zurückgegeben. Dabei wird beispielsweise erreicht, dass jegliche Zwischenergebnisse abgesichert hinter der Firewall bleiben, was für kryptographische Funktionen von Bedeutung sein kann. Ferner wird damit auf einer technischen Ebene abgesichert, dass nur dedizierte Funktionen überhaupt direkt auf einen abgesicherten Schlüssel zugreifen können.

In verschiedenen Ausführungsformen ist die Firewall eingerichtet, alle Zugriffe auf den FW-Speicherbereich 651 (z.B. von der MCU und/oder DMA) zu überprüfen (z.B. zu blockieren und/oder, z.B. insofern zulässig, freizugeben).

Nachfolgend werden exemplarische Implementierungen der forensischen Extraktion 750 und deren Komponenten erläutert.

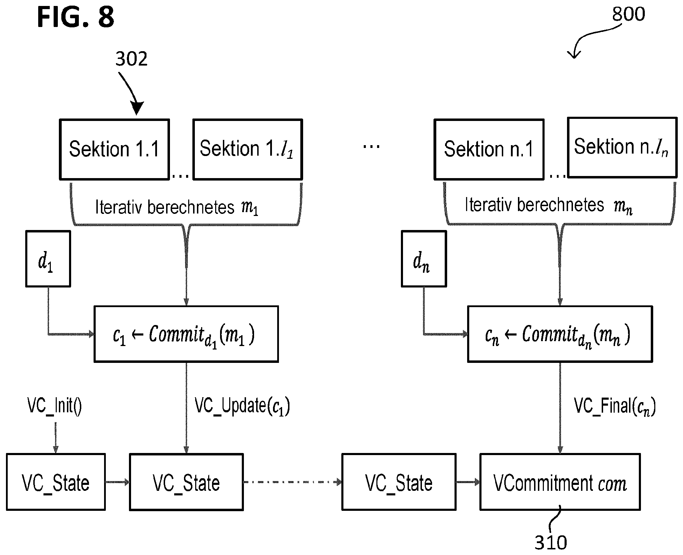

**Fig.8** veranschaulicht das Ermitteln 303 des Kommitments 310 (beispielsweise gemäß den Ausführungsformen 300 eingerichtet) mittels eines kryptografischen Vektor-Kommitment-Prozesses (VC-Prozess) gemäß verschiedenen Ausführungsformen 800 in einem schematischen Ablaufdiagramm. Der VC-Prozess 304 bezeichnet ein speziellen Kommitment-Prozesses, welches es ermöglicht, dedizierte Teile des extrahierten Systemzustandes individuell offen zu legen ohne dabei deren Authentizität zu verletzen.

Anschaulich stellt ein Kommitment-Prozess einer Partei bereit, sich bindend auf eine Information (z.B. die Zustandsdaten) festzulegen ohne die Information preiszugeben zu müssen (auch als Geheimhaltungseigenschaft bezeichnet). Die Information bleibt somit vorerst geheim. Ergänzend dazu stellt der Kommitment-Prozess bereit, zu einem späteren Zeitpunkt die Information aufzudecken zu können und dabei sicherzustellen, dass die Information unverändert bleibt (auch als Bindungseigenschaft bezeichnet), z.B. nicht modifiziert werden kann. Dazu wird mittels kryptographischer Maßnahmen ein Nachweis (das sogenannte Kommitment) bereitgestellt, welcher die Verifikation der aufgedeckten Information ermöglicht.

Ein Kommitment-Prozess kann zwei Phasen (auch als erste Phase und als zweite Phase bezeichnet) aufweisen, von denen jede Phase beispielsweise mittels eines individuellen Algorithmus implementiert sein kann.

In der ersten Phase (auch als Bindungsphase bezeichnet) kann das Ermitteln des Kommitments 310 erfolgen, beispielsweise mittels eines ersten Algorithmus (auch als Kommitment-Algorithmus oder Commit bezeichnet). Der Kommitment-Algorithmus kann eingerichtet sein, basierend auf Eingangsdaten m (z.B. einer Nachricht oder den Zustandsdaten) als Ausgangsdaten das Kommitment c und optional einen Öffnungswert d auszugeben. Als Relation ausgedrückt, kann dies geschrieben werden als Commit(m) → (c, d). Der Öffnungswert d wird geheim gehalten und das Kommitment c wird veröffentlicht. Der Öffnungswert d kann beispielsweise eine Zufallszahl oder andere zufällige Zeichenkette sein, beispielsweise mittels eines Zufallsgenerators (auch als RAND bezeichnet) ermittelt, und/oder auch mittels eines anderen Mechanismus ermittelt bzw. vorgegeben werden. Beispielsweise kann der Öffnungswert als Schlüssel verwendet werden, welcher den Kommitment-Prozess parametrisiert und so das ausgegebene Kommitment c (z.B. unabhängig von den Eingabedaten m) beeinflusst.

In der zweiten Phase (auch als Öffnungsphase bezeichnet) kann basierend auf dem Kommitment c ermittelt werden, ob eine Behauptung m' (anschaulich die behaupteten Eingangsdaten) den ursprünglichen Eingangsdaten m entspricht basieren auf dem Kommitment c und dem Öffnungswert d (auch als Verifizieren bezeichnet), beispielsweise mittels eines zweiten Algorithmus (auch als Verifikations-Algorithmus oder ComVrfy bezeichnet). Der Verifikations-Algorithmus kann eingerichtet sein, basierend auf der Behauptung m' als Eingangsdaten und dem Öffnungswert d zu ermitteln, ob m' zu dem Kommitment c passt (z.B. ohne m zu kennen). Als Relation ausgedrückt, kann dies geschrieben werden als ComVrfy(c, d, m) → b, wobei m = m' wenn b = 1 (oder wenn b ein anderes Kriterium erfüllt). Die Ausgabe b kann beispielsweise nur den Wert 1 oder 0 annehmen.

Eine wenig komplexe Implementierung des Kommitment-Prozesses kann mittels einer kryptographischen Hashfunktion H als Teil des Kommitment-Algorithmus erfolgen. Der Kommitment-Algorithmus generiert eine zufällige Zahl d und berechnet c = H(d, m). Der zufällige Wert d ist dann der Öffnungswert und wird erst geheim gehalten. Die Hashfunktion H kann derart eingerichtet sein, dass der Hashwert bzw. das Kommitment c durch die zufällige Wahl von d nichts über die Eingangsdaten m verraten. Sobald d bekannt ist, kann für eine beliebige Behauptung m' wiederum verifiziert werden, ob c = H(d, m') ist. Ist c = H(d, m') impliziert dies, dass m' = m ist.

Die Bindungseigenschaft kann beispielsweise begünstig werden, wenn die Hashfunktion H kollisionsresistent ist, z.B. schwach kollisionsresistent, vorzugsweise stark kollisionsresistent oder weiter vorzugsweise perfekt kollisionsresistent. Beispielsweise kann die Hashfunktion H eine kollisionsresistente Einwegfunktion sein und/oder aus der Klasse der sicheren Hashalgorithmen sein.

Der VC-Prozess 304 ist ein spezieller Kommitment-Prozess, bei dem die Eingangsdaten m mehrkomponentig sind, z.B. n Komponenten aufweisend. Dies lässt sich beispielsweise in der leicht verständlichen Vektorschreibweise notieren, wobei verstanden werden kann, dass auch jede andere Notation der mehrkomponentigen Eingangsdaten verwendet werden kann. Demgemäß können die bezüglich der Vektorschreibweise erläuterten Aspekte in Analogie für jede andere Notation der mehrkomponentigen Eingangsdaten gelten.

In Vektorschreibweise lassen sich die mehrkomponentigen Eingangsdaten m schreiben als m =(m₁,... ,mₙ). Das Besondere an dem VC-Prozess 304 ist, dass nicht notwendigerweise der komplette Vektor m aufgedeckt werden muss, sondern auch einzelne Komponente mₖ, mit k ∈[1, n] davon aufdecken werden können, ohne Bindungseigenschaft zu verletzen. Der Kommitment-Algorithmus des VC-Prozesses kann dann geschrieben werden als Commit(m) → (c, d).

Die Öffnungsphase des VC-Prozess 304 kann aufweisen, dass zunächst (anschaulich als Zwischenschritt) ein oder mehr als ein aneinander gebundenes Paar aus I ∈ {1, n} und Öffnungswert d_{I} ermittelt wird, z.B. mittels eines dritten Algorithmus (auch als Partial-Close-Algorithmus oder PartClose bezeichnet). Beispielsweise kann der Partial-Close-Algorithmus eingerichtet sein, basierend auf dem Öffnungswert d, den Eingangsdaten m und dem Wert I∈[1, n] den Öffnungswert dₖ zu ermitteln. Als Relation ausgedrückt, kann dies geschrieben werden als
PartClose(d,(m₁ ,... ,mₙ),I) → (d_{I} ,m_{I}),
mit m_{I} = (m'₁ ,... ,m'ₙ),
wobei ∀i ∈ I : m'i = mᵢ, ∀i∉I:m'i = 1.

Mit diesem Partial-Close-Algorithmus können Öffnungswerte d_{I} für eine Indexmenge I ⊆ [n] berechnet werden.

Jeder Öffnungswert dᵢ kann beispielsweise vorab mittels eines Zufallsgenerators (auch als RAND bezeichnet) ermittelt werden.

Der zugehörige Verifikations-Algorithmus lässt sich dann schreiben als ComVrfy(c ,d_{I} ,m_{I}) → b. Dieser Verifikations-Algorithmus verifiziert die partiell geöffneten Daten gegen das Kommitment c.

Eine wenig komplexe Implementierung des VC-Prozess 304 kann mittels einer kryptographischen Hashfunktion H als Teil des Kommitment-Algorithmus erfolgen. Der Kommitment-Algorithmus generiert für jedes i (i=1, ..., i=n) ein erstes Kommitment (auch als Zwischenkommitment cᵢ oder Kommitmentkomponente bezeichnet) cᵢ = H(dᵢ, mᵢ). Die zufälligen Werte dᵢ bilden zusammen dann der Öffnungswert d, der geheim gehalten wird. Die Zwischenkommitment werden zu einem Hashwert bzw. zweiten Kommitment c (auch als finales Kommitment bezeichnet) zusammengeführt, beispielsweise gemäß der folgenden Relation: c = H(c₁,..., cₙ).

Der Partial-Close-Algorithmus ist eingerichtet, ein dᵢ für jedes i∈I aufzudecken, während für die restlichen i die cᵢ berechnet und als Teil von d_{I} aufgedeckt werden. Somit kann bei der Verifikation aus den Zwischenkommitments cᵢ und dem Paar (dᵢ, mᵢ) das finale Kommitment c rekonstruiert bzw. verifiziert werden.

Die wenig komplexe Implementierung des VC-Prozess 304 mittels einer kryptographischen Hashfunktion H erreicht ferner, dass die Extraktion 350 in einem Durchlauf und mit möglichst wenig Speicherbedarf erfolgen kann. Die Hashfunktion kann beispielsweise mit SHA-256 aus der SHA-2 Familie instanziiert werden (SHA bezeichnet einen sicheren Hash-Algorithmus). Die Daten werden dann in Blöcken von 64-Byte verarbeitet, was dem internen Zustand von SHA-256 entspricht. Hinsichtlich der exemplarischen Wahl von SHA-256 kann verstanden werden, dass das diesbezüglich hierin Beschriebene in Analogie für jede andere SHA gelten kann.

Nachfolgend wird detaillierter auf eine andere exemplarische Implementierung eingegangen. Als Startpunkt der Extraktion 350 dient eine konfigurierbare Angabe darüber, welche Speicherbereiche des eingebetteten Systems 150 ausgelesen werden sollen. Logisch gesehen lässt sich diese Angabe als Liste von Tupeln notieren, von denen jedes Tupel eine Speicheradresse des entsprechenden Speicherbereiches und die Länge des entsprechenden Speicherbereiches angibt. Die Speicherbereiche werden optional gruppiert (auch als Speichergruppierung bezeichnet), was je nach Anwendungsfall konfigurierbar ist. Diese Speichergruppierung kann für die spätere Öffnung der Daten relevant sein und korrespondiert zu den einzelnen Komponenten mₖ (auch als Datensätze bezeichnet) der Eingangsdaten m für den VC-Prozess. Dies bedingt, dass entweder alle Speicherbereiche einer Gruppe (auch als Speichergruppe bezeichnet) oder kein Speicherbereiche der Gruppe aufgedeckt werden. Je größer die Anzahl n der Speichergruppen ist, desto feiner ist das Raster und destoselektiver können Informationen aufgedeckt werden.

Jeder Abschnitt (auch als Gruppenabschnitt oder "Section" bezeichnet) einer Speichergruppe weist einen Speicherbereich oder mehrere (z.B. zusammenhängende) Speicherbereiche auf, die beispielsweise auch einen gewissen logischen Zusammenhang zueinander aufweisen können. Die Registerdatei (z.B. der CPU) bildet beispielsweise eine eigene Speichergruppe.

Die Speichergruppierung partitioniert anschaulich den Systemzustand in Speichergruppen, von denen jede Speichergruppe einen oder mehr als einen Gruppenabschnitt aufweist und/oder zu einem der Datensätze mₖ korrespondiert. In der exemplarischen Implementierung der Speichergruppierung wird eine Anzahl von n Speichergruppen, von denen jede Speichergruppe eine individuelle Anzahl von lₖ Gruppenabschnitten aufweist, gebildet. Die k-te Speichergruppe weist beispielsweise lₖ Gruppenabschnitte auf, wobei beispielsweise lₖ > 1 und/oder lₖ ≠ lₖ₊₁ sein kann, aber nicht notwendigerweise sein muss.

Sobald der i-te Datensatz mᵢ (z.B. korrespondierend zu der i-ten Speichergruppe) verarbeitet ist, erfolgt die Berechnung des i-ten Zwischenkommitments cᵢ (beispielsweise mittels der Hashfunktion), welches im Vektor-Kommitment-Status (VC_State) verarbeitet wird. Wird dazu beispielsweise SHA-256 verwendet, sind lediglich weitere 64 Bytes notwendig. Eine solche Instanziierung des VC-Prozesses benötigt lediglich 128 Bytes. Zusätzlich kann ein konstanter Overhead für die konkrete Implementierung der SHA-256-Funktion bereitgestellt sein.

Beispielsweise wird ein initialer Vektor-Kommitment-Status bereitgestellt (z.B. mittels einer Funktion V_Init) und basierend auf dem zuerst ermittelten Zwischenkommitment c₁ aktualisiert (z.B. mittels einer Funktion VC_Update). Der so aktualisierte Vektor-Kommitment-Status kann iterativ aktualisiert werden basierend auf jedem einzelnen ermittelten Zwischenkommitment cᵢ. Das finale Kommitment c wird ermittelt basierend auf dem zuletzt aktualisieren Vektor-Kommitment-Status und dem zuletzt ermittelten Zwischenkommitment cₙ (z.B. mittels einer Funktion VC_Final).

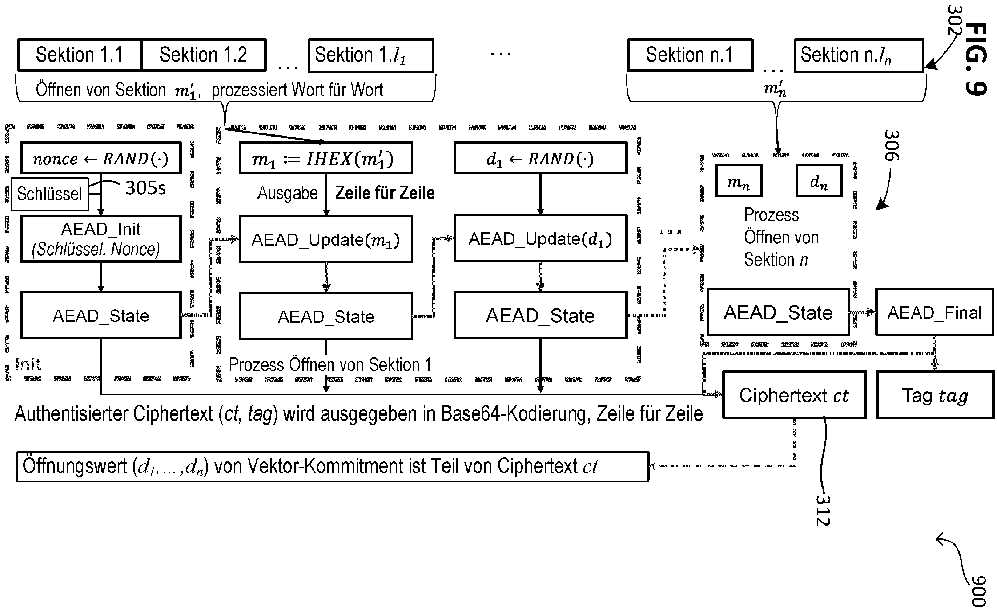

**Fig.9** veranschaulicht die Verschlüsselung 305 gemäß verschiedenen Ausführungsformen 900 in einem schematischen Ablaufdiagramm, welches beispielsweise gemäß den Ausführungsformen 300 eingerichtet sein kann.

Die Verschlüsselung 305 kann, muss aber nicht notwendigerweise, parallel ablaufen zu dem Ermitteln des Kommitments 310 (z.B. gemäß Ausführungsformen 800). Dies bietet sich insbesondere dann an, wenn beide, die Verschlüsselung 305 und das Ermitteln des Kommitments 310, dieselben Datensätze mₖ verarbeiten bzw. auf derselben Speichergruppierung basieren.

Optional kann jeder einzelne Gruppenabschnitt derart kodiert sein oder werden, dass dieser ein eigenständiger und gültiger Block (z.B. IHEX-Block) ist, beispielsweise abgesehen von der fehlenden Dateiende-Angabe ("End-of-File-Record"). Beispielsweise startet jeder Block (z.B. IHEX-Block) mit einer erweiterten Adresse, so dass alle Informationen von mᵢ eindeutig zu den jeweiligen Speicheradressen zugeordnet werden können, z.B. ohne andere Blöcke (z.B. IHEX-Blöcke) sehen/kennen zu müssen. Dieses Vorgehen erleichtert es, beim späteren Entschlüsseln der Zustandsdaten diese zu einem kompletten (z.B. in IHEX) kodierten Zustand zusammenzuführen.

Die Verschlüsselung 305 bzw. der Verschlüsselungsprozess 306 ist eingerichtet, den Systemzustand in verschlüsselter Form 312 (auch als Kryptogramm 312 bezeichnet) auszugeben. Zusammen mit den Zustandsdaten 302 können optional die mehreren ermittelten Öffnungswerte d = (d₁, d₂,... , dₙ) des VC-Prozesses verschlüsselt werden, so dass diese mittels des Kryptogramms 312 vertraulich übertragen werden können. Dann kann die Verschlüsselung 305 aufweisen, die Zustandsdaten 302 und die mehreren Öffnungswerte in das Kryptogramm 312 zu verschlüsseln.

Wie dargestellt, kann die Verschlüsselung 305 mittels des Verschlüsselungsprozesses 306 erfolgen. Der Verschlüsselungsprozess 306 bzw. die Verschlüsselung 305 können in einer exemplarischen Implementierung eine Authentifizierte Verschlüsselung mit Assoziierten Daten (AEAD) verwenden, beispielsweise, den sogenannten Galois/Counter-Modus (GCM) mit AES (fortschrittlicher Verschlüsselungsstandard - "Advanced Encryption Standard") als Blockchiffre. Dies sichert gleichzeitig auch die Authentizität der Zustandsdaten und schützt deren Integrität. Verifiziert kann die Authentizität beispielsweise vom Hersteller, der Zugriff auf den geräte-spezifischen (z.B. symmetrischen) Verschlüsselungsschlüssel 305s hat. Für die öffentliche Authentizitätsprüfung, beispielsweise durch den Ermittler oder ein Gericht, kann optional eine Signatur über die ausgelesenen Zustandsdaten berechnet werden (auch als Signieren 307 bezeichnet), wie später noch genauer erläutert wird.

Gemäß verschiedenen Ausführungsformen kann der Verschlüsselungsschlüssel 305s ein systemspezifischer (z.B. symmetrischer) Schlüssel sein, beispielsweise ein dem eingebetteten System 150 eindeutig zugeordneter und/oder darin abgespeicherter Schlüssel. Dies kann bereitgestellt werden, indem der Verschlüsselungsschlüssel 305s basierend auf einem Hauptschlüssel (z.B. des Herstellers) und der Identität des eingebetteten Systems 150 ermittelt wird, beispielsweise mittels einer Schlüsselableitungsfunktion ("Key Derivation Function" oder kurz KDF).

Eine exemplarische Implementierung des Verschlüsselungsprozesses 306 kann mittels eines (z.B. symmetrischen) Verschlüsselungsalgorithmus erfolgen. Der Verschlüsselungsalgorithmus kann beispielsweise eingerichtet sein, die Zustandsdaten 302 blockweise zu verarbeiten, wobei die Zustandsdaten 302 optional Byte-weise oder sogar Bit-weise eingegeben werden können. Wenn ein kompletter Block gegeben ist, wird dieser verarbeitet und das Ergebnis wird zurückgegeben (z.B. mittels der Funktion AEAD _Update). Ähnlich und parallel dazu wird der Authentifizierungstag (auch als "Tag" bezeichnet) berechnet, wobei initial die assoziierten Daten in die Berechnung eingehen und keine Zwischenergebnisse ausgegeben werden müssen. Die assoziierten Daten weisen in diesem Fall eine sogenannte (beispielsweise zufälligen) Momentinformation (auch als "Nonce" oder Einweginformation bezeichnet) auf, die beim Start der Extraktion 350 ermittelt wird, beispielsweise mittels eines Zufallsgenerators (auch als RAND bezeichnet).

Beispielsweise wird ein initialer AEAD-Status (AEAD_State) bereitgestellt (z.B. mittels einer AEAD_Init), optional basierend auf der Nonce und/oder dem Verschlüsselungsschlüssel 305s. Dieser initialer AEAD-Status wird basierend auf dem zuerst verschlüsselten Datensatz m₁ aktualisiert (z.B. mittels einer AEAD _Update) und nachfolgend mit dem zuerst verschlüsselten Öffnungswert d₁ aktualisiert (z.B. mittels einer AEAD_Update). Der so aktualisierte AEAD-Status kann iterativ aktualisiert werden basierend auf jedem Tupel (mᵢ, dᵢ). Der finale AEAD-Status (AEAD _Final) wird ermittelt basierend auf dem zuletzt aktualisieren AEAD-Status. Basierend auf dem finalen AEAD-Status kann das Kryptogramm 312 und/oder der Tag ermittelt werden.

Beispielsweise ist der Verschlüsselungsprozess 306 eingerichtet, eine Anzahl von Bytes, die der doppelten Blocklänge entspricht (32 Bytes im Falle von AES), zu benötigen. Ein konstanter Overhead, der von der genauen Implementierung des GCM-Modus abhängen kann, kann optional zusätzlich bereitgestellt werden. Zusätzlich kommt, insofern verwendet, der Speicherbedarf für die Kodierung (z.B. IHEX-Kodierung) hinzu. Im Fall einer IHEX-Kodierung werden die Daten in Zeilen konfigurierbarer Länge kodiert. Beispielsweise können pro Zeile 32 Bytes kodiert werden, was in 11 + 64 Bytes pro Zeile resultiert. Wie bei GCM, kann auch hier zusätzlich ein konstanter Overhead durch die konkrete Implementierung der IHEX-Kodierung bereitgestellt werden.

Gemäß verschiedenen Ausführungsformen wird der Systemzustand bzw. werden die Zustandsdaten in dem für das Forensik-Modul 250 reservierten Speicherbereich des eingebetteten Systems 150 gehalten, was hemmt, dass Teile des Systemzustands vom eingebetteten System 150 überschrieben werden.

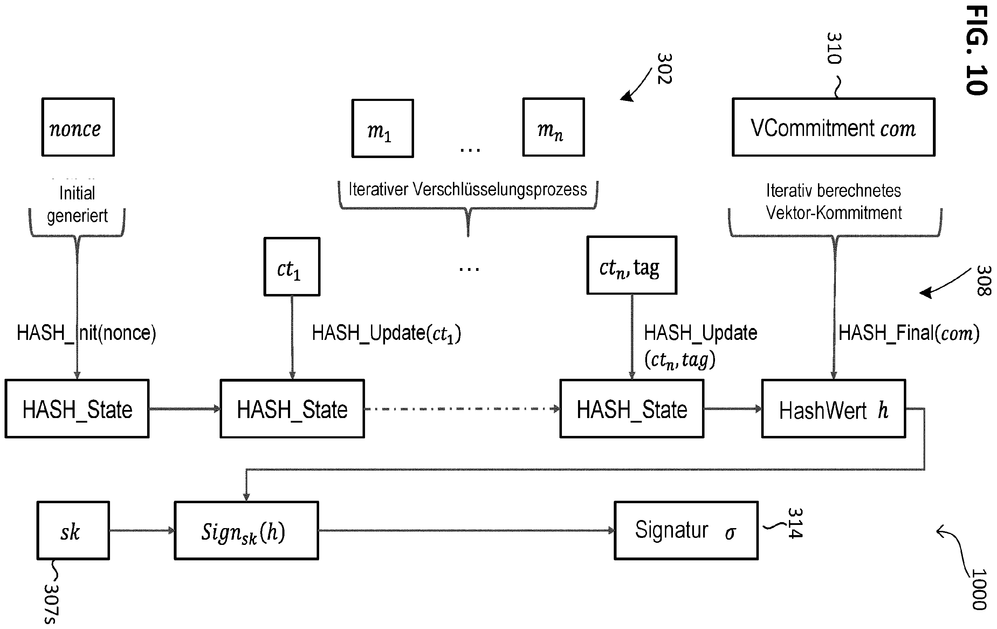

**Fig.10** veranschaulicht das Signieren 307 gemäß verschiedenen Ausführungsformen 1000 in einem schematischen Ablaufdiagramm, welches beispielsweise gemäß den Ausführungsformen 300 eingerichtet sein kann. Optional kann das Signieren 307 parallel zur Verschlüsselung 305 und/oder parallel zu dem Ermitteln 303 des Kommitments 312 ablaufen.

Anders als bei der Verschlüsselung 305 (z.B. mittels AEAD) kann die Signatur 314 öffentlich verifiziert werden, so dass diese beispielsweise vom Ermittler und/oder vor Gericht verwendet werden kann. Gemäß verschiedenen Ausführungsformen ist das Signieren 307 derart eingerichtet, dass die Signatur 314 die Authentifizierung der extrahierten Zustandsdaten 302 ermöglicht, beispielsweise wenn diese öffentlich verifiziert werden, so dass nicht die kompletten Zustandsdaten 302 geöffnet werden müssen. Optional kann, z.B. im Gegensatz zu dem VC-Prozess 304, das Signieren 307 auf verschlüsselten und/oder komprimierten Zustandsdaten 302 (z.B. einem darauf basierenden Kryptogramm ctᵢ) basieren.

Eine exemplarische Implementierung des Signaturprozesses 308 kann aufweisen, dass die Zustandsdaten 302 (z.B. mittels einer Hashfunktion H) zunächst komprimiert (auch als Komprimieren bezeichnet) und basierend auf dem Ergebnis des Komprimierens erst die Signatur 314 ermittelt wird. Beispielsweise kann eine SHA-256 Hashfunktion mit dem 64-Byte großen internen Zustand verwendet werden zum Komprimieren. Initial geht optional die vorgegebene Nonce in den Signaturprozesses 308 ein. Dann geht jedes Kryptogramm ctᵢ (z.B. mittels AEAD gebildete Ciphertext) als Block in die Berechnung des Signaturprozesses 308 ein (beispielsweise inklusive des final berechneten Tags). Zum Schluss wird das ermittelte Kommitment 310 verarbeitet. Der daraus berechnete Hashwert wird abschließend signiert (beispielsweise mittels einer Funktion "Sign"). Zu diesem Zeitpunkt sind alle Daten bereits verarbeitet, so dass der innere Zustand für das eigentliche Signieren 307 nicht zum Speicherbedarf der Extraktion 350 hinzu gerechnet werden muss.

Beispielsweise wird ein initialer Hash-Status (HASH_State) bereitgestellt (z.B. mittels einer Funktion HASH _Init), optional basierend auf der Nonce. Der initiale Hash-Status wird basierend auf einem zuerst ermittelten Kryptogramm ct₁ aktualisiert (z.B. mittels einer Funktion HASH_Update), welches auf dem ersten Datensatz m₁ basiert. Der so aktualisierte Hash-Status kann iterativ aktualisiert werden basierend auf jedem ermittelten Kryptogramm ctᵢ. Der finale Hashwert h (HashValue) wird ermittelt basierend auf dem zuletzt aktualisieren Hash-Status und dem Kommitment 310. Die Signatur 314 wird ermittelt basierend auf dem finalen Hashwert h und dem Signaturschlüssel 307s.

Um die Authentizität und die öffentliche Verifizierbarkeit der Zustandsdaten 302 zu begünstigen, kann beispielsweise ein Schlüsselpaar (z.B. aus privatem Signaturschlüssel 307s und öffentlichen Schlüssel) bereitgestellt sein für das Signieren 307. Der öffentlichen Schlüssel des eingebetteten Systems 150 kann zum Beispiel dem Ermittler zur Verfügung gestellt werden.

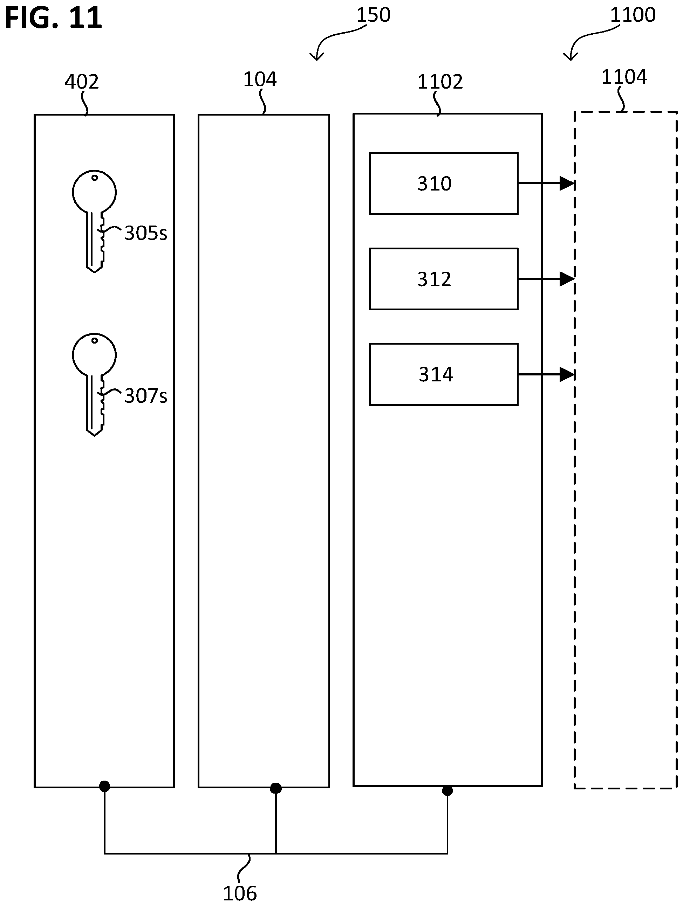

**Fig.11** veranschaulicht das Forensik-Modul 250 gemäß verschiedenen Ausführungsformen 1100 in einem schematischen Aufbaudiagramm (beispielsweise eingerichtet gemäß den Ausführungsformen 100 und/oder 400). Wie oben erläutert, muss die Kodierung, insofern diese überhaut erfolgt, nicht notwendigerweise mittels IHEX erfolgen.

Das Forensik-Modul 250 weist den vertrauenswürdigen Speicherbereich 402 auf, der erste Schlüsseldaten aufweist, die den Verschlüsselungsschlüssel 305s implementieren, und/oder zweite Schlüsseldaten aufweist, die den Signaturschlüssel 307s implementieren. Die ersten Schlüsseldaten und/oder zweiten Schlüsseldaten können den jeweils implementierten Schlüssel als Klartext aufweisen oder einen ausführbaren Programmcode, der den Prozessor 104 dazu bringt, bei Ausführung des Programmcodes, den implementierten Schlüssel in den Schlüsselzielbereich (z.B. in dem vertrauenswürdigen Speicherbereich 402 bereitgestellt) zu schreiben. Der Verschlüsselungsschlüssel 305s ("key", siehe Fig.9) kann für die authentifizierte Verschlüsselung 305 verwendet werden. Der Signaturschlüssel 307s ("sk", siehe Fig.10) kann für das Signieren 307 verwendet werden dient.

Durch die Verschlüsselung 305 wird die Vertraulichkeit für die Zustandsdaten 302 bereitgestellt, was es ermöglicht, Teile des Systemzustands bzw. der Zustandsdaten 302, beispielsweise Betriebsgeheimnisse (z.B. IP) des Herstellers darin, geheim zu halten.

Zusätzlich wird auch der Öffnungswert des Kommitment-Prozesses verschlüsselt, um die Geheimhaltungseigenschaft des Kommitment-Prozesses zu wahren.

Die Nonce, zusammen mit den verschlüsselten Zustandsdaten 302, kann zusätzlich durch den AEAD-Modus authentifiziert werden. Anders als im Falle der Signatur 314, kann beispielsweise nur der Hersteller die Korrektheit des Tags verifizieren. Die Signatur 314 wird beispielsweise basierend auf dem Ciphertext 312 und dem Kommitment 310 sowie optional der Nonce berechnet. Die Signatur 314 dient vor allem der Integritätsprüfung durch eine dritte Partei, wie beispielsweise Gericht oder Ermittler.

Der Hersteller muss die Signatur 314 nicht notwendigerweise verifizieren, da die Nonce bereits durch AEAD authentifiziert ist und da das Kommitment 310 nachgerechnet werden kann, Dies ist der Grund dafür, dass die Nonce als assoziierte Daten bei AEAD verwendet werden kann.

Der VC-Prozess 304 ist eine besonders vorteilhafte Funktion des Forensik-Moduls 250. Der VC-Prozess 304 ermöglicht beispielsweise den Schutz gegen einen böswilligen und/oder kompromittierten Hersteller. Der VC-Prozess 304 ermöglicht es, alternativ oder zusätzlich, nur einzelne Teile des Systemzustandes bzw. der Zustandsdaten 302 (z.B. einen einzelnen Datensatz), z.B. je nach Bedarf, veröffentlichen zu können, z.B. bei einer rechtlichen Auseinandersetzung. Somit dient der VC-Prozess 304 indirekt auch dem Schutz der Firmengeheimnisse des Herstellers wie auch dem Interesse der Öffentlichkeit.

Grundlegend ist es allerdings auch möglich, beispielsweise in Kooperation mit dem Ermittler, den kompletten Systemzustand bzw. die kompletten Zustandsdaten 302 offen zu legen. Der Ermittler kann verifizieren, ob die Zustandsdaten 302 wirklich zum von ihm extrahierten Daten-Paket aus einem durch die Nonce identifizierten eingebetteten System 150 (bzw. Ermittlungsfall) stammen, z.B. ohne die geheimen Schlüssel des Herstellers nutzen zu müssen. Durch das partielle Öffnen des Systemzustandes ist es weiterhin möglich, wichtige Datenteile, wie beispielsweise Schadcode (z.B. Malware des Angreifers), vor Gericht zu veröffentlichen zu können und dabei kryptographisch nachzuweisen zu können, dass die Zustandsdaten 302 zu dem eingebetteten System 150 bzw. zum Ermittlungsfall gehören.

Das Forensik-Modul 250 weist ferner eine zusätzliche Schnittstelle 1102 (auch als Ausgabeschnittstelle 1102 bezeichnet) auf, wobei der zumindest eine Prozessor 104 eingerichtet ist, das Ergebnis der Extraktion 350 mittels der Ausgabeschnittstelle 1102 an ein system-externes Ziel 1104 (d.h. außerhalb des eingebetteten Systems 150) zu übermitteln, z.B. an eine andere Rechenvorrichtung. Das Ergebnis der Extraktion 350 kann das Kommitment 310, das Kryptogramm 312 und/oder die Signatur 314 aufweisen. Das Ziel 1104 kann beispielsweise der Extraktionsauslöser sein und/oder von dem eingebetteten System 150 abgespeichert sein (anschaulich als Voreinstellung). Die Ausgabeschnittstelle 1102 kann beispielsweise als Vernetzungsschnittstelle eingerichtet sein, wie oben erläutert ist.

Vorstehend wurde die Extraktion 350 erläutert, welche im laufenden Betrieb initiiert werden kann. Nachfolgend soll ein ähnlicher Vorgang für den Systemstart (auch als Boot bezeichnet) erläutert werden (auch als "Boot Attestation" oder Boot-Attestierung bezeichnet).

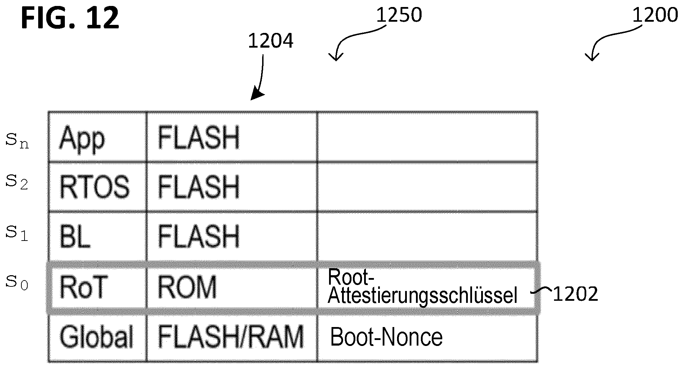

**Fig.12** veranschaulicht einen Softwarestapel (Softwarestack) 1250 des EGS 150 gemäß verschiedenen Ausführungsformen 1200 in einem schematischen Aufbaudiagramm. Der Softwarestapel 1250 repräsentiert den zu ermittelnden Systemzustand und weist mehrere Schichten (auch als Softwareschichten bezeichnet) auf, von denen eine unterste (z.B. erste) Schicht einen abgesicherten Bereich 1202 des RoT (auch als RoT-Schicht 1202 bezeichnet) bereitstellt. Ferner ist der Speicherbereich 1204 angegeben, in welchem die jeweiligen Softwareschichten abgespeichert sind. Jede der Softwareschichten kann beispielsweise Parameter (auch als Programmparameter bezeichnet, wie beispielsweise Programmdaten) und/oder Programmcode aufweisen.

Die hierin beschriebene Boot-Attestierung ermöglicht es, das Auslesen der Zustandsdaten 302 zeitlich von der Attestierung (auch als Beglaubigung bezeichnet) zu separieren. Das Auslesen der Zustandsdaten 302 kann während des Systemstarts des EGS 150 (bzw. CPS) erfolgen. Die Attestierung kann dann als Protokoll zwischen Prüfer und EGS 150 zu einem beliebigen späteren Zeitpunkt durch eine Applikation ("App") durchgeführt werden.

Die forensische Extraktion 350 gemäß der Boot-Attestierung kann das (z.B. bitgenaue) Auslesen 301 der Zustandsdaten 302 (z.B. ein Speicherabbild aufweisend) mittels der Forensik-Schnittstelle 208 aufweisen, wobei die Zustandsdaten 302 mehrere Datensätze mₖ (k = 1...n) aufweisen. In dem dargestellten Beispiel ist n=4. Der i-te Datensatz mᵢ kann die i-te Softwareschicht sᵢ repräsentieren, z.B. deren Parameter und/oder Programmcode (kurz auch als Code bezeichnet) aufweisend. Beispielsweise kann der i-te Datensatz den kompletten Inhalt der i-ten Softwareschicht sᵢ aufweisen.

In der hier abgebildeten exemplarischen Implementierung weist die unterste (bzw. allererste) Softwareschicht s₀ (k=0) die RoT-Schicht 1202 auf. Die oberste (bzw. allerletzte) Softwareschicht sₙ (k=n) weist beispielsweise die Systemanwendung (auch als "App" bezeichnet), z.B. eine EGS-Applikation bzw. CPS-Applikation, auf. Beispiele für Zwischenschichten (n>i>0) weisen auf: Bootloader ("BL") oder Betriebssystem (z.B. ein RTOS). Die RoT-Schicht 1202 weist einen sogenannten Root-Attestierungsschlüssel RK (auch als Root-Attestation-Key oder "Root Key" bezeichnet) auf, der als initialer Attestierungsschlüssel "AK₀" (auch als Referenzschlüssel AK₀ bezeichnet) verwendet werden kann.

In verschiedenen Ausführungsformen kann der Root-Attestation-Key mittels der Firewall und/oder mittels PCROP abgesichert sein oder werden. PCROP ermöglicht beispielsweise zusätzlich zu der Firewall, den Root-Attestation-Key vor internen Zugriffen zu schützen.

Der Systemstart des EGS 150 kann stufenweise erfolgen gemäß einer entsprechenden Sequenz (auch als Systemstartsequenz bezeichnet). Anschaulich kann die Systemstartsequenz mehrere nacheinander ausgeführte Stufen aufweisen, von denen die i-te Stufe genau die i-te Softwareschicht startet bzw. ausführt und/oder dieser die Kontrolle über das EGS 150 übergibt. Beispielsweise kann die Systemstartsequenz implementiert werden, indem die i-te Softwareschicht eingerichtet ist (z.B. Instruktionen dazu aufweisend), die (z.B. unmittelbar) darauffolgende i+1-te Stufe der Systemstartsequenz (z.B. die i+1-te Softwareschicht startend) durchzuführen. Selbstverständlich können die Instruktionen, welche die Systemstartsequenz implementieren, auch separat von dem Softwarestapel 1250 bereitgestellt sein.

Das EGS 150 (z.B. der Forensik-Prozessor 204) ist eingerichtet, eine Attestierungssequenz (auch als Beglaubigungssequenz bezeichnet) durchzuführen während der Systemstartsequenz. Die Beglaubigungssequenz kann als von der Systemstartsequenz separate Sequenz implementiert sein oder in die Systemstartsequenz und/oder den Softwarestapel (z.B. als Teil der Systemstartsequenz) integriert sein. In einer beispielhaften Implementierung der Beglaubigungssequenz ist die i-te Softwareschicht eingerichtet, die (z.B. unmittelbar) darauffolgende i+1-te Softwareschicht auszulesen und darauf basierend einen i+1-ten Schlüssel (auch als i+1-ter Attestierungsschlüssel bezeichnet) zu ermitteln. Allgemeiner gesprochen, kann die i-te Softwareschicht beispielsweise Instruktionen aufweisen, den i+1-ten Attestierungsschlüssel AKᵢ zu ermitteln. Selbstverständlich können die Instruktionen, welche die Beglaubigungssequenz implementieren, auch separat von dem Softwarestapel 1250 bereitgestellt sein.

Später kann dann die Applikation jederzeit basierend auf dem abgeleiteten n-ten Attestierungsschlüssel AKₙ eine Attestierung mit dem Prüfer durchführen und dabei nachweisen, ob beim letzten Systemstart der Systemzustand manipuliert oder nicht manipuliert wurde. Der Prüfende kann beispielsweise auch einen neuen Systemstart initiieren (z.B. mittels des Extraktionsauslösers) bevor eine Attestation durchgeführt wird.

Mittels der Beglaubigungssequenz kann der Softwarestapel 1250 des EGS 150 während des Systemstarts und beginnend mit einem sicheren RoT ausgelesen werden, beispielsweise mit geringen Anforderungen an jede der Softwareschichten sᵢ (i > 0). Die Attestation selbst wird dann von der Applikation durchgeführt, beispielsweise ohne dass diese Funktionalität extra abgesichert werden muss (was aber durchaus der Fall sein kann). Die kryptographische Verarbeitung erreicht, dass die Attestation (beispielsweise nur dann) erfolgreich durchgeführt werden kann, wenn der Systemzustand während des Systemstarts nicht manipuliert worden war. Weiterhin, falls der Prüfende einen Systemstart (auch als Bootvorgang bezeichnet) initiiert, kann die Attestation (beispielsweise nur dann) erfolgreich abgeschlossen werden, wenn der Bootvorgang auch tatsächlich durchgeführt wird.

Nachfolgend wird eine exemplarische Implementierung der Beglaubigungssequenz bzw. der Systemstartsequenz erläutert. Die Beglaubigungssequenz kann beispielsweise als Eingabe eine Nonce N_{B} (auch als Boot-Nonce bezeichnet) empfangen, die als Verifikationsschlüssel verwendet wird. Die Boot-Nonce kann beispielsweise eine Zahl (z.B. eine Zufallszahl) oder andere zufällige Zeichenkette sein, die nur einmalig verwendet wird.

Diese Boot-Nonce N_{B} erreicht, dass vom Prüfer erkannt werden kann, wenn der Systemneustart (auch als Reboot Prozesses bezeichnet) durch einen Angreifer unterdrückt wird. Initial, z.B. wenn das EGS 150 (bzw. ein CPS) in Betrieb genommen wird, kann eine standardisierte (z.B. abgespeicherte) Nonce als Boot-Nonce verwendet werden. Vor der allerersten Boot-Attestierung kann die Boot-Nonce N_{B} optional aktualisiert, z.B. auf einen neuen Wert gebracht, werden. Das Aktualisieren der Boot-Nonce kann z.B. mittels des Forensik-Prozessors 204 erfolgen und/oder basierend auf von dem EGS 150 empfangen Informationen (z.B. von system-extern, z.B. durch den Prüfer, vorgegeben). Der Root-Attestierungsschlüssel kann in der RoT-Schicht 1202 als geheimer Schlüssel RK abgespeichert sein (z.B. auf einem ROM), welcher individuell für das EGS 150 (oder eine Serie von EGS 150) verwendet wird und während der Herstellung des EGS 150 geschrieben wird. Dieser Root Key kann dem Prüfer, welcher die Attestierung durchführen wird, bekannt sein.

Die RoT-Schicht 1202 ist beispielsweise eingerichtet, das Forensik-Modul 250 (z.B. den Forensik-Prozessor 204) dazu zu bringen, das Auslesen der (z.B. unmittelbar) nachfolgenden Softwareschicht (in diesem Beispiel BL) zu instruieren oder sogar durchzuführen.

Zum Beispiel kann als Zwischenschritt ein Hashwert h₁ mittels einer kryptographischen Hashfunktion H basierend auf dem ausgelesenen Datensatz m₁ des BL (z.B. Code und/oder Parameter des BL aufweisend) ermittelt werden, beispielsweise gemäß der Relation h₁ := H(m₁). Der Datensatz m₁ des BL kann optional Sensordaten des EGS 150 aufweisen.

Bevor die RoT-Schicht 1202 die Kontrolle an BL übergibt, wird der erste Attestierungsschlüssel AK₁ berechnet. Der erste Attestierungsschlüssel AK₁ basiert auf dem Root Key, optional der Boot-Nonce, und dem ersten Datensatz m₁ (z.B. dem Hashwert h₁), beispielsweise gemäß der Relation AK₁ := KDF(RK,NB,m₁) bzw. AK₁ := KDF(RK,NB,h₁), wobei NB optional weggelassen werden kann. KDF kann beispielsweise eine kryptographische Schlüsselableitungsfunktion sein. Der erste Attestierungsschlüssel AK₁ wird nun für den Zugriff durch den BL abgespeichert, der Zugriff auf den Root Key wird gesperrt und die Kontrolle wird an den BL übergeben.

Dieser Status der Beglaubigungssequenz ist nachfolgend abgebildet.

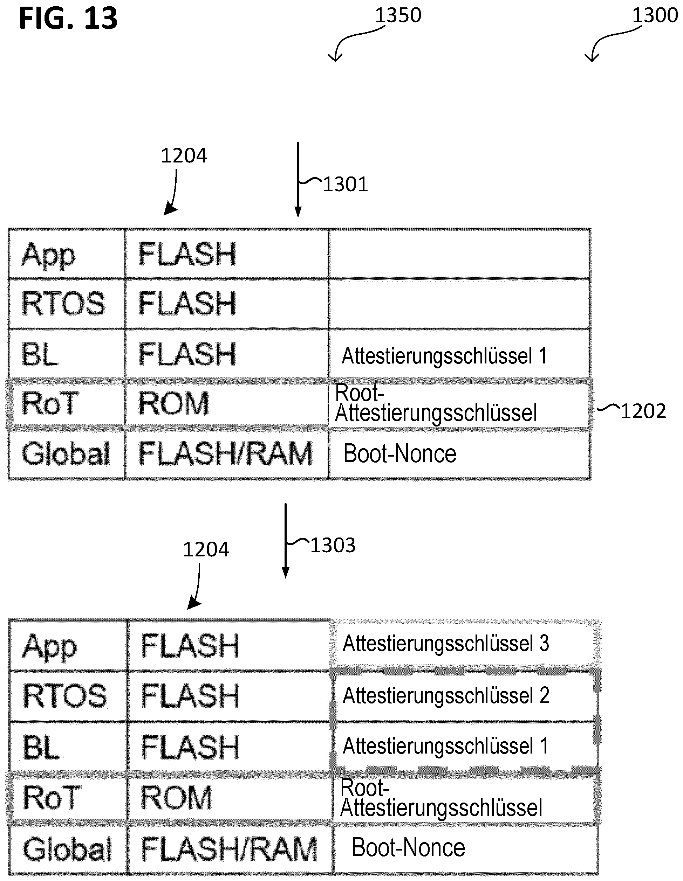

**Fig.13** veranschaulicht den Zustand 1350 des Softwarestapels 1250 (Softwarestack) des Systems 150 gemäß verschiedenen Ausführungsformen 1300 in einem schematischen Ablaufdiagramm während der Beglaubigungssequenz, gemäß welcher der erste Attestierungsschlüssel AK₁ ermittelt wurde und nachfolgend zusätzliche Attestierungsschlüssel ermittelt werden.

Allgemeiner gesprochen kann die Extraktion 350 aufweisen, in 1301, Ermitteln, vor dem Ausführen der ersten Stufe (i=1) der Systemstartsequenz, eines ersten Attestierungsschlüssels AK₁ (auch als "Attestation Key 1" bezeichnet) unter Verwendung eines kryptografischen Prozesses (der beispielsweise eine Hashfunktion und/oder ein KDF aufweist) basierend auf dem Datensatz m₁ der ersten Stufe (i=1), dem Referenzschlüssel AK₀ und optional dem Verifikationsschlüssel BN. Als kryptografischer Prozesses kann beispielsweise die kryptographische Schlüsselableitungsfunktion verwendet werden.

Die Beglaubigungssequenz kann ferner aufweisen, in 1303, Ermitteln, vor dem Ausführen der i-ten Stufe der Systemstartsequenz i ∈ {2, ..., n}, eines i-ten Attestierungsschlüssels

AKᵢ (z.B. Attestation Key 2 bzw. 3 bezeichnet) unter Verwendung des kryptografischen Prozesses basierend auf dem Datensatz mᵢ der i-ten Stufe und dem (i-1)-ten Attestierungsschlüssels AKᵢ₋₁.

In einer exemplarischen Implementierung ist jede i-te Softwareschicht sᵢ (mit i ∈ {1, ..., n}, beispielsweise n = 3 wie abgebildet) ähnlich wie RoT eingerichtet. Der i-te Attestierungsschlüssel AKᵢ wird für i>2 allerdings ermittelt basierend auf dem (i-1)-ten Attestierungsschlüssel AKᵢ₋₁ anstatt des Root Keys, worauf der (i-1)-te Attestierungsschlüssel AKᵢ₋₁ vor der Übergabe an die i-te Softwareschicht beispielsweise sicher gelöscht bzw. überschrieben wird. Die BN wird für i>2 nicht mehr notwendigerweise verarbeitet.

Das Ermitteln der Attestierungsschlüssel lässt sich ähnlich zu der obigen Relation auch schreiben als:
hᵢ := H(mᵢ), AKᵢ := KDF(AKᵢ₋₁,hᵢ), oder wenn H nicht verwendet wird als: AKᵢ := KDF(AKᵢ₋₁,mᵢ).

Die BN erreicht, dass jeder Bootvorgang einzigartig ist und dass temporäre Geheimnisse auf verschiedenen Softwareschichten, welche möglicherweise korrumpiert wurden, nutzlos werden. Diese BN wird beispielsweise vom Extraktionsauslöser (z.B. dem Prüfer) generiert und an das EGS 150 übermittelt. Die erreicht, dass der Wert der BN bei jeder Extraktion 350 neu gewählt wird.

Nachdem der Bootvorgang (z.B. mit einer frisch gewählter BN) abgeschlossen ist, kann der Softwarestapel 1250 des EGS 150 nun (z.B. vom Prüfer) verifiziert werden. Dazu kann ein Aufforderung-Antwort-Protokoll (das sogenannte "Challenge-Response-Protokoll") zwischen der Applikation und dem Prüfer durchgeführt werden. Der Prüfer wählt eine zufällige Herausforderung NV (auch als Prüfer-Nonce oder PN bezeichnet) und schickt diese als Wissensanfrage an das EGS 150.

Die Applikation beantwortet diese Herausforderung, indem diese als Antwort r einen Wissensbeweis (auch als Proof-of-Knowledge bezeichnet) für den Attestierungsschlüssel, z.B. in Form eines Nachrichtenauthentifizierungscodes (auch als MAC bezeichnet) ausgibt, beispielsweise gemäß der Relation
r ← MAC(AKₙ, NV). Zusätzlich zu diesem Wert kann die Applikation sowohl die Boot-Nonce als auch die Ergebnisse h₁, ..., hₙ an den Prüfer übermitteln. Dies kann nützlich sein, falls mehrere gültige Softwarestände des EGS 150 existieren, und der Prüfer den aktuellen Stand schnell erkennen soll.

Beispielsweise müssen diese mitgeschickten Ergebnisse h₁, ..., hₙ nicht notwendigerweise separat gegen eine Manipulationen abgesichert werden, da der Prüfer die Ergebnisse h₁, ..., hₙ nur für die Zuordnung nutzen kann, der Systemzustand hingegen von der kryptographisch abgesicherten Antwort r auf die Herausforderung garantiert wird. In Kenntnis der Antwort r kann der Prüfer nun basierend auf seiner Kopie des Root-Keys RK, der Boot-Nonce NB und dem erwarteten Gerätezustand (m' ₁, ... ,m'ₙ) bzw. (h'₁, ... ,h'ₙ) die gleichen Berechnungen anstellen, die während des Bootvorgangs erfolgten, um ein AK'ₙ zu berechnen und darauf basierend die Antwort zu validieren, beispielsweise gemäß der Relation
Vrfy(AK'ₙ ,NV , r) → b, wobei AK'ₙ = AKₙbzw. (m'₁, ..., m'ₙ) = (m₁, ..., mₙ), wenn b = 1 (oder wenn b ein anderes Kriterium erfüllt). Die Ausgabe b kann beispielsweise nur den Wert 1 oder 0 annehmen.

Die Sicherheitseigenschaft der Attestierungssequenz ermöglicht, dass (m'₁, ..., m'ₙ) = (m₁, ..., mₙ) gilt, wenn r korrekt berechnet wurde. Diese Sicherheitseigenschaft wird begünstigt, wenn eine oder mehr als eine (z.B. alle) der folgenden Kriterien erfüllt werden:
- H ist eine kollisionsresistente Hashfunktion;
- KDF ist eine (z.B. sichere) kryptographische Schlüsselableitungsfunktion;
- Π = (KeyGen, Mac, Vrfy) ist ein (z.B. sicheres) kryptographischer MAC-Prozess;
- der Zugriff auf den Schlüssel RK ← KeyGen (1^{λ}) ist exklusiv für den RoT;
- jeder Attestierungsschlüssel AKᵢ₋₁ wird vor der Übergabe der Kontrolle an die i-te Softwareschicht gelöscht.

In einer exemplarischen Implementierung wird die Attestierungssequenz auf dem ausgewählten Microcontroller ausgeführt. Ferner wird eine Firewall zum Schutz des Root Key verwendet. Beispielsweise wird vor der Übergabe an die Applikation die Firewall konfiguriert und eingeschaltet und derart eingerichtet, dass jeder Versuch, auf den Speicherbereich des Root Key zuzugreifen unmittelbar beantwortet damit wird, dass das eingebettete System 150 von der Firewall zurückgesetzt wird (z.B. mittels eines Hardware Resets durch die Firewall), z.B. indem die Resetantwort durchgeführt wird. Wird die Funktionalität der Firewall komplett realisiert, z.B. um Codesegmente, welche die Extraktion 350 implementieren, hinter die Firewall bzw. in der Enklave zu platzieren, kann der Root Key weiterhin hinter der Firewall platziert werden. Optional kann der Root Key zusätzlich mittels eines PCROP abgesichert sein oder werden, was bei einer solchen Nutzung der Firewall von unbeabsichtigten Zugriffen schützen könnte. Alternativ oder zusätzlich kann die RoT-Schicht (z.B. den Root Key aufweisend) im ROM des EGS 150 gespeichert sein und/oder mittels der Firewall abgesichert sein.

Beispiele für Eingangsdaten der Attestierungssequenz weisen auf:
- der (z.B. für das EGS 150 individuelle) Root Key, für das EGS 150, welches verifiziert werden soll,
- eine frisch generierten Boot-Nonce,
- die Zustandsdaten 302, welche die erwartete Firmware repräsentieren, sowie
- optional zusätzliche Daten, die durch die Attestierungssequenz verifiziert werden sollen.

Als Beispiel können die Optionsbytes als zusätzliche Daten verwendet werden.

Die Eingangsdaten der Attestierungssequenz gehen in die Ableitung des Attestierungsschlüssels ein. Nachdem der allerletzte Attestierungsschlüssel AKₙ generiert ist, kann dieser verifiziert werden. Dazu wird eine Herausforderung für das EGS 150 generiert. Bevor die Attestierung durchführen kann, kann die vorher generierte Boot-Nonce an das EGS 150 geschickt werden. Das EGS 150 erhält zusammen mit der Boot-Nonce die Instruktion zum einen Software-Neustart (In der Praxis kann dies auch anders gestaltet werden). Beim Neustart geht die Boot-Nonce in das Ermitteln des Attestierungsschlüssels AKₙ ein und nach dem Beenden des Neustarts meldet sich die Applikation, beispielsweise mit der neuen Boot-Nonce. Die eigentliche Attestierung wird nach dem Neustart durchgeführt. Dabei wird die neue Herausforderung an das EGS 150 geschickt. Das EGS 150 kann die Herausforderung beispielsweise nur dann korrekt beantworten, wenn vorher ein Neustart mit der vorgegebenen Boot-Nonce durchgeführt wurde und der tatsächliche Systemzustand des EGS 150 auch als Ist-Systemzustand bezeichnet) dem erwarteten Systemzustand (auch als Soll-Systemzustand bezeichnet) entspricht.

Nachfolgend wird genauer auf das Emulationssystem eingegangen.

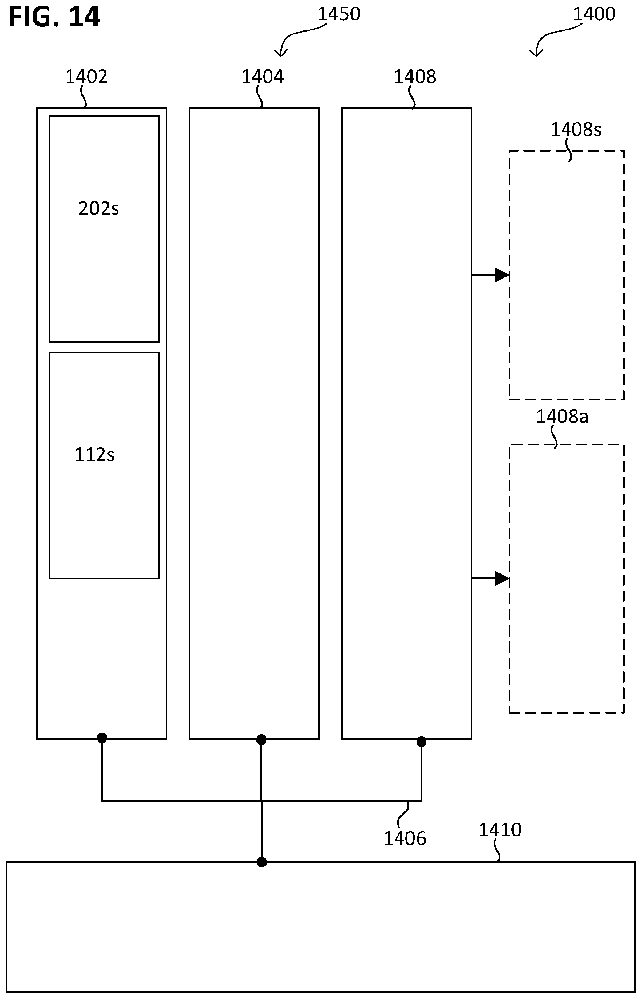

**Fig.14** veranschaulicht ein Emulationssystem 1450 gemäß verschiedenen Ausführungsformen 1400 in einem schematischen Aufbaudiagramm. Das Emulationssystem 1450 ist eingerichtet zum Emulieren des EGS 150 Systems, welches den eingebetteten Prozessor 104 und den zumindest einen Sensor 110 und/oder zumindest einen Aktor 112 aufweist.

Das Emulationssystem 1450 weist eine Digital-Schnittstelle 1410 zum Empfangen der (z.B. entschlüsselten) Zustandsdaten 302 auf, eine (physische) Kommunikationsschnittstelle 1408 (auch als Peripherie-Schnittstelle bezeichnet) zu zumindest einem Sensor 1408s (auch als Emulationssensor 1408s bezeichnet) und/oder zumindest einem Aktor 1408a (auch als Emulationsaktor bezeichnet). Der oder jeder Emulationssensor kann zu dem jeweiligen Sensor 110 des EGS 150 baugleich bzw. zumindest eine emulierte Repräsentation dessen sein. Der oder jeder Emulationsaktor 1408a kann zu dem jeweiligen Aktor 112 des EGS 150 baugleich bzw. zumindest eine emulierte Repräsentation dessen sein. Beispielsweise kann ein oder mehr als ein Sensor 110 und/oder einen oder mehr als einen Aktor des EGS 150 emuliert werden als Emulationsaktor 1408a bzw. Emulationssensor 1408s. Beispielsweise kann der Emulationsaktor einen Motor des EGS 150 repräsentieren (z.B. baugleich dazu bzw. zumindest eine emulierte Repräsentation dessen sein).

Das Emulationssystem 1450 weist ferner zumindest einen Prozessor 1404 (auch als Emulationsprozessor bezeichnet) auf, der eingerichtet ist zum Emulieren des EGS 150. Beispielsweise kann das Emulationssystem 1450 bzw. der Emulationsprozessor eingerichtet sein, eine Komponente eines Geldautomaten als EGS 150 zu emulieren, z.B. eine der folgenden Komponenten des Geldautomaten:
- eine Kassette (z.B. Geldkassette)
- eine Lesevorrichtung (z.B. zum Lesen eines RFID-Chips, eine Kreditkarte, einer Smartcard oder Ähnlichem),
- einen Drucker,
- eine Kamera,
- ein Netzwerkgerät (z.B. eine Netzwerkkarte),
- eine Transportvorrichtung (z.B. zum Transport von Banknoten oder anderen Wertdokumenten),
- eine Validierungsvorrichtung (z.B. in einem Geldautomaten),
- eine Auszahlvorrichtung (auch als Auszahlmodul bezeichnet),
- eine Einzahlvorrichtung,
- eine Benutzerschnittstelle (z.B. ein Pin-Pad, eine Tastatur, ein Touchscreen oder Ähnliches aufweisend), z.B. ein verschlüsselndes PIN-Tastenfeld.

Der Emulationsprozessor 1404 ist ferner eingerichtet ist zur Kommunikation mittels der Kommunikationsschnittstelle 1408 auf die gleiche Weise, wie der eingebettete Prozessor 104 mittels der Funktionsschnittstelle 108 kommuniziert, z.B. mit dem mindestens einen Sensor 110 bzw. mindestens einen Aktor 112 des EGS 150.

Das Emulationssystem 1450 weist ferner eine Speichervorrichtung 1402 (z.B. einen oder mehr als einen Datenspeicher 102s, 112s aufweisend) auf.

Das Emulationssystem 1450 weist ferner eine Kommunikationsinfrastruktur 1406 (z.B. einen CAN-Bus oder anderen Feldbus aufweisend) auf, welche zumindest die Speichervorrichtung 1402, den Emulationsprozessor 1404, die Digital-Schnittstelle 1410 und/oder die Kommunikationsschnittstelle 1408 miteinander koppelt.

Optional kann das Emulationssystem 1450 eingerichtet sein, den Systemzustand basierend auf den Zustandsdaten 302 zu rekonstruieren (auch als Rekonstruktion oder Wiederherstellung bezeichnet), z.B. im Handlermodus. Die Rekonstruktion kann beispielsweise aufweisen, das Prozessorregister (z.B. CPU-Registers) und/oder Peripherieregister zu rekonstruieren.

Die Rekonstruktion im Handlermodus stellt erweiterte Privilegien bereit, die für die Ausführung mancher Befehle günstig sind, und kann beispielsweise erfolgen, wenn die CPU-Register auch im Handlermodus gesichert wurden. Um den Code nach der Rekonstruktion an dieser Stelle fortzusetzen, kann sich die CPU im selben Modus befinden. Dann wird sichergestellt, dass eine Rekonstruktion mit dem entsprechenden Code zum Verlassen des Handlermodus korrekt ausgeführt wird. Die entsprechende Exception zum Betreten des Handlermodus kann durch Schreiben des Interruptsteuerung und Statusregisters ("Interrupt-Control and State Register" oder kurz ICSR), entweder per Software aus dem Threadmodus oder durch den Debugger, ausgelöst (z.B. instruiert) werden.

Dazu kann das Forensik-Modul 250 den entsprechenden Interrupt-Handler installieren. Durch Schreiben des ICSR wird ein nicht-maskierbarer Interupt ("Non-Maskable-Interrupt" oder kurz NMI) ausgelöst.

Die Rekonstruktion kann beispielsweise eines oder mehr als eines von Folgendem aufweisen:
- Rücksetzen der Schutzmechanismen;
- Rekonstruktion des persistenten Flash-Speichers;
- Rekonstruktion des flüchtigen RAM-Speichers;
- Rekonstruktion eines oder mehr als eines Peripherieregisters;
- Rekonstruktion eines oder mehr als eines Prozessorregisters.

Um den Flash-Speicher zu rekonstruieren und zu lesen, können die Optionsbytes zunächst auf RDP Level 0 aktiviert werden. Dies löscht beim Übergang von Level 1 zu Level 0 automatisch den Flash-Speicher. Im EGS 150 können die Optionsbytes auf Level 2 sein, um die Debug-Schnittstelle komplett zu deaktivieren. Wenn die Debug-Schnittstelle des Emulationssystems 1450 aktiviert sein soll, kann Level 2 auch durch Level 1 emuliert werden. Dazu ist gegebenenfalls ein Patch der entsprechenden Optionsbytes nötig, bevor diese im nächsten Schritt programmiert werden. Der Inhalt des Flash-Speichers gemäß den Zustandsdaten 302 kann dann in das Emulationssystem 1450 programmiert werden. Dies kann beispielsweise mittels OpenOCD erfolgen. Beispielsweise kann der Flash-Speicher derart partitioniert sein oder werden, dass die Funktionalität zur Rekonstruktion des Prozessorregisters (z.B. CPU Core Register) als Teil des Forensik-Modul 250 in einem Flash-Speicherbereich liegt, der physisch nicht notwendigerweise in der MCU des EGS 150 vorhanden sein muss. So überschreibt das Programmieren des Speicherabbildes nicht das Forensik-Modul 250.

Der RAM kann gemäß den Zustandsdaten folgende Daten aufweisen, die durch Laden des RAM-Hintergrunds automatisch rekonstruiert werden können: Stapek, Heap, Registerdatei (z.B. CPU Registerdatei). Der RAM kann beispielsweise direkt durch einen Debugger beschrieben werden. Zuvor kann das Emulationssystem 1450 derart eingerichtet sein oder werden, dass nach Rekonstruktion von RAM und Peripherieregistern unmittelbar der Code zur Rekonstruktion des Prozessorregisters (z.B. CPU-Registers) ausgeführt wird. Das Schreiben des ICSR kann einen NMI auslösen und setzt die CPU so in den Handlermodus. Diese springt in den NMI-Exception-Handler, den das Forensik-Modul 250 entsprechend installiert hat. Das begünstigt, wenn der Speicherdump innerhalb eines Interrupt-Handlers im Handlermodus ausgeführt wurde, dass die CPU nach Rekonstruktion ebenfalls im Handlermodus fortgesetzt wird. Dann kann mittels eines Wiederherstellungsbefehls der Speicherinhalt des RAM rekonstruiert werden.

Die Peripherieregister sind in den Adressraum der MCU abgebildet. Diese können also zunächst wie Flash-Speicher und RAM aus dem extrahierten Zustand in eine separate Datei abgebildet werden. Eine Ausnahme können die Statusregister bilden, die in einigen Fällen nicht immer durch die Softwareschnittstelle geschrieben werden können, sondern deren Inhalt nur durch eine Manipulation der Hardware möglich ist. Zum Beispiel spiegelt das Input-Register eines IO-Pins den Zustand des Pins wieder, und kann häufig nur durch Anlegen eines entsprechenden Potentials an den Pin selber modifiziert werden. Um den Zustand solcher Register zu rekonstruieren, kann eine Peripherieemulator verwendet werden.

Im Gegensatz zu den Peripherieregistern können die Prozessorregister nicht notwendigerweise direkt geschrieben werden. In dem Fall werden diese mittels dedizierter Prozessorbefehle (z.B. CPU-Befehle) beschrieben.

Nachdem die Prozessorregister rekonstruiert wurden, kann der Exception-Handler verlassen und der Systemzustand auf die richtige Programmcodeadresse gesetzt werden. Dies erfolgt beispielsweise mittels Ladens einer sogenannten Exceptionrückkehr (Exception-Returns) bzw. einer Rücksprungadresse. Die veranlasst die CPU dazu, den Handlermodus zu verlassen und den Exception-Frame vom Stack zu laden.

Ein exemplarisches Emulationssystem 1450 ist eingerichtet, relevante Komponenten des EGS 150 mittels Emulation abzubilden, darunter beispielsweise die Speichervorrichtung 102, der eingebettete Prozessor 104, die Kommunikationsinfrastruktur 106 und/oder die Schnittstelle 108. Beispielsweise können zumindest der eingebettete Prozessor 104 und die Schnittstelle 108 emuliert werden.

Nachfolgend wird die Emulation des EGS 150 exemplarisch anhand der MCU des EGS 150 erläutert. Es kann verstanden werden, dass das Beschriebene in Analogie gelten kann für ein anders implementiertes EGS 150. Die MCU des Emulationssystems 1450 (auch als Emulation-MCU bezeichnet) bildet die MCU des EGS 150 nach. Die Emulation-MCU kann beispielsweise eine Entwicklerversion der MCU des EGS 150 sein, wie sie auch zur funktionalen Fehleranalyse verwendet wird. Die Emulation-MCU weist beispielsweise eine oder mehr als eine der folgenden Komponenten auf:
- Einen Debug-Port. Die MCU des EGS 150 weist häufig keinen aktivierten Debug-Port auf, z.B. ist dieser weggelassen oder aus Sicherheitsgründen deaktiviert. Die Emulation-MCU weist hingegen einen aktivierten Debug-Port auf. Optional kann die Emulation-MCU erweiterte Debug-Funktionalität, wie zum Beispiel ein Nachverfolgungsmodul ("Trace Modul"), aufweisen.
- Direktzugriffsspeicher (RAM): Der Arbeitsspeicher der Emulation-MCU ist mindestens so groß wie der Arbeitsspeicher der MCU des EGS 150. Weist die Emulation-MCU mehr Direktzugriffsspeicher auf als die MCU des EGS 150, kann dieser für die Emulation ausgeblendet werden, beziehungsweise nicht genutzt werden.
- Der Flash-Speicher der Emulation-MCU ist mindestens so groß wie der Flash-Speicher der MCU des EGS 150. Weist die Emulation-MCU mehr Flash-Speicher auf als die MCU des EGS 150, kann dieser zur Implementierung zusätzlicher Funktionalität der Emulation verwendet werden, zum Beispiel für zusätzliche Interrupt-Handler und für die Rekonstruktion der CPU-Register.
- Eine oder mehr als eine Peripherie-Schnittstelle 1408: Die Peripherieblöcke der MCU des EGS 150 sind aus Kostengründen häufig auf die jeweilige Anwendung zugeschnitten. Die Emulation-MCU kann zusätzliche Peripherieblöcke aufweisen. Dies erlaubt eine flexiblere Verwendung der Emulation für verschiedene Hardware-Konfigurationen und Anwendungen.

Die Emulation-MCU kann über einen Debug-Adapter von dem Analyse-PC aus angesteuert werden. Dies ermöglicht eine Schrittweise-Ausführung des Programmcodes, das Setzen von Breakpoints, Analyse des Speichers und mehr.

Der Emulator 1502 der Peripherie (auch als Peripherieemulator oder "Peripherie Emulation" bezeichnet) weist Hardware zur Ansteuerung der Hardwareschnittstellen der Emulation-MCU auf. Je nach Zielsystem weist die Peripherieemulator beispielsweise ein oder mehr als ein Bussystem (z.B. mehrere verschiedene Bussysteme), einen oder mehr als einen digitalen Eingang und/oder einen oder mehr als einen analogen Eingang auf. In einer konkreten Instanziierung weist die Peripherieemulator eine oder mehr als eine der folgenden Komponenten auf:
- Eine Steuereinheit, die eingerichtet ist als Schnittstelle (auch als Analyseschnittstelle bezeichnet) zum Analyse-PC. Die Steuereinheit weist beispielsweise eine zusätzliche MCU auf, auf der ein Echtzeit-Betriebssystem ausgeführt wird.
- Ein Echtzeit-Modul, das eingerichtet ist als Porterweiterung und und/oder zur Implementierung zeitkritischer Prozesse. Das Echtzeit-Modul wird beispielsweise von einer FPGA ("Field Programmable Gate Array") implementiert und kann so taktgenau auf Signale der Emulation-MCU reagieren und fallspezifische Angriffe nachbilden. Weiterhin bietet ein FPGA eine größere Flexibilität, um Komponenten des EGS 150 dynamisch zu implementieren. Das Echtzeit-Modul kann beispielsweise von der Steuereinheit angesteuert werden. Optional wird das Echtzeit-Modul zur Emulation analoger Signale durch einen Funktionsgenerator ergänzt. Die Ausgänge werden direkt vom Analyse-PC konfiguriert. Die Synchronisation erfolgt, insofern erwünscht, durch ein Signal aus der Steuerungseinheit oder dem FPGA.
- eine oder mehr als eine Schnittstelle weist spezielle Schnittstellenmodule auf, wie zum Beispiel ein CAN-Bus-Controller ("Controller Area Network Bus Controller") oder einen USB-Controller ("Universal Serial Bus Controller"), beispielsweise wenn diese nicht von der MCU der Steuereinheit implementiert werden. So können diese von der echtzeitfähigen MCU des Peripherieemulators mit anderen Signalen synchronisiert werden und müssen nicht separat im FPGA implementiert werden.

Eine exemplarische Implementierung des Emulationssystems 1450 für ein generisches EGS 150 (beispielsweise für ein STM32L476 basiertes CPS) kann beispielsweise ein STM32L476 Nucleo Entwicklerboard mit STM32L4 MCU aufweisen. Eine exemplarische Implementierung des Emulationssystems 1450 für ein herstellerspezifisches EGS 150 kann beispielsweise ein herstellerspezifisches Entwicklerboard mit Cortex M4 MCU und

Peripherieemulator aufweisen. Nachfolgend sind diese beiden exemplarischen Implementierungen gegenübergestellt:

| Komponente | Generische Emulation | Auszahl Emulation |
|---|---|---|
| CPU Core | Arm Cortex-M4 | Arm Cortex-M4 |
| Debug Schnittstelle | SWD | JTAG |
| Debug Probe | ST-LINK V2 | Green Hills Probe |
| Debugger | Gnu Debugger (GDB) | Green Hills TimeMachine Debugger |
| Peripherie Emulator | Funktionsgenerator Rigol DG4162 | FPGA und Rigol DG4162 |

In einer komplexeren Implementierung kann das Emulationssystem 1450 eingerichtet sein, eine automatische Analyse des Ergebnisses der Extraktion 350 durchzuführen. Dies wird nachfolgend erläutert.

Das Emulationssystem 1450 kann eingerichtet sein:
- die (z.B. entschlüsselten) Zustandsdaten 302, z.B. eine Registerdatei aufweisend, in "Ghidra" oder ein anderes Nachkonstruktionsmodul ("Revers-Engineering-Module") zu importieren;
   - die Architektur des zu emulierenden EGS 150 zu spezifizieren (z.B. einen Arm v8 CPU Core, little Endian, aufweisend).
   - eine automatische Analyse der Zustandsdaten 302 mittels "Ghidra" durchzuführen, z.B. eine statische Analyse des Programmcodes aufweisend.

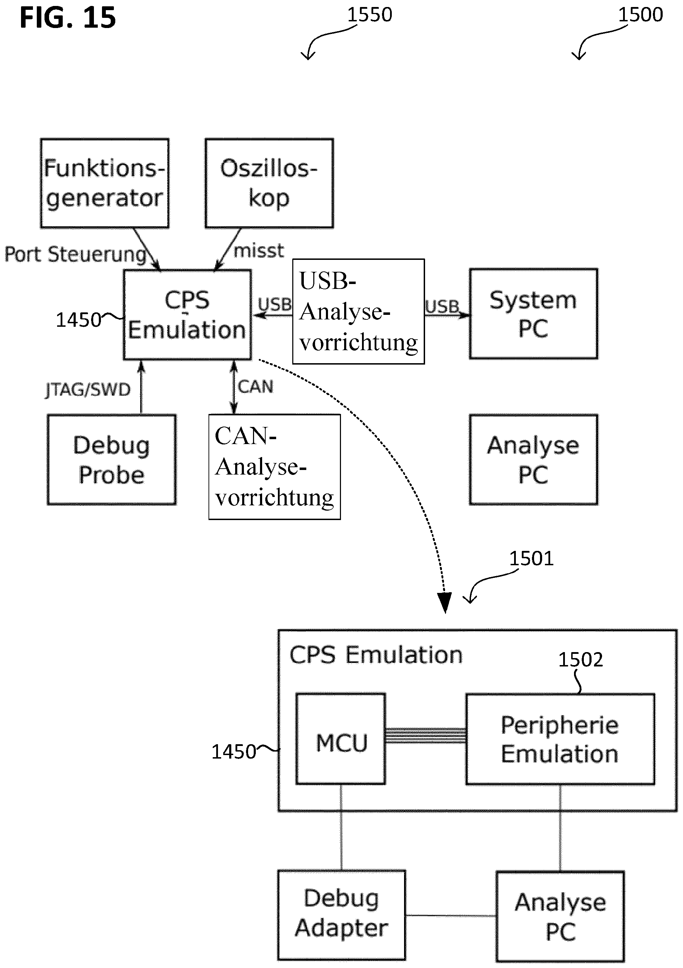

**Fig.15** veranschaulicht ein Analysesystem 1550 gemäß verschiedenen Ausführungsformen 1500 in einem schematischen Aufbaudiagramm und einer Detailansicht 1501, welches das Emulationssystem 1450 gemäß den Ausführungsformen 1400 (z.B. ein CPS-Emulationssystem, kurz CPS Emulation) aufweist.

Das Emulationssystem 1450 kann beispielsweise mittels eines Emulationsboards bereitgestellt werden. Das Emulationssystem 1450 emuliert beispielsweise die MCU des EGS 150 (bzw. CPS) und dessen Peripherie (z.B. einen oder mehr als einen Sensor und/oder Aktor aufweisend). Das Emulationssystem 1450 wird zur Ausführung des zu analysierenden Schadcodes, insofern vorhanden, verwendet und bietet erweiterte Funktionalitäten, wie beispielsweise eine oder mehr als eine Debug-Schnittstelle und Peripheriekomponenten.

Der System-PC des Analysesystems 1550 (allgemeiner auch als Umgebung-Emulationsvorrichtung bezeichnet) emuliert den System-PC des angegriffenen Geräts (z.B. ein Geldautomat), welches das EGS 150 bzw. CPS aufweist. Über die eigentliche Funktionalität eines "normalen" System-PC hinaus, ist der System-PC des Analysesystems 1550 eingerichtet, zusätzliche Analysesoftware auszuführen.

Der Analyse-PC ist eingerichtet zur Ansteuerung der übrigen Komponenten des Analysesystems 1550. Auf dem Analyse-PC wird beispielsweise die benötigte Software zur Vorfallsanalyse ausgeführt und das Ergebnis der Extraktion 350 (z.B. die Zustandsdaten 302) gespeichert.

Der USB-Analyzer (auch als USB-Analysevorrichtung bezeichnet) ist eingerichtet zur Analyse der USB-Kommunikation zwischen den Komponenten des Analysesystems 1550, beispielsweise dem System-PC und dem Emulationssystem 1450. Der USB-Analyzer kann beispielsweise eingerichtet sein, eine oder mehr als eine Nachricht der USB-Kommunikation aufzuzeichnen, zu manipulieren, und/oder einzuspielen.

Der CAN-Bus-Analyzer ist eingerichtet zur Analyse der CAN-Bus-Kommunikation (oder allgemeiner der Kommunikation über die Kommunikationsinfrastruktur 1406 des Emulationssystems 1450). Der Analyzer bietet die Möglichkeit eine oder mehr als eine Nachricht, die mittels der Kommunikationsinfrastruktur 1406 übertragen wird, aufzuzeichnen, zu manipulieren, und/oder von außen einzuspielen.

Der Funktionsgenerator ist eingerichtet zur synchronen Emulation von Sensorsignalen. Beispielsweise ist der Analyse-PC eingerichtet, mittels des Funktionsgenerators gezielt ein Signal synchron mit dem CPS-Programmablauf einzuspielen.

Das optionale Oszilloskop ist eingerichtet zur Analyse von Peripherie- und Bussignalen und der synchronen Ansteuerung des Funktionsgenerators.

Ein (optional steuerbares) Labornetzteil (nicht dargestellt) ist eingerichtet zur Stromversorgung des Emulationssystems 1450. Ist das Labornetzteil steuerbar, kann mittels Steuerns des Labornetzteils (z.B. mittels des Analyse-PCs) beispielsweise ein Stromausfall oder ein anderer versorgungsbezogener Angriff emuliert werden.

Die Debug-Probe implementiert die Debug-Protokolle der MCU des EGS 150 (beispielsweise ein sogenanntes Joint Test Action Group (JTAG) oder Single Wire Debug (SWD)) und verbindet die MCU des Emulationssystems 1450 mit dem Analyse-PC.

Eine exemplarische Implementierung weist auf, die Instanziierung des USB-Analyzers mittels "ellisys USB Explorer 200", die Instanziierung des Oszilloskops mittels "Lecroy

WaveRunner 640Zi", die Instanziierung des Funktionsgenerators mittels "Rigol DG4162", die Instanziierung des CAN-Bus-Analyzers mittels "Ixxat USB-to-CAN" und die Instanziierung der Debug-Probe mittels "STLink 2, Greenhills Probe".

Neben den Hardwarekomponenten weist das Analysesystem 1550 noch eine oder mehr als eine der folgenden Softwarekomponenten zur Ansteuerung der Hardware und zur Analyse des Schadcodes im Zusammenspiel mit der Hardware auf:
- Ein interaktiver Dissassembler ("Interactive Dissassembler" oder kurz IDA) ist eingerichtet, den Binärcode statisch zu analysieren. Dies beinhaltet die Umwandlung in Programmcode, die Darstellung des Ausführungsgraphen oder die Analyse von Referenzen zwischen Programmcode und Programmdaten. In dieser beispielhaften Implementierung kann "Hexrays IDA Pro" und/oder "Ghidra" verwendet werden;
- Ein sogenannter "binwalk" ist ein Werkzeug zur statischen Analyse von Binärdaten, zum Beispiel um eingebettete Zertifikate oder Programmcode zu extrahieren;
- Ein Analysewerkzeug (auch als Wariness-Analysewerkzeug bezeichnet) implementiert verschiedene Hilfsprogramme zur Analyse eines Malware-Abbildes;
- Ein Debugger ist eingerichtet, die Ausführung der Firmware in dem Emulationssystem 1450 (z.B. CPS Emulation) zu steuern. Der Debugger ist über die Debug-Probe mit der MCU des Emulationssystems 1450 gekoppelt. Dies ermöglicht beispielsweise eine schrittweise Ausführung des Programms, das Setzen von Breakpoints und Inspizieren und Modifizieren von Speicherinhalten der MCU. Je nach Anwendungsfall kann ein GNU-Debugger in Kombination mit "Open OCD" oder die "Green Hills TimeMachine" verwendet werden.

Für die Rekonstruktion kann die Debug-Schnittstelle des Emulationssystems 1450 verwendet werden. Diese erlaubt das Programmieren von FLASH-Speicher und das Schreiben und Lesen von RAM und Registern. Die Peripherieregister sind speicheradressierbar. Auf Prozessorregister kann beispielsweise nur indirekt über Spezialbefehle zugegriffen werden.

## Patentansprüche

1. Forensik-Modul (250) für ein eingebettetes System (150), das Forensik-Modul (250) aufweisend:
• einen abgesicherten Speicherbereich (202s), der erste Daten aufweist, die einen Schlüssel (305s) implementieren;
• eine Schnittstelle (208) zum Auslesen (301) von einen Systemzustand des eingebetteten Systems (150) repräsentierenden zweite Daten (302); und
• einen oder mehr als einen Prozessor (204),
welcher eingerichtet ist zum:
• Auslesen (301) der zweiten Daten (302) mittels der Schnittstelle (208), wobei die zweiten Daten (302) mehrere Datensätze aufweisen;
• Ermitteln (303) eines Kommitments (310) zu mehreren Öffnungswerten, von denen jeder Öffnungswert genau einem der mehreren Datensätze zugeordnet ist, basierend auf den zweiten Daten (302) und unter Verwendung eines kryptografischen Kommitment-Prozesses, welcher derart eingerichtet ist, dass sich jeder Datensatz einzeln anhand des Kommitments (310) und des jeweils zugeordneten Öffnungswerts verifizieren lässt;
• Verschlüsseln (305) der zweiten Daten (302) und der mehreren Öffnungswerte unter Verwendung des Schlüssels (305s).

2. Forensik-Modul (250) gemäß Anspruch 1, wobei der Kommitment-Prozess eine kryptographische, vorzugsweise kollisionsresistente, Hashfunktion implementiert, mittels welcher das Kommitment (310) ermittelt wird.

3. Forensik-Modul (250) gemäß Anspruch 1 oder 2, wobei der Kommitment-Prozess ein Vektor-Kommitment-Prozess ist.

4. Forensik-Modul (250) gemäß einem der Ansprüche 1 bis 3, wobei das Kommitment (310) an die mehreren Öffnungswerte und/oder die zweiten Daten (302) gebunden ist.

5. Forensik-Modul (250) gemäß einem der Ansprüche 1 bis 4, ferner aufweisend:
• eine zusätzliche Schnittstelle (208),
• wobei der eine oder mehr als eine Prozessor (204) ferner eingerichtet ist, zum Ausgeben der verschlüsselten zweiten Daten (302) und des Kommitments (310) mittels der zusätzlichen Schnittstelle (208).

6. Forensik-Modul (250) gemäß einem der Ansprüche 1 bis 5, wobei das Verschlüsseln unter Verwendung des Schlüssels (305s) mittels eines symmetrischen Verschlüsselungsprozess erfolgt.

7. Forensik-Modul (250) gemäß einem der Ansprüche 1 bis 6, wobei das Verschlüsseln unter Verwendung des Schlüssels (305s) mittels eines authentifizierten Verschlüsselungsprozess erfolgt.

8. Forensik-Modul (250) gemäß einem der Ansprüche 1 bis 7, wobei das Verschlüsseln unter Verwendung des Schlüssels (305s) aufweist, die mehreren Datensätze iterativ zu verschlüsseln.

9. Forensik-Modul (250) gemäß einem der Ansprüche 1 bis 8, wobei der Speicherbereich abgesichert ist mittels eines oder mehr als eines von Folgendem:
• einer Firewall;
• einer Speicherschutzeinheit
• einem Schreibschutz; und/oder
• einem Leseschutz.

10. Forensik-Modul (250) gemäß einem der Ansprüche 1 bis 9, wobei das Ermitteln (303) des Kommitments (310) aufweist, die mehrerer Öffnungswerte zu ermitteln, vorzugsweise mittels eines Zufallswertgenerators.

11. Forensik-Modul (250) gemäß einem der Ansprüche 1 bis 10, wobei die Schnittstelle (208) eingerichtet ist, ein Prozessorregister des eingebetteten Systems (150) auszulesen, wobei vorzugsweise das Auslesen (301) der zweiten Daten (302) mittels der Schnittstelle (208) aus dem Prozessorregister erfolgt.

12. Forensik-Modul (250) gemäß Anspruch 11, wobei die zweiten Daten (302) ein Abbild des Prozessorregisters des eingebetteten Systems (150) aufweisen.

13. Forensik-Modul (250) gemäß einem der Ansprüche 1 bis 12, wobei das Ermitteln (303) des Kommitments und das Verschlüsseln (305) der zweiten Daten gleichzeitig erfolgen.

14. Forensik-Modul (250) gemäß einem der Ansprüche 1 bis 13, wobei die Schnittstelle (208) ferner eingerichtet ist, das eingebettete System (150), vorzugsweise dessen Prozessor (204), anzuhalten und die zweiten Daten (302) von dem angehaltenen eingebetteten System (150) ausgelesen werden.

15. Eingebettetes System (150), aufweisend:
• das Forensik-Modul (250) gemäß einem der Ansprüche 1 bis 14; und
• einen oder mehr als einen zusätzlichen Speicherbereich (102s, 112s), wobei die Schnittstelle (208) eingerichtet ist, die zweiten Daten (302) aus dem einen oder mehr als einen zusätzlichen Speicherbereich (102s, 112s) auszulesen;
• wobei vorzugsweise der eine oder mehr als eine zusätzliche Speicherbereich (102s, 112s) ein Prozessorregister aufweist.

16. Eingebettetes System (150) gemäß Anspruch 15, ferner aufweisend:
• einen Aktor (112) und/oder einen Sensor (110); und
• vorzugsweise eine Firmware zum Ansteuern des Sensors und/oder des Aktors, wobei die Firmware auf dem einen oder mehr als einen zusätzlichen Speicherbereich (102s, 112s) abgespeichert ist.

17. Geldautomat, welcher das eingebettete System (150) gemäß Anspruch 15 oder 16 aufweist.

18. Geldautomat gemäß Anspruch 17, wobei das eingebettete System (150) eingerichtet ist, eine Funktion des Geldautomaten
• in Verbindung mit einem Einzahlen, Vorhalten und/oder Auszahlen eines Wertdokuments, und/oder
• in Verbindung mit einem Authentifizieren einer Person
bereitzustellen.

19. Verfahren für ein eingebettetes System (150), das Verfahren aufweisend:
• Auslesen (301) von Daten (302), welche einen Systemzustand des eingebetteten Systems (150) repräsentieren, mittels einer Schnittstelle (208), welche zum Auslesen der Daten eingerichtet ist, wobei die Daten (302) mehrere Datensätze aufweisen;
• Ermitteln (303) eines Kommitments (310) zu mehreren Öffnungswerten, von denen jeder Öffnungswert genau einem der mehreren Datensätze zugeordnet ist, basierend auf den Daten (302) und unter Verwendung eines kryptografischen Kommitment-Prozesses, welcher derart eingerichtet ist, dass sich jeder Datensatz einzeln anhand des Kommitments und des jeweils zugeordneten Öffnungswerts verifizieren lässt;
• Verschlüsseln (305) der Daten (302) und der mehreren Öffnungswerte unter Verwendung eines Schlüssels (305s), der mittels zusätzlicher Daten implementiert ist, die auf einem abgesicherten Speicherbereich (202s) gespeichert sind.

20. Nichtflüchtiges Speichermedium, das Codesegmente aufweist, die eingerichtet sind, wenn von einem Prozessor (104, 204) ausgeführt, den Prozessor (104, 204) dazu zu bringen, das Verfahren gemäß Anspruch 19 durchzuführen.

## Claims

1. Forensics module (250) for an embedded system (150), the forensics module (250) comprising:
• a protected storage area (202s) comprising first data which implement a key (305s);
• an interface (208) for reading out (301) second data (302) representing a system state of the embedded system (150); and
• one or more than one processor (204)
which is configured to:
• read out (301) the second data (302) by means of the interface (208), wherein the second data (302) comprise multiple data sets;
• determine (303) a commitment (310) to multiple opening values, each of which opening values is assigned exactly to one of the multiple data sets, based on the second data (302) and using a cryptographic commitment process configured in such a way that each data set can be verified individually using the commitment (310) and the respectively associated opening value;
• encrypt (305) the second data (302) and the multiple opening values using the key (305s).

2. Forensic module (250) according to Claim 1, wherein the commitment process implements a cryptographic, preferably collision-resistant, hash function, by means of which the commitment (310) is determined.

3. Forensic module (250) according to Claim 1 or 2, wherein the commitment process is a vector commitment process.

4. Forensic module (250) according to any one of Claims 1 to 3, wherein the commitment (310) is bound to the multiple opening values and/or the second data (302).

5. Forensic module (250) according to any one of Claims 1 to 4, further comprising:
• an additional interface (208),
• wherein the one or more than one processor (204) is further configured to output the encrypted second data (302) and the commitment (310) by means of the additional interface (208).

6. Forensic module (250) according to any one of Claims 1 to 5, wherein the encryption is performed using the key (305s) by means of a symmetric encryption process.

7. Forensic module (250) according to any one of Claims 1 to 6, wherein the encryption is performed using the key (305s) by means of an authenticated encryption process.

8. Forensic module (250) according to any one of Claims 1 to 7, wherein the encryption includes using the key (305s) to iteratively encrypt the multiple data sets.

9. Forensic module (250) according to any one of Claims 1 to 8, wherein the storage area is protected by means of one or more than one of the following:
• a firewall;
• a storage protection unit
• write protection; and/or
• read protection.

10. Forensic module (250) according to any one of Claims 1 to 9, wherein the determination (303) of the commitment (310) includes determining the multiple opening values, preferably by means of a random value generator.

11. Forensic module (250) according to any one of Claims 1 to 10, wherein the interface (208) is configured to read out a processor register of the embedded system (150), wherein the second data (302) are preferably read out (301) from the processor register by means of the interface (208).

12. Forensic module (250) according to Claim 11, wherein the second data (302) comprise an image of the processor register of the embedded system (150).

13. Forensic module (250) according to any one of Claims 1 to 12, wherein the commitment and the encryption (305) of the second data are determined (303) simultaneously.

14. Forensic module (250) according to any one of Claims 1 to 13, wherein the interface (208) is further configured to stop the embedded system (150), preferably the processor (204) thereof, and the second data (302) are read out from the stopped embedded system (150).

15. Embedded system (150), comprising:
• the forensic module (250) according to any one of Claims 1 to 14; and
• one or more than one additional storage area (102s, 112s), wherein the interface (208) is configured to read out the second data (302) from the one or more than one additional storage area (102s, 112s);
• wherein preferably the one or more than one additional storage area (102s, 112s) comprises a processor register.

16. Embedded system (150) according to Claim 15, further comprising:
• an actuator (112) and/or a sensor (110); and
• preferably firmware for controlling the sensor and/or the actuator, wherein the firmware is stored on the one or more than one additional storage area (102s, 112s).

17. Cash machine, which comprises the embedded system (150) according to Claim 15 or 16.

18. Cash machine according to Claim 17, wherein the embedded system (150) is configured to provide a function of the cash machine
• in connection with a deposit, holding and/or withdrawal of a document of value, and/or
• in conjunction with the authentication of a person.

19. Method for an embedded system (150), the method comprising:
• reading out (301) data (302) representing a system state of the embedded system (150) by means of an interface (208) which is configured to read out the data, wherein the data (302) comprise multiple data sets;
• determining (303) a commitment (310) to multiple opening values, each of which opening values is assigned exactly to one of the multiple data sets, based on the data (302) and using a cryptographic commitment process, which is configured in such a way that each data set can be verified individually using the commitment and the respectively associated opening value;
• encrypting (305) the data (302) and the multiple opening values using a key (305s) which is implemented by means of additional data stored in a secured storage area (202s).

20. Non-volatile storage medium comprising code segments which are configured, when executed by a processor (104, 204), to cause the processor (104, 204) to carry out the method according to Claim 19.

## Revendications

1. Module d'informatique légale (250) pour un système intégré (150), le module d'informatique légale (250) présentant :
• une zone de mémoire sécurisée (202s) qui présente de premières données qui mettent en œuvre une clé (305s) ;
• une interface (208) pour lire (301) de deuxièmes données (302) représentant un état de système du système intégré (150) ; et
• un ou plusieurs processeurs (204),
qui est conçu pour :
• lire (301) les deuxièmes données (302) au moyen de l'interface (208), les deuxièmes données (302) présentant plusieurs jeux de données ;
• déterminer (303) un engagement (310) concernant plusieurs valeurs d'ouverture dont chaque valeur d'ouverture est associée à exactement l'un des plusieurs jeux de données, sur la base des deuxièmes données (302) et en utilisant un processus d'engagement cryptographique qui est conçu de telle sorte que chaque jeu de données peut être vérifié individuellement à l'aide de l'engagement (310) et de la valeur d'ouverture respectivement associée ;
• crypter (305) les deuxièmes données (302) et les plusieurs valeurs d'ouverture en utilisant la clé (305s).

2. Module d'informatique légale (250) selon la revendication 1, dans lequel le processus d'engagement met en œuvre une fonction de hachage cryptographique, de préférence résistante aux collisions, qui permet de déterminer l'engagement (310).

3. Module d'informatique légale (250) selon la revendication 1 ou 2, dans lequel le processus d'engagement est un processus d'engagement vectoriel.

4. Module d'informatique légale (250) selon l'une quelconque des revendications 1 à 3, dans lequel l'engagement (310) est lié aux plusieurs valeurs d'ouverture et/ou aux deuxièmes données (302).

5. Module d'informatique légale (250) selon l'une quelconque des revendications 1 à 4, présentant en outre :
• une interface supplémentaire (208),
• dans lequel ledit un ou les plusieurs processeurs (204) sont en outre conçus pour sortir les deuxièmes données cryptées (302) et l'engagement (310) au moyen de l'interface supplémentaire (208).

6. Module d'informatique légale (250) selon l'une quelconque des revendications 1 à 5, dans lequel le cryptage est effectué en utilisant la clé (305s) au moyen d'un processus de cryptage symétrique.

7. Module d'informatique légale (250) selon l'une quelconque des revendications 1 à 6, dans lequel le cryptage est effectué en utilisant la clé (305s) au moyen d'un processus de cryptage authentifié.

8. Module d'informatique légale (250) selon l'une quelconque des revendications 1 à 7, dans lequel le cryptage en utilisant la clé (305s) présente le cryptage de plusieurs jeux de données par itération.

9. Module d'informatique légale (250) selon l'une quelconque des revendications 1 à 8, dans lequel la zone de mémoire est sécurisée au moyen d'un ou de plusieurs des éléments suivants :
• d'un pare-feu ;
• d'une unité de protection de mémoire ;
• d'une protection en écriture ; et/ou
• d'une protection en lecture.

10. Module d'informatique légale (250) selon l'une quelconque des revendications 1 à 9, dans lequel la détermination (303) de l'engagement (310) présente la détermination des plusieurs valeurs d'ouverture, de préférence au moyen d'un générateur de valeurs aléatoires.

11. Module d'informatique légale (250) selon l'une quelconque des revendications 1 à 10, dans lequel l'interface (208) est conçue pour lire un registre de processeur du système intégré (150), dans lequel de préférence la lecture (301) des deuxièmes données (302) est effectuée au moyen de l'interface (208) à partir du registre de processeur.

12. Module d'informatique légale (250) selon la revendication 11, dans lequel les deuxièmes données (302) présentent une image du registre de processeur du système intégré (150).

13. Module d'informatique légale (250) selon l'une quelconque des revendications 1 à 12, dans lequel la détermination (303) de l'engagement et le cryptage (305) des deuxièmes données sont effectués en même temps.

14. Module d'informatique légale (250) selon l'une quelconque des revendications 1 à 13, dans lequel l'interface (208) est en outre conçue pour arrêter le système intégré (150), de préférence son processeur (204), et les deuxièmes données (302) sont lues par le système intégré arrêté (150).

15. Système intégré (150), présentant :
• le module d'informatique légale (250) selon l'une quelconque des revendications 1 à 14 ; et
• une ou plusieurs zones de mémoire supplémentaires (102s, 112s), dans lequel l'interface (208) est conçue pour lire les deuxièmes données (302) à partir de ladite une ou des plusieurs zones de mémoire supplémentaires (102s, 112s) ;
• dans lequel de préférence ladite une ou les plusieurs zones de mémoire supplémentaires (102s, 112s) présentent un registre de processeur.

16. Système intégré (150) selon la revendication 15, présentant en outre :
• un actionneur (112) et/ou un capteur (110) ; et
• de préférence un firmware pour piloter le capteur et/ou l'actionneur, le firmware étant mémorisé dans ladite une ou les plusieurs zones de mémoire supplémentaires (102s, 112s).

17. Distributeur automatique présentant le système intégré (150) selon la revendication 15 ou 16.

18. Distributeur automatique selon la revendication 17, dans lequel le système intégré (150) est conçu pour remplir une fonction du distributeur automatique
• en relation avec un dépôt, une présentation et/ou un retrait d'un document de valeur, et/ou
• en relation avec une authentification d'une personne.

19. Procédé pour un système intégré (150), le procédé présentant les étapes consistant à :
• lire (301) des données (302) qui représentent un état de système du système intégré (150) au moyen d'une interface (208) qui est conçue pour lire les données, les données (302) présentant plusieurs jeux de données ;
• déterminer (303) un engagement (310) concernant plusieurs valeurs d'ouverture dont chaque valeur d'ouverture est associée à exactement l'un des plusieurs jeux de données, sur la base des données (302) et en utilisant un processus d'engagement cryptographique qui est conçu de telle sorte que chaque jeu de données peut être vérifié individuellement à l'aide de l'engagement et de la valeur d'ouverture respectivement associée ;
• crypter (305) les données (302) et les plusieurs valeurs d'ouverture en utilisant une clé (305s) qui est mise en œuvre au moyen de données supplémentaires qui sont mémorisées dans une zone de mémoire sécurisée (202s).

20. Support de stockage non volatile, présentant des segments de code qui sont conçus, lorsqu'ils sont exécutés par un processeur (104, 204), pour faire que le processeur (104, 204) exécute le procédé selon la revendication 19.
